(19) **Europäisches Patentamt / European Patent Office / Office européen des brevets**

(11) **EP 1 744 539 A1**

(12) **EUROPEAN PATENT APPLICATION**
published in accordance with Art. 158(3) EPC

(43) Date of publication:
**17.01.2007 Bulletin 2007/03**

(51) Int Cl.:
*H04N 1/405* (2006.01)    *B41J 2/52* (2006.01)
*G06T 5/00* (2006.01)     *G09G 3/20* (2006.01)
*G09G 3/36* (2006.01)

(21) Application number: **05736571.0**

(22) Date of filing: **22.04.2005**

(86) International application number:
**PCT/JP2005/008273**

(87) International publication number:
**WO 2005/104525 (03.11.2005 Gazette 2005/44)**

(84) Designated Contracting States:
**AT BE BG CH CY CZ DE DK EE ES FI FR GB GR HU IE IS IT LI LT LU MC NL PL PT RO SE SI SK TR**

(30) Priority: **22.04.2004 JP 2004126971**

(71) Applicant: **SEIKO EPSON CORPORATION Tokyo 160-0811 (JP)**

(72) Inventor: **KAKUTANI, T., SEIKO EPSON CORPORATION Suwa-shi, Nagano 3928502 (JP)**

(74) Representative: **Röss, Walter Josef Alfred Winter, Brandl, Fürniss, Hübner, Röss, Kaiser, Polte Partnerschaft Patent- und Rechtsanwaltskanzlei Alois-Steinecker-Strasse 22 85354 Freising (DE)**

(54) **IMAGE PROCESSOR FOR MULTIVALUE CONVERSION IN UNITS OF PIXELS**

(57)    The present invention provides an image processing apparatus for processing image data representing an image expressed by a prescribed number of tones to perform multi-value quantization for each pixel making up the image, using a smaller number of tones than the prescribed number of tones. The image processing apparatus includes: a correspondence relationship preparation unit that prepares correspondence relationships of a pixel group tone value representing a tone value of a pixel group composed of a plurality of pixels, with a multi-value quantization result value indicating a result of the multi-value quantization for the pixels making up the pixel group; a pixel group tone value determining unit that extracts a set of pixels corresponding to the pixel group from the image data representing the image, and determines the pixel group tone value for the each pixel group composed of the extracted set of pixels; a multi-value quantization unit that acquires the multi-value quantization result value for the each pixel group making up the image based on the pixel group tone value, by referring to the correspondence relationships; and a control data output unit that generates control data for forming the image from the multi-value quantization result values derived for the pixel groups, and outputs the control data.

Fig.1

## Description

### TECHNICAL FIELD

This invention relates in general to a technology for outputting an image on the basis of image data, and relates in particular to a technology for carrying out prescribed image processing of image data to produce dots at appropriate density.

### BACKGROUND ART

Image output devices that output images by forming dots on output media of various kinds, such as a printing medium or liquid crystal screen, are widely used as output devices of various kinds of imaging machines. Such image output devices handle images finely divided into tiny areas termed pixels, with dots being formed on the pixels. Where dots have been formed on pixels, viewed in terms of individual pixels, each pixel can of course only assume either a dot on state or a dot off state. However, viewed in terms of somewhat larger areas, it is possible for the density of the formed dots to be coarser or finer, and by means of varying this dot formation density, it is possible to output multi-value images.

For example, where dots of black ink are formed on printer paper, areas of fine dot density will appear darker, while conversely areas with dots formed more sparsely will appear brighter. Or, where luminescent spot dots are formed on a liquid crystal screen, areas of fine dot density will appear brighter, while areas with dots formed more sparsely will appear darker. Accordingly, through appropriate control of density of dot formation it is possible to output multiple tone images. Data for the purpose of controlling dot formation so as to give appropriate formation density in this way is created by subjecting an image to be output to prescribed image processing.

In recent years, there has arisen a need for such image output devices to be able to output images of higher picture quality and larger image size. With regard to meeting demand for higher picture quality, it is effective to divide images into finer pixels. By making pixels smaller, dots formed on pixels will not stand out as much, and picture quality can be improved thereby. Demand for larger image size is met by increasing the pixel count. Of course, while it would be possible to increase the size of the output image by making individual pixels larger, but since this could result in a decline in picture quality, the more effective way to meet demand for higher picture quality is to increase pixel count.

As the number of pixels making up an image increases, the time required for image processing becomes longer, making it difficult to output an image quickly. Accordingly, technologies enabling image processing to be executed faster have been proposed (see, for example, Japanese Unexamined Patent Application 2002-185789).

### DISCLOSURE OF THE INVENTION

However, even where image processing has been carried out rapidly, considerable time is required for transfer of the image data, or for transfer of the processed image data, and thus there are inherent limits in terms of the effect of making image output faster.

Another development seen in recent years is the desire to be able to supply output image data shot with a digital camera or the like directly to a printer or other image output device, to output images immediately. In such instances, image processing cannot be carried out using an image processing apparatus with high image processing capabilities, such as a personal computer. Consequently, it is necessary for image processing to be made simple, so as to enable execution thereof to be carried out by a digital camera or other image shooting device, or an image output device, or both.

With the foregoing in view, it is an object of the present invention to overcome the drawbacks of the prior art, to provide a simple image processing technology which would make it possible, while preserving sufficient output picture quality, to rapidly execute image processing and data transfer, as well as making it possible for image processing to be executed without the use of a personal computer or other image processing apparatus with high image processing capabilities.

In order to attain the above and the other objects of the present invention, a printing apparatus of the present invention adopted the following configurations. An image processing apparatus for processing image data representing an image expressed by a prescribed number of tones to perform multi-value quantization for each pixel making up the image using a smaller number of tones than the prescribed number of tones includes: a correspondence relationship preparation unit that prepares correspondence relationships of a pixel group tone value representing a tone value of a pixel group composed of a plurality of pixels, with a multi-value quantization result value indicating a result of the multi-value quantization for the pixels making up the pixel group; a pixel group tone value determining unit that extracts a set of pixels corresponding to the pixel group from the image data representing the image, and determines the pixel group tone value for the each pixel group composed of the extracted set of pixels; a multi-value quantization unit that acquires the multi-value quantization result value for the each pixel group making up the image based on the pixel group tone value, by referring to the correspondence relationships; and a control data output unit that generates control data for forming the image from the multi-value quantization result values derived for the pixel groups, and outputs the control data.

An image processing method of processing image data representing an image expressed by a prescribed number of tones to perform multi-value quantization for each pixel making up the image using a smaller number of tones than the prescribed number of tones includes: preparing correspondence relationships of a pixel group tone value representing a tone value of a pixel group composed of a plurality of pixels, with a multi-value quantization result value indicating a result of the multi-value quantization for the pixels making up the pixel group; extracting a set of pixels corresponding to the pixel group from the image data representing the image, and determines the pixel group tone value for the each pixel group composed of the extracted set of pixels; acquiring the multi-value quantization result value for the each pixel group making up the image based on the pixel group tone value, by referring to the correspondence relationships; and generating control data for forming the image from the multi-value quantization result values derived for the pixel groups, and outputs the control data.

In the image processing apparatus and image processing method of the present invention, for each pixel group composed of a prescribed number of pixels making up an image, a pixel group tone value which is a tone value representative of the pixel group is determined, and multi-value quantization is carried out with the pixel group tone values obtained thereby. Here, it is acceptable for pixel groups to always group together the same number of pixels, but pixels can also be grouped in varying numbers according to a prescribed pattern or rule, for example. During determination of pixel group tone values, determinations can be made on the basis of the image data of the pixels of the pixel groups, for example. The average value, a representative value, or the total value of tone values of a plurality of could be used, for example. From the multi-value quantization result values derived for each pixel group, control data for forming an image is generated, and is output.

As will be discussed in greater detail later, as compared to data representing the dot on/off state for all pixels of an image, multi-value quantization result values can provide multi-value quantization of an entire image with a much smaller amount of data. Consequently, where control data created from such multi-value quantization result values is output, it is possible for the data to be output quickly. By means of employing a method that will be discussed later, in an image output device receiving such control data, after the dot on/off state has been decided for each pixel in the pixel groups, the image can be output on basis of the decision result. Consequently, where control data can be supplied quickly to the image output device, it is possible for the image to be output commensurately faster.

When carrying out multi-value quantization of pixel group tone values, multi-value quantization is carried out while referring to correspondence relationships between pixel group tone values and multi-value quantization result values, so that multi-value quantization result values can be derived rapidly. It is therefore possible to create control data rapidly, and to output the control data even more rapidly.

Also, during multi-value quantization, multi-value quantization is carried out while making reference to correspondence relationships established on a pixel group-by-group basis. Where correspondence relationships can be established on a pixel group-by-group basis, it becomes possible to associate the same multi-value with different pixel group tone values, whereby the number of multi-value quantization result values can be reduced as compared to the case where multi-value quantization of pixel group tone values is simply carried out without distinguishing among pixel groups. As a result, the amount of control data can be reduced, as compared to the case where multi-value quantization of pixel group tone values is simply carried out, making it possible to output the data even more rapidly.

Additionally, as will be described in detail later, since pixel group tone values for pixel groups can be derived very easily, the principal process for creating multi-value quantization result values is a simple process of making reference to correspondence relationships. Thus, there is no need for a computer or other device with high level processing capabilities to perform numerous comparisons or complex branching processes for the purpose of multi-value quantization. It is accordingly possible for processing to be carried out at sufficient practical speed, even in a device that cannot perform conditional judgments and the like at high speed. It is consequently possible, for example, for image data to be supplied directly to an image output device without the agency of a computer or the like, and for the image data to undergo image processing internally within the image output device, to properly output the image.

In this kind of image processing apparatus, multi-value quantization of pixel group tone values may be carried out as follows. First, classification numbers appended on a pixel group-by-group basis are acquired. Then, multi-value quantization of pixel group tone values may be carried out by means of referring to correspondence relationships established on a per-classification number basis. Here, since correspondence relationships are established on a per-classification number basis, each classification number can be assigned a completely unique correspondence relationship.

By so doing, appropriate multi-value quantization of pixel group tone values of pixel groups may be carried out by assigning appropriate classification numbers to pixel groups. Since pixel groups can be distinguished using classification numbers, it is also possible to simplify the process for multi-value quantization of pixel group tone values.

In this kind of image processing apparatus, classification numbers may be assigned to pixel groups by means of classifying respective pixel groups into several types according to their location within an image. By so doing, classification numbers can be assigned appropriately as needed, without having to assign classification numbers to pixel groups in advance. Also, it is possible to assign classification numbers appropriately by means of assigning them according to location within an image.

The correspondence relationships to which reference is made during multi-value quantization can be correspondence relationships such as the following. Specifically, correspondence relationships may establish multi-value quantization result values for individual pixel groups in predetermined number, depending on classification number.

Since correspondence relationships to which reference is made during multi-value quantization are established on a pixel group-by-group basis, the number of multi-value quantization result values can be established freely. Where the number of multi-value quantization result values can be varied on a pixel group-by-group basis, there is no risk that multi-value quantization result values will repeat in a given pattern, as with typical multi-value quantization processes. Consequently, it is possible to always obtain consistent picture quality, where images are output based on control data created in this way.

Alternatively, the correspondence relationships to which reference is made during multi-value quantization can be correspondence relationships such as the following. Specifically, correspondence relationships may establish multi-value quantization result values for pixel group tone values, on a per-classification number basis.

Alternatively, data indicating dot formation order in pixel groups for each individual classification number can be stored in memory; dot counts to be formed in pixel groups can be acquired as the multi-value quantization result values; and from the dot counts acquired by the multi-value quantization means and the data indicating dot formation order, control data can be output in the form of data by which pixels on which to form dots in a pixel group may be specified. By means of this arrangement, it is possible for the device that performs dot formation to ascertain, using simple data, locations at which to form dots in pixel groups.

Here, as the correspondence relationships, there may be stored in memory correspondence relationships of data for tone values accompanied by change in multi-value quantization results, with dot count to be formed in the pixel group at each tone value. Since multi-value quantization result values assumes the same value over prescribed tone ranges, where memory data for tone values accompanied by change in multi-value quantization results has been stored in memory, it will possible to carry out processing. By so doing, the amount of data needing to be stored by way of correspondence relationships can be reduced.

Here, data indicating dot formation order may be values assigned to each pixel in a pixel group per se, or order values describing dot formation order. For the correspondence relationship per se, the process is possible even where, for example, a dither matrix threshold value is provided as-is; in the present invention, however, since tone values are not compared with a threshold value to decide whether to form a dot on each pixel, there is no need have a threshold value or the like. Accordingly, it is sufficient to store in memory simple order values, so that the amount of data being stored in memory can be reduced.

Multi-value quantization may entail so-called binary representation, or representation with three or more values would also be acceptable. For example, for a case in which ultimately L types (L being a natural number ≥1) of dots will be formed, dot formation counts for each type of dot can be acquired by way of the multi-value quantization result values mentioned previously, and as the control data, there can be output data for forming dots according to the aforementioned order, starting from dots of the type that, of the L types of dots, have the highest density per unit of planar area. By so doing, formation of multiple types of dots can be specified in a simple manner.

As the procedure for setting up the correspondence relationships, a procedure such as the following may be contemplated. First, assuming that the pixel groups are pixel groups composed of width P × height Q (P, Q are natural numbers ≥2) pixels contained in a quadrangular area, a large area dither matrix stored in memory and containing tone threshold values serving as decision criteria for dot formation in a width M × height N (M, N are natural numbers ≥2) matrix is divided into a number of quadrangular areas corresponding to pixel groups, and a single aforementioned classification number S is assigned to each extracted set of P × Q threshold values contained in each divided area. Then, tone values converted to a recording rates of the L types of dots which will ultimately be formed are applied to each area assigned a classification number S, information indicating which types of dots will be formed on pixels at which locations at each tone value is created, and correspondence relationships of these dot locations with tone values are stored in memory, on a per-classification number basis. Once this process has been completed, there is no longer any need to store the threshold values in the original dither matrix or in the quadrangular areas corresponding to pixel groups.

By employing this procedure for setting up correspondence relationships, in no instance will the same classification number be assigned to multiple neighboring pixel groups, so as long as multi-value quantization result values for pixel group tone values are determined on a per-classification number basis, in no instance will multi-value quantization result values be continuous, even where a given pixel group tone value continues across multiple pixel groups. Thus, when an image is output on the basis of such control data, it is possible to avoid dots being formed in a given pattern.

In this type of image processing apparatus, multi-value quantization of pixel group tone values may be carried out with reference to correspondence relationships such as the following. Specifically, reference is made to correspondence relationships establishing pixel group tone values and multi-value quantization result values for each of at least 100 or more classification numbers.

For example, if there are only a few classification numbers, the number of combinations for arraying classification numbers will not be sufficiently large. Thus, event where multi-value quantization is carried out on the basis of correspondence relationships established on a per-classification number basis, in some instances, there is a possibility that given regularity will appear in the dot formation pattern. In order to avoid this risk, it is preferable for there to be a large number of classification numbers; however, experience has shown that where the number of classification numbers is at least 100 or more, the appearance of given regularity in the dot formation pattern can be suppressed to the point that it is not a problem in practical terms.

Alternatively, in type of image processing apparatus, the number of classification numbers or the pixel count per single pixel group can be established such that the product of the number of classification numbers established in the correspondence relationships and the pixel count per single pixel group is at least 1000 or above.

Where a large number of pixels are contained in a pixel group, the dot generation pattern, even within a single pixel group, can assume a large number of patterns. Consequently, even if the number of classification numbers is not sufficiently large, this is outweighed when large numbers of pixels are contained in pixel groups, so that the appearance of given regularity in the dot generation pattern can be suppressed. Experience has shown that where the number of classification numbers and the pixel count per single pixel group are selected so that the product thereof is 1000 or greater, the appearance of given regularity in the dot formation pattern can be suppressed, to the point that it is possible to avoid any problem in practical terms.

The present invention can also be reduced to practice using a computer, by loading onto the computer a program for carrying out the image processing method described above. Accordingly, the embodiments of the invention include program products such as the following, or a recording medium having program code recorded thereon.

By loading onto a computer such a program product or program recorded on a recording medium, and using the computer to carry out the various functions discussed above, it is possible to rapidly output images of high picture quality.

This invention includes a following concept of image processing apparatus. An image processing apparatus for performing a prescribed image processing of image data indicative of an image in order to generate the control data for controlling the dot formation. The control data is provided to an image output device for outputting the image by forming dots. The image output devices includes: a pixel group tone value determining unit that determines the pixel group tone value for the each pixel group composed of a prescribed number of pixels; a multi-value quantization unit that acquires the multi-value quantization result value for the each pixel group making up the image based on the pixel group tone value, by referring to the correspondence relationships of the pixel group tone value and the multi-value quantization result value; and a control data output unit that generates control data for forming the image from the multi-value quantization result values derived for the pixel groups, and outputs the control data.

This invention also includes a following concept of image processing method. An image processing method of performing a prescribed image processing of image data indicative of an image in order to generate the control data for controlling the dot formation. The control data is provided to an image output device for outputting the image by forming dots. The image method includes: a first step of determining the pixel group tone value for the each pixel group composed of a prescribed number of pixels; a second step of acquiring the multi-value quantization result value for the each pixel group making up the image based on the pixel group tone value, by referring to the correspondence relationships of the pixel group tone value and the multi-value quantization result value; and a third step of generating control data for forming the image from the multi-value quantization result values derived for the pixel groups, and outputs the control data.

## BRIEF DESCRIPTION OF THE DRAWINGS

FIG. 1 is an illustration providing an overview of the invention, taking the example of a printing system;
FIG. 2 is an illustration showing the arrangement of a computer as the image processing apparatus in the embodiments;
FIG. 3 is an illustration showing a simplified arrangement of the color printer of the embodiments;
FIG. 4 is an illustration showing an arrangement of ink jet nozzles on the ink ejection heads;
FIG. 5 (a) and FIG. 5 (b) are illustrations showing the basic principle of forming dots of different size through control of ink drop ejection;
FIG. 6 is a flowchart depicting the overall flow of an image printing process in Embodiment 1;
FIG. 7 is a flowchart depicting the flow of a multi-value quantization result generation process carried out in the image printing process in Embodiment 1;
FIG. 8 (a) and FIG. 8 (b) are illustrations showing a method of determining classification numbers of pixel groups;
FIG. 9 is an illustration depicting conceptually a multi-value quantization table referred to in the multi-value quantization result generation process of Embodiment 1;
FIG. 10 is an illustration depicting an example of stepwise increase in multi-value quantization result values in correspondence relationship with increasing pixel group tone values;

FIG. 11 is a flowchart depicting the flow of the dot on/off state determination process of Embodiment 1;

FIG. 12 is an illustration depicting conceptually a conversion table referred during the dot on/off state determination process of Embodiment 1;

FIG. 13 is an illustration depicting correspondence relationships between coded count data and the count of each dot type represented by code data;

FIG. 14 (a) to FIG. 14 (c) are illustrations showing order value matrices referred to during the dot on/off state determination process of Embodiment 1;

FIG. 15 is an illustration depicting conceptually determination of pixel locations for forming dots of each type within a pixel group on the basis of dot count data, while referring to an order value matrix;

FIG. 16 an illustration depicting conceptually a portion of a dither matrix;

FIG. 17 is an illustration depicting conceptually the dot on/off state decision for pixels, made while referring to the dither matrix;

FIG. 18 (a) to FIG. 18 (c) are illustrations depicting the conceptual approach of determining classification number on a pixel group-by-group basis;

FIG. 19 (a) to FIG. 19 (d) are illustrations depicting a method for calculating classification numbers of pixel groups;

FIG. 20 is an illustration depicting a method for calculating classification numbers from binary representation of the coordinates of a pixel group of interest;

FIG. 21 is a flowchart depicting the flow of a halftone process in which a dither process is deployed making possible determination of large/medium/small dot on/off states on a pixel-by-pixel basis;

FIG. 22 is an illustration depicting conceptually a dot density conversion table used for lookup when converting image data tone values to density data for large/medium/small dots;

FIG. 23 is an illustration depicting conceptually the large/medium/small dot on/off state decisions for pixels within a pixel group;

FIG. 24 is a flowchart depicting the flow of a process for setting up the multi-value quantization table;

FIG. 25 is a flowchart depicting the flow of a process for setting up the conversion table;

FIG. 26 (a) to FIG. 26 (c) are illustrations depicting a method for setting up the order value matrix;

FIG. 27 is an illustration depicting conceptually the general flow of a process for determining large/medium/small dot on/off states on a pixel-by-pixel basis from multi-value quantization results values in the dot on/off state determination process of Embodiment 1;

FIG. 28 (a) to FIG. 28 (c) are illustrations depicting a method for determining classification number from pixel group location in an image;

FIG. 29 is an illustration depicting a method for calculating location in the dither matrix from the coordinate values (i, j) of a pixel group, in order to determine the classification number;

FIG. 30 is an illustration depicting conceptually a threshold value table referred to in the multi-value quantization result value generation process of a variation example;

FIG. 31 is a flowchart depicting the flow of the dot on/off state determination process of a variation example;

FIG. 32 is an illustration depicting a correspondence relationship table in which intermediate data is associated with code data representing dot counts;

FIG. 33 is an illustration depicting determination of dot on/off state by means of reading out at data at a location corresponding to an order value in the intermediate data;

FIG. 34 is an illustration depicting conceptually a conversion table for lookup in the dot on/off state determination process of Embodiment 2;

FIG. 35 (a) and FIG. 35 (b) are illustrations depicting data structure of dot data established in the conversion table of Embodiment 2; and

FIG. 36 is an illustration depicting the flow of the dot on/off state determination process of Embodiment 2.

BEST MODE FOR CARRYING OUT THE INVENTION

In order to describe the action and working effects of the present invention more clearly, the embodiments of the invention shall be described hereinbelow in the following order.

A. Overview of the Embodiments:
B. Device Arrangement:
C. Overview of Image Printing Process of Embodiment 1:

C-1. Overview of Multi-value quantization Result Generation Process:
C-2. Overview of Dot On/Off State Determination Process:
C-3. Overview of Dither Method:
C-4. Conceptual Approach of Determining Classification Number:
C-5. Multi-value Quantization Table Setup Method:
C-6. Conversion Table Setup Method:
C-7. Order Value Matrix Setup Method:
C-8: Basic Principle Enabling Appropriate Determination of Dot On/Off State from Multi-value Quantization Result Values:
C-9. Method of Determining Classification Number from Pixel Group Location:
C-10. Variation Examples:

D. Embodiment 2:

D-1. Basic Principle of Dot On/Off State Determination Process of Embodiment 2:
D-2. Dot On/Off State Determination Process of Embodiment 2:

A. Overview of the Embodiments:

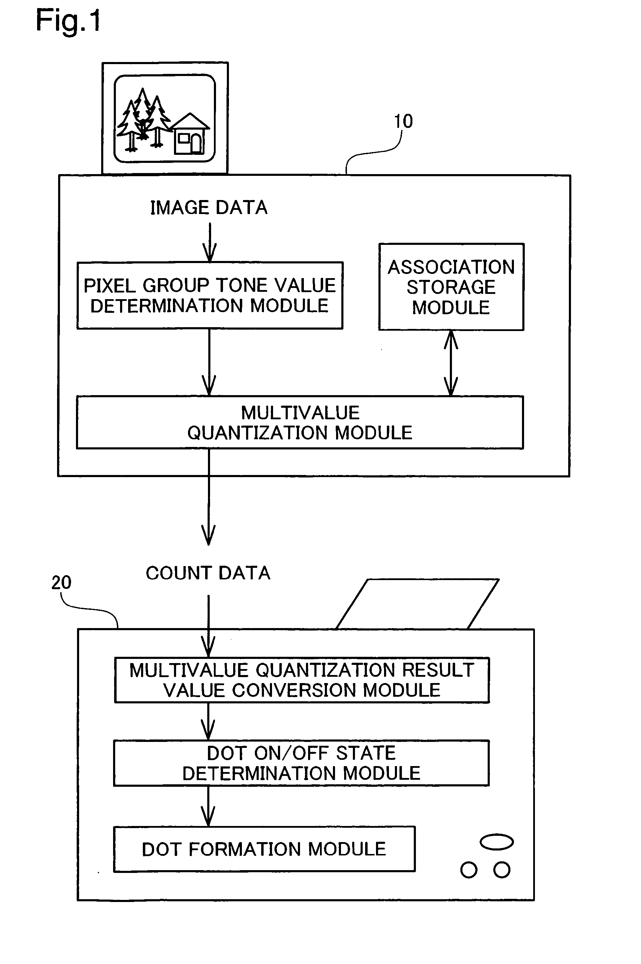

Before proceeding to a detailed description of the embodiments, an overview of the embodiments shall be described making reference to FIG. 1. FIG. 1 is an illustration providing an overview of the invention, taking the example of a printing system. This printing system comprises a computer 10 as the image processing apparatus, and a color printer 20 as the image output device; by executing a prescribed program which has been loaded into the computer 10, the computer 10 and the printer 20 function as a whole as an integrated image output system. The printer 20 prints an image by means of forming dots on a printing medium. The computer 10, by means of carrying out prescribed image processing on image data of the image to be printed, generates data for controlling dot formation on each pixel by the printer 20, and supplies this data to the printer 20.

In a typical printing system, images are printed in the following manner. First, by carrying out prescribed image processing with the computer, the image data is converted to data representing dot on/off state on a pixel-by-pixel basis. Next, the resultant data is supplied to the printer, and the image is printed out by means of forming dots according to the data supplied to the printer. If the image being printed out contains a high pixel count, the time required for image processing will increase in association therewith, making it difficult for the image to be printed quickly. Also, with higher pixel counts, the amount of data needed to represent dot on/off state on a pixel-by-pixel basis increases as well, so it takes a long time for this data to be output from the computer to the printer, with a corresponding increase in the length of time needed for printing.

In consideration of this point, in the printing system shown in FIG. 1, images are printed in the following manner. First, in the computer 10, the pixels making up the image are grouped in prescribed number to create pixel groups, and for each pixel group, a pixel group tone value which is a tone value representative of the pixel group is determined. Next, the pixel group tone values are subjected to multi-value quantization to produce multi-value quantization result values. During multi-value quantization, the process is carried out by acquiring classification numbers assigned on a pixel group-by-group basis, and referring to correspondence relationships that associate pixel group tone values with multi-value quantization result values on a per-classification number basis.

In the printer 20, once multi-value quantization result values for each pixel group have been received, these are converted to count data, i.e. data relating to numbers of dots to be formed in the pixel groups. This conversion is carried out in a multi-value quantization result conversion module. Next, a dot on/off state determination module determines dot on/off state for each pixel, on the basis of the count data and the pixel order in which dots are to be formed on pixels within pixel groups. Here, an appropriate pixel order may be pre-stored in memory in the dot on/off state determination module. Where pixel order is stored in memory, appropriate pixel order can be determined quickly. A dot formation module then prints the image by means of forming dots at pixel locations determined in this way.

Here, the amount of data represented by the multi-value quantization result values for each pixel group is appreciably smaller than would be data representing dot on/off state for each individual pixel. Consequently, by sending pixel-by-pixel group multi-value quantization result values, rather than data representing dot on/off state for individual pixels, from the computer 10 to the printer 20, it is possible to transfer the data very rapidly.

In the computer 10, multi-value quantization result values are generated in the following manner. First, pixel group tone values are determined in a pixel group tone value determination module. During determination of pixel group tone values, determination may be made on the basis of image data for each pixel within pixel groups, for example. Meanwhile, in a correspondence relationshipstorage module, correspondence relationships which associate pixel group tone values with multi-value quantization result values are stored for each pixel group classification number. Here, pixel group classification numbers can be established by means of classifying pixel groups into several types depending on location within the image; or where images will always be divided in the same way, appropriate classification numbers may be pre-assigned to pixel groups. As a more simple approach, classification numbers can be assigned randomly using random numbers. When a multi-value quantization module receives the pixel group tone values of the pixel groups, it converts pixel group tone values to multi-value quantization result values, by means of referring to the correspondence relationships according to pixel group classification numbers taken from the correspondence relationshipstorage module.

Since multi-value quantization result values are generated while referring to correspondence relationships in this manner, multi-value quantization result values can be generated extremely quickly. Thus, the multi-value quantization result values so generated can be provided quickly to the printer 20, and in combination therewith it is possible for the image to be printed quickly, even if the image has a high pixel count. Also, where multi-value quantization result values are generated with reference to correspondence relationships, they can be generated by an extremely simple process. Thus, in order to generate multi-value quantization result values, it is possible to generate count data internally in the printer 20, a digital camera, or the like, without having to use a device with high processing capabilities such as the computer 10. The embodiments of the invention shall be described in more detail hereinbelow, taking the example of the printing system discussed above.

B. Device Arrangement:

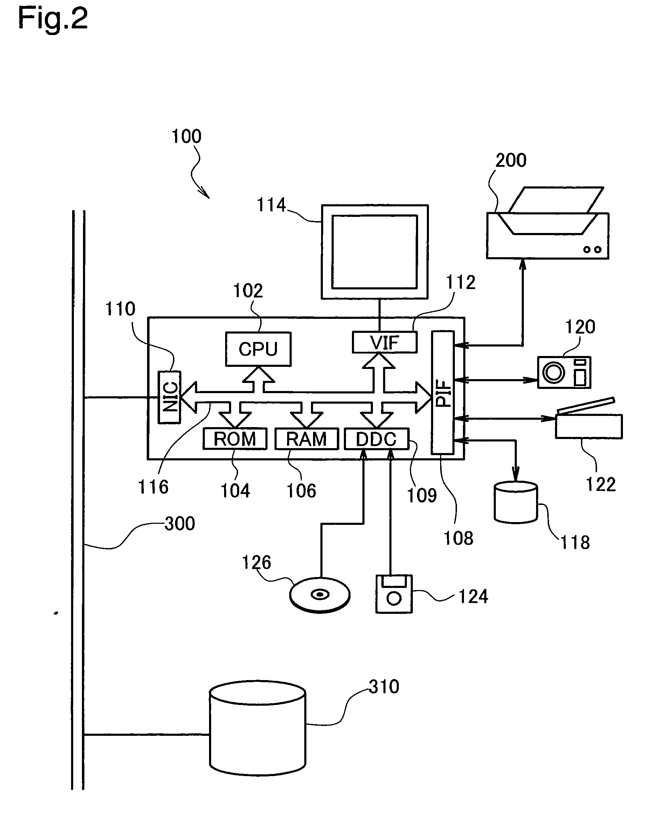

FIG. 2 is an illustration showing the arrangement of a computer as the image processing apparatus in the embodiments. The computer 100 is a computer of commonly known type based on a CPU 102, and comprising a ROM 104, RAM 106 and so on interconnected via a bus 116.

To the computer 100 are connected a disk controller DDC 109 for reading data from a flexible disk 124, a compact disk 126 or the like; a peripheral interface PIF 108 for exchange of information with peripheral devices; and a video interface VIF 112 for driving a CRT 114. To the PIF 108 in turn are connected a color printer 200 (described later), a hard disk 118, and so on. Where a digital camera 120, a color scanner 122 or the like is connected to the PIF 108, it would be possible to print an image acquired from the digital camera 120 or color scanner 122. Also, by installing a network interface card NIC 110, the computer 100 could be connected to a communications circuit 300, enabling acquisition of data stored on a storage device 310 connected to the communications circuit.

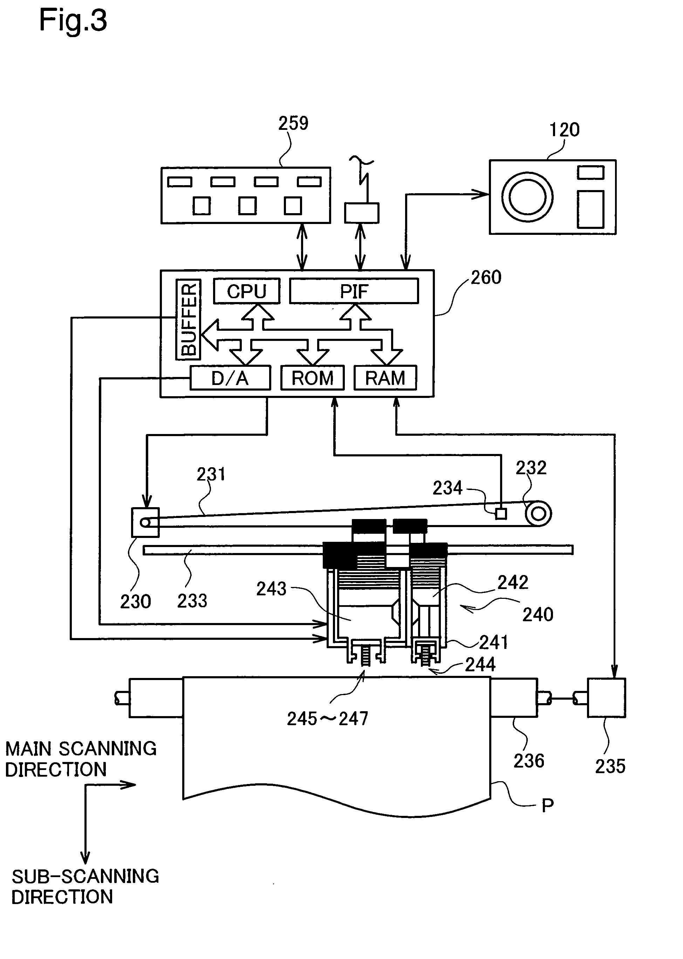

FIG. 3 is an illustration showing a simplified arrangement of the color printer of the embodiments. The color printer 200 is an ink-jet printer capable of forming dots with four colors of ink, namely, cyan, magenta, yellow, and black. Of course, it would also be possible to use an ink-jet printer capable of forming dots with a total of six colors of ink including, in addition to these four colors, dye or pigment low density cyan (light cyan) ink, and dye or pigment low density magenta (light magenta) ink. Hereinbelow, in certain instances cyan ink, magenta ink, yellow ink, black ink, light cyan ink, and light magenta ink shall be denoted as C ink, M ink, Y ink, K ink, LC ink, and LM ink, respectively.

As shown in the drawing, the color printer 200 is composed of a mechanism for driving a print head 241 that is installed on a carriage 240, to perform ink ejection and dot formation; a mechanism for reciprocating this carriage 240 in the axial direction of a platen 236 by means of a carriage motor 230; a mechanism for feeding printing paper P by means of a paper feed motor 235; and a control circuit 260 for controlling dot formation, the movement of the carriage 240, and feed of the printing paper.

On the carriage 240 are installed an ink cartridge 242 containing K ink, and an ink cartridge 243 containing C ink, M ink, and Y ink. With the ink cartridges 242, 243 installed on the carriage 240, each ink inside the cartridges is supplied through an inlet line (not shown) to the ink ejection head 244 to 247 of each color, these being disposed on the lower face of the print head 241.

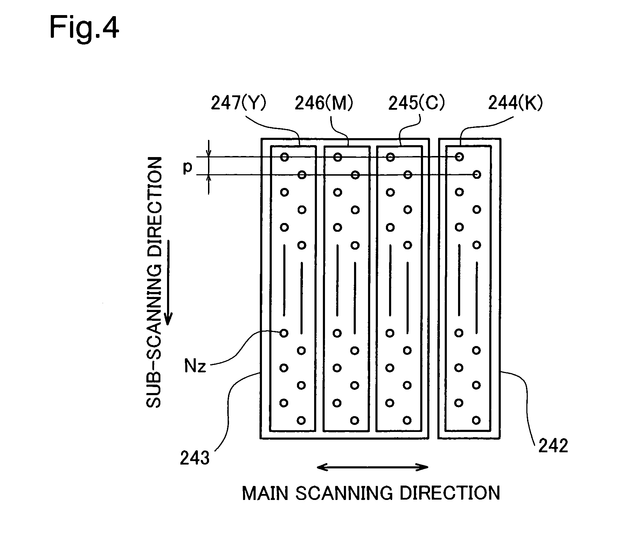

FIG. 4 is an illustration showing an arrangement of ink jet nozzles on the ink ejection heads 244 to 247. As illustrated, four sets of nozzle rows for ejecting ink of the colors C, M, Y, K are formed on the lower face of the ink eject heads, with each nozzle row set containing eight nozzles Nz, arranged at a given nozzle pitch k.

The control circuit 260 is composed of a CPU, ROM, RAM, PIF (peripheral interface) and so, interconnected by bus. The control circuit 260, by means of controlling the operation of the carriage motor 230 and the paper feed motor 235, controls main scanning and sub-scanning operation of the carriage 240, as well as ejecting ink drops at appropriate timing from each nozzle on the basis of the print data supplied by the computer 100. In this way, the color printer 200 can print a color image by forming dots of each ink color at appropriate locations on the printing medium under control by the control circuit 260.

In the color printer 200 of the present embodiment, it is possible to control ink dot size by means of controlling the size of the ejected ink drops. The method for forming ink dots of different size with the color printer 200 will be described hereinbelow, but in preparation therefor, the internal structure of the nozzles for ejecting each color of ink shall be described first.

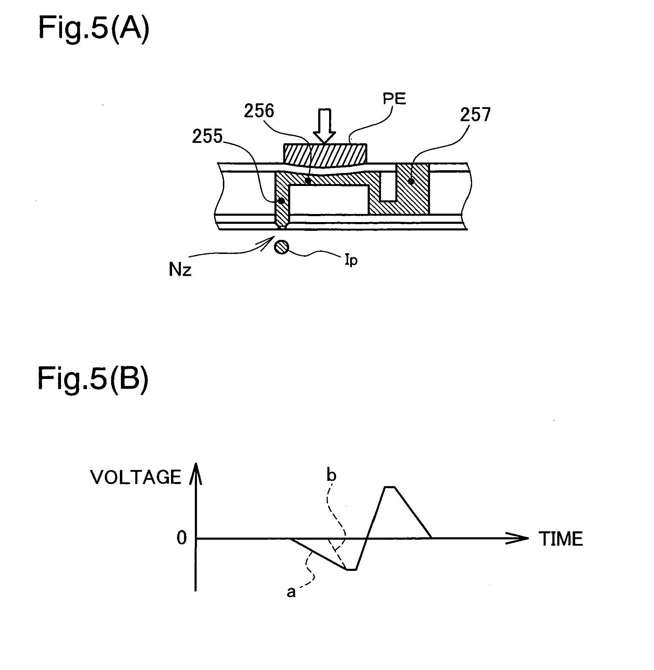

FIG. 5 (a) is an illustration depicting the internal structure of a nozzle for ejecting ink. The ink ejection heads 244 to 247 for the various colors are each furnished with a plurality of such nozzles. As illustrated, each nozzle is furnished with an ink passage 255, an ink chamber 256, and a piezo element PE over the ink chamber. When the ink cartridges 242, 243 are installed on the carriage 240, the ink inside the cartridge is supplied to the ink chamber 256 via an ink gallery 257. The piezo element PE is an element of commonly known type, whose in crystal structure deforms when voltage is applied, converting electricity to mechanical energy extremely rapidly thereby. In the present embodiment, by applying voltage of prescribed waveform across electrodes disposed at both ends of the piezo element PE, the side wall of the ink chamber 256 is caused to deform. As a result, the ink chamber 256 contracts in volume, and an ink drop Ip equivalent to the decline in volume is ejected from the nozzle Nz. This ink drop Ip, by penetrating into the printing paper P held on the platen 236, forms an ink dot on the printing paper.

FIG. 5 (b) is an illustration showing the basic principle of varying the size of the ink drop by controlling the voltage waveform applied to the piezo element PE. In order to eject an ink drop Ip from the nozzle, negative voltage is applied to the piezo element PE to initially draw ink into the ink chamber 256 from the ink gallery 257, and then positive voltage is applied to the piezo element PE, causing the ink chamber to contract in volume so that an ink drop Ip is ejected. Here, if ink is drawn in at proper rate, ink will be drawn in by an amount equivalent to the change in volume of the ink chamber, but if drawn at too fast a rate, passage resistance between the ink gallery 257 and the ink chamber 256 will result in the ink inflowing too late from the ink gallery 257. As a result, ink in the ink passage 255 will backflow into the ink chamber, and the ink boundary in proximity to the nozzle will retract appreciably. The voltage waveform a indicated by the solid line in FIG. 5 (b) depicts a waveform for drawing in ink at proper rate, while the waveform b indicated by the broken line indicates an example of a waveform at which ink will be drawn in at a rate greater than the proper rate.

With the ink chamber 256 interior supplied with enough ink, application of positive voltage to the piezo element PE will eject from the nozzle Nz an ink drop Ip of volume equivalent to the reduction in volume of the ink chamber 256. If on the other hand, positive voltage is applied under conditions of inadequate ink supply and appreciable retraction of the ink boundary, the ejected ink drop will be a small ink drop. In this way, in the printer 200 of the present embodiment, the size of the ejected ink drop can be controlled by varying the rate at which ink is drawn in by means of controlling the negative voltage waveform applied prior to the ink drop being ejected, making it possible to form three types of ink dots, namely, a large dot, a medium dot, and a small dot.

Of course, dot types are not limited to three, and it would be possible to form more types of dots as well. Further, the size of ink dots formed on the printing paper could also be controlled by employing a method of ejecting multiple very fine ink drops all at one time, while controlling the number of ink drops ejected. As long as ink dot size can be controlled in this way, it is possible to print images of higher picture quality, by selectively using ink dots of different size depending on the area of the image being printed.

Any of various methods can be employed as the method for ejecting ink drops from the ink ejection heads of each color. Specifically, a format in which piezo elements are used for ink ejection, or a method in which bubbles are generated in the ink passages by means of heaters disposed in the ink passages in order to eject ink could be used. It would also be possible to employ a printer of a format wherein instead of ejecting drops of ink, ink dots are formed on the printing paper utilizing a phenomenon such as thermal transfer; or a format in which electrostatic charge is utilized to deposit toner of each color onto a printing medium.

In the color printer 200 having a hardware arrangement such as that described above, by means of driving the carriage motor 230, the ink ejection heads 244 -247 of each color are moved in the main scanning direction with respect to printing paper P, while by means of driving the paper feed motor 235 the printing paper P is moved in the sub-scanning direction. The control circuit 260, in sync with the movement of the carriage 240 in the main scanning direction and the sub-scanning direction, drives the nozzles at appropriate timing to eject ink drops whereby the color printer 200 prints a color image on the printing paper.

Since the color printer 200 is also furnished with CPU, RAM, ROM and the like installed in the control circuit, it would be possible for the processes carried out by the computer 100 to be performed in the color printer 200 instead. In this case, image data for an image shot with a digital camera or the like could be supplied directly to the color printer 200, and the necessary image processing carried out in the control circuit 260, making it possible for the image to be printed out directly from the color printer 200.

C. Overview of Image Printing Process of Embodiment 1:

Following is a description of image processing (image printing process) performed internally in the computer 100 and the color printer 200 described above, for the purpose of printing an image. Here, for convenience in understanding, an overview of the image printing process shall be described first, followed by a description of the reasons why images can be printed quickly with no drop in picture quality, by means of carrying out this type of image printing process.

According to the description hereinbelow, the first half of the image printing process is performed by the computer 100, while the latter half is performed by the printer 200; however, it would be possible for the process performed by the computer 100 to instead be performed within the printer 200 or be performed within a digital camera 120 or other device that generates image data. Specifically, as will be discussed in detail later, according to the image printing process of Embodiment 1, the first half of the process can be made very simple, and can be carried out rapidly even using a CPU lacking high processing capabilities. Thus, a sufficient practical printing system can be set up even where the first half of the image printing process is incorporated into the color printer 200 or a digital camera.

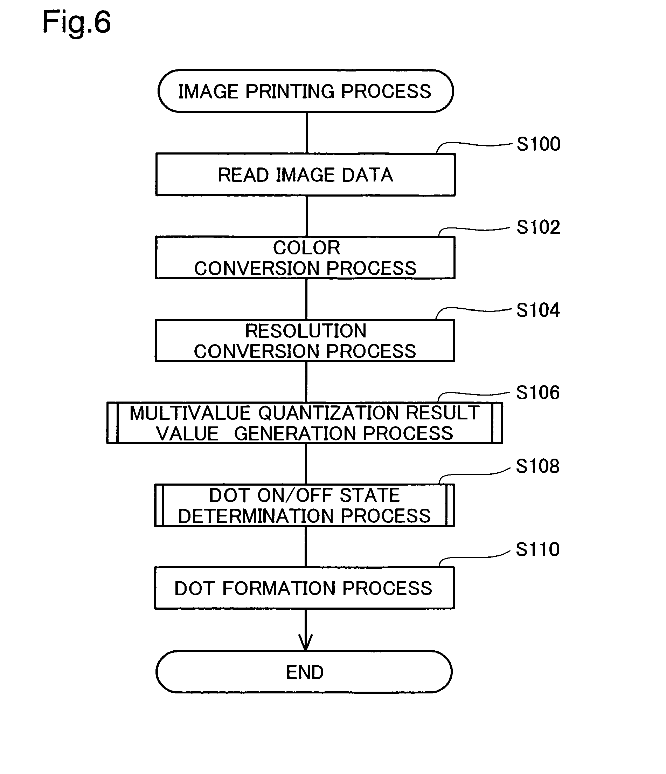

FIG. 6 is a flowchart depicting the overall flow of the image printing process in Embodiment 1. As illustrated, prior to initiating the image printing process, the computer 100 first initiates reading of the image data (Step S100). Here, while the image data is described as being RGB color image data, it is not limited to color image data; application would be similar for monochrome image data. Nor is application limited to a color printer; application would be similar for a monochrome printer.

After the color image data is read, a color conversion process is performed (Step S102). The color conversion process is a process for converting RGB color image data represented by combinations of R, G, B tone values to image data represented by combinations of tone values of the ink colors used for printing. As noted, the color printer 200 prints images using ink of the four colors C, M, Y, K. Thus, in the color conversion process, image data represented by the colors RGB is converted to data represented by tone values of the colors C, M, Y, K. The color conversion process is carried out with reference to a three-dimensional numerical table termed a color conversion table (LUT). In the LUT, tone values for the colors C, M, Y, K derived by color conversion of RGB color data have been stored in advance. In the process of Step S102, by means of referring to this table, it is possible for the RGB color data to undergo rapid color conversion to image data of the colors C, M, Y, K.

When the color conversion process has been completed, a resolution conversion process is carried out (Step S104). The resolution conversion process is a process for converting the resolution of the image data to the resolution at which the image will be printed by the printer 200 (print resolution). Where the resolution of the image data is lower than the print resolution, interpolation is performed to create new image data between existing pixels, while conversely where the resolution of the image data is higher than the print resolution, a process to thin out the data at a prescribed rate until the image data resolution and the print resolution match is carried out.

Once the resolution has been converted to the print resolution in the above manner, the computer 100 initiates a multi-value quantization result value generation process (Step S106). The details of multi-value quantization result value generation process shall be described exhaustively later; for the time being, only an overview shall be provided. In the multi-value quantization result value generation process, neighboring pixels are grouped in prescribed number into pixel groups, whereby a single image is divided into a plurality of pixel groups. The number of pixels grouped into the pixel groups need not always be the same for all pixel groups, it being possible for the multiple pixel count to vary systematically, or for the number of pixels grouped into pixel groups to vary according to location in the image; here, for convenience in description, the simplest case, i.e. one where all pixel groups have the same number of pixels, shall be described. Once the plurality of pixels have been grouped into pixel groups, and pixel group tone values which are tone values representing each pixel group have been derived, multi-value quantization of the pixel group tone values is carried out. As a result pixel group tone values are converted on a pixel group-by-group basis to multi-value quantization result values.

In the multi-value quantization result value generation process of the present embodiment, the number of states that can be assumed as a result of multi-value quantization differs on a pixel group-by-group basis. Specifically, whereas in multi-value quantization as it is typically carried out, there is no switching between binary conversion and trinary conversion within a single image for example, in the multi-value quantization result value generation process of the present embodiment, the number of steps of multi-value quantization differs on a pixel group-by-group basis. The result values derived by this multi-value quantization of pixel group tone values in several numbers of steps on a pixel group-by-group basis are output to the color printer 200. Where pixel group tone values undergo multi-value quantization in a unique number of levels on a pixel group-by-group basis in this way, and the results derived thereby are output, the amount of data needing to be output to the color printer 200 can be reduced to a considerable extent. Also, as will be described later, since multi-value quantization result values generated on a pixel group-by-group basis can be generated rapidly, in conjunction with the smaller amount of data needed, it becomes possible to output multi-value quantization result values to the color printer 200 extremely rapidly. The multi-value quantization result value generation process will be described in detail later.

When the CPU within the control circuit 260 of the color printer 200 receives multi-value quantization result value data provided to it on a pixel group-by-group basis, it initiates a dot on/off state determination process (Step S108). As noted previously, multi-value quantization result values are values derived by multi-value quantization of pixel group tone values; they are not values indicating on which pixels dots should be formed in a pixel group. One known method for determining pixel locations for forming dots from pixel group multi-value quantization result values is termed the density pattern method; however, since the multi-value quantization result values of the present embodiment undergo multi-value quantization in a unique number of levels on a pixel group-by-group basis, the density pattern method cannot be used as-is. Accordingly, in the dot on/off state determination process of Embodiment 1, pixel locations for forming dots are determined from multi-value quantization result values derived on a pixel group-by-group basis, by means of employing a special method which shall be described later.

In the density pattern method, actual resolution drops to the resolution of the pixel groups that have undergone multi-value quantization, and there is a tendency for picture quality to deteriorate. With the dot on/off state determination method of Embodiment 1, on the other hand, picture quality is not degraded in a manner dependent on pixel group size, as will be discussed later. Additionally, it becomes possible to print images of high picture quality with good dispersion of dots, such as can be achieved through the use of a dither matrix known as a blue noise mask or green noise mask. The specifics of the dot on/off state determination method of Embodiment 1, and the reasons why such characteristics are obtained by means of determining dot on/off state by applying this method, shall be discussed in detail later.

Once pixel locations for forming dots have been determined in this way, a process to form dots at the pixel locations so determined is carried out (Step S110). Specifically, as described with reference to FIG. 3, ink dots are formed on the printing paper by means of driving the ink ejection heads and ejecting ink drops while reciprocating the carriage in the main scanning direction and the sub-scanning direction. By forming dots in this manner, an image corresponding to the image data is printed.

C-1. Overview of Multi-value quantization Result Generation Process:

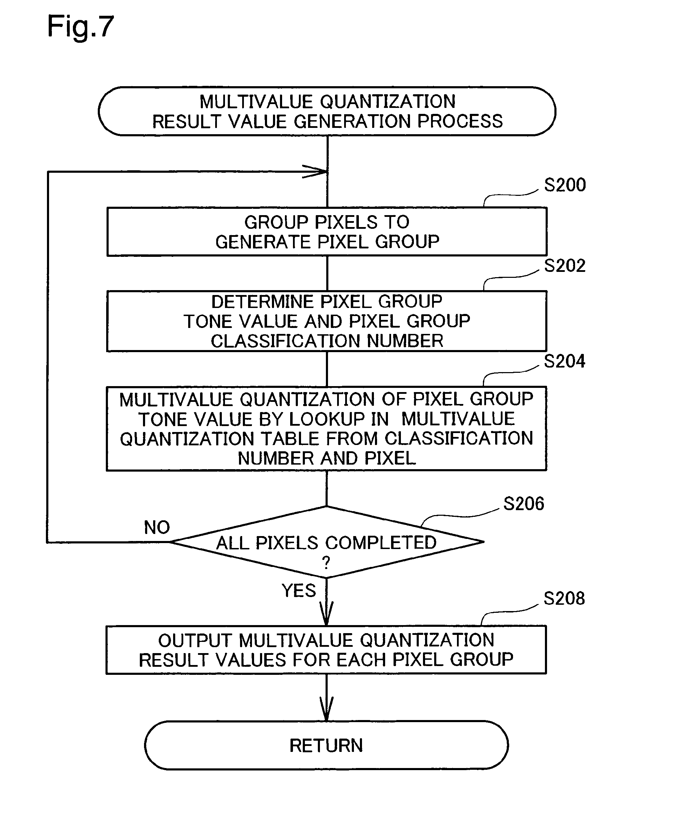

FIG. 7 is a flowchart depicting the flow of a multi-value quantization result generation process carried out in the image printing process in Embodiment 1. Here, while the multi-value quantization result generation process is described as being carried out with the computer 100, as will be described later the multi-value quantization result generation process can be made an extremely simple process, so it would be possible to carry out the process in the color printer 200 or the digital camera 120. The description hereinbelow follows the flowchart.

When the multi-value quantization result generation process of the present embodiment is initiated, first, neighboring pixels are grouped in prescribed number to form pixel groups (Step S200). Here, a total of eight pixels, namely the equivalent of four pixels in the main scanning direction and the equivalent of two pixels in the sub-scanning direction, are grouped together into pixel groups. The pixels making up pixel groups need not be pixels lined up at locations on the vertical and horizontal of quadrangular shapes; pixel groups may be composed of any pixels as long as the pixels are neighboring and like in a prescribed positional relationship.

Next, pixel group tone values and pixel group classification numbers are determined (Step S202). Pixel group tone values are values that represent pixel groups, and can be determined easily in the following manner. For example, an average value of the image data assigned to each pixel in a pixel group can be derived and used as the pixel group tone value. Alternatively, it is possible for the image data assigned to the most pixels in a pixel group, or the image data of a pixel at a specific location within a pixel group, to be used as the pixel group tone value.

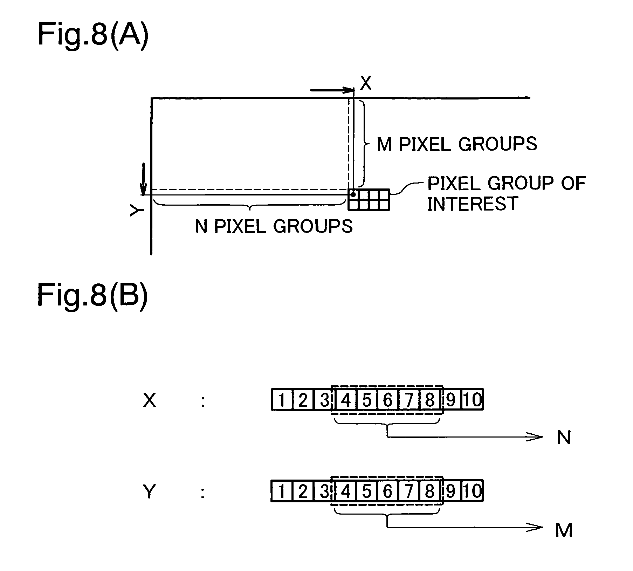

Next, pixel group classification numbers can be determined easily in the following manner, for example. FIG. 8 illustrates a method of determining pixel group classification numbers. FIG. 8 (a) shows a single pixel group created by grouping together eight pixels in an image. The method of determining a classification number for this pixel group shall be described below. As shown in FIG. 8 (a), the pixel group selected for the purpose of determining a classification number is termed the pixel group of interest.

Taking the uppermost left corner of the image as the origin, a pixel location is expressed in terms of pixel count in the main scanning direction and the sub-scanning direction from the origin. Pixel group location is expressed in terms of the pixel location of the pixel in the upper left corner of the pixel group. In FIG. 8 (a), a black dot is shown on the pixel representing the location of the pixel group of interest. Let it be assumed that the pixel location of this pixel is (X, Y). The classification number of the pixel group of interest can be determined very easily by means of representing X, Y as a binary number and storing this on a prescribed number of bits which can then be simply read out. For example, let it be assumed that, as shown in FIG. 8 (b), X and Y representing the location of a pixel group of interest each consist of 10-bit data. Let the value derived by reading the fourth to eighth bit after the lead bit of X be designated as N, and the value derived by reading the fourth to eighth bit after the lead bit of Y be designated as M. In the present embodiment, by calculating the expression:
$$N + (M - 1) \times 32 \quad \dots (1)$$

a classification number for the pixel group can be determined easily. The reason why it is possible to determined pixel group classification numbers in this way shall be described later.

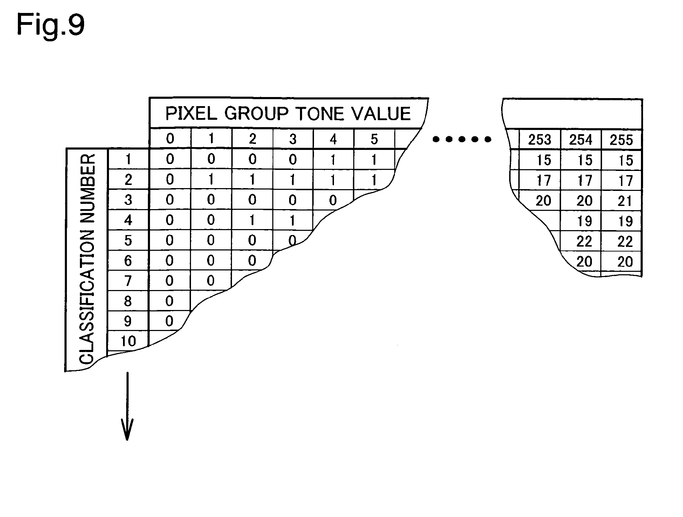

Once pixel groups classification numbers and pixel group tone values have been determined in this way, the pixel group tone values undergo multi-value quantization by means of referring to a multi-value quantization table, described later (Step S204). FIG. 9 is an illustration depicting conceptually a multi-value quantization table referred to during multi-value quantization. As illustrated, the multi-value quantization table stores multi-value quantization result values associated with pixel group tone values, for each pixel group classification number; multi-value quantization result values increase in stepwise fashion in association with increasing pixel group tone values.

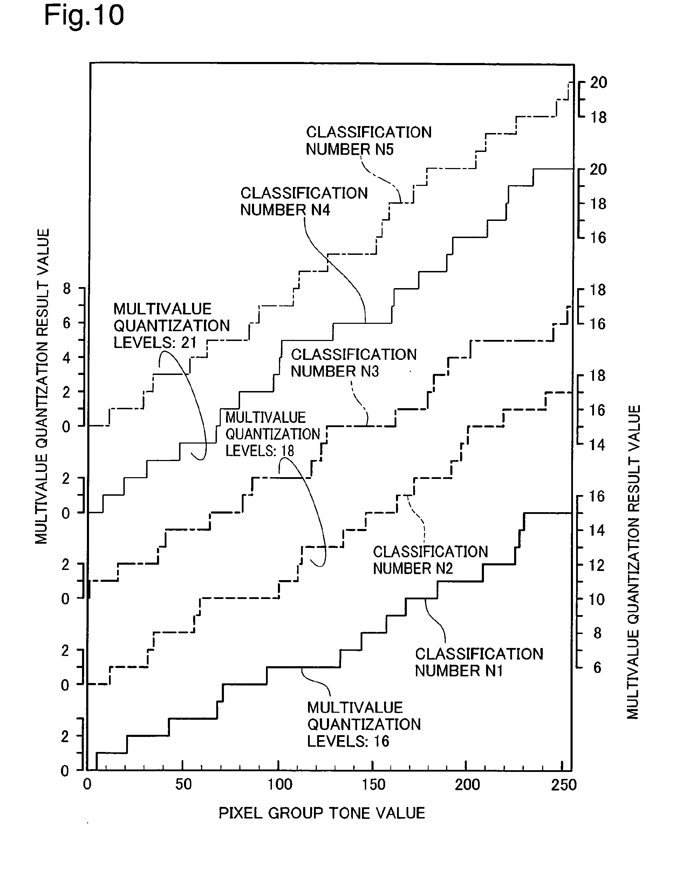

FIG. 10 is an illustration depicting an example of stepwise increase in multi-value quantization result values in association with increasing pixel group tone values. In FIG. 10, multi-value quantization result values associated with increasing pixel group tone values are shown using a line graphs in which pixel group tone values are given on the horizontal axis and multi-value quantization result values are given on the vertical axis. In the drawing, multi-value quantization result values are shown for five pixel groups having different classification numbers N1 -N45; in order to prevent the line graphs of the pixel groups from overlapping and becoming difficult to distinguish from one another, the location of the origin of the multi-value quantization result values is portrayed shifted in small increments in the vertical axis direction.

Taking as a example for description the pixel group of classification number N1 represented by the heavy solid line in the drawing, within a pixel group tone value range of 0 -4, the multi-value quantization result value is "0"; within a pixel group tone value range of 5 -20, meanwhile, the multi-value quantization result value increases to "1." Next, within a pixel group tone value range of 21 -42 the multi-value quantization result value increases to "2," and within a pixel group tone value range of 43 -69 the multi-value quantization result value increases to "3." In this way, multi-value quantization result value increases in stepwise fashion in association with increasing pixel group tone value, with the multi-value quantization result value ultimately increasing to "15." That is, pixel group tone values that can assume tone values over the range 0 -255 are subjected to multi-value quantization to sixteen levels, from tone values of 0 -15 (in other words, base 16 conversion).

Similarly, for the pixel group of classification number N2 represented by the heavy dashed line, and the pixel group of classification number N3 represented by the heavy dot-and-dash line in the drawing, pixel group tone values that can assume tone values over the range 0 -255 undergo multi-value quantization to eighteen levels from tone values of 0 -17 (in other words, base 18 conversion). Further, for the pixel group of classification number N4 represented by the fine solid line and the pixel group of classification number N5 represented by the fine dot-and-dash line, pixel group tone values undergo multi-value quantization to twenty-one levels from tone values of 0 -20 (in other words, base 21 conversion). In this way, in the multi-value quantization result value generation process of the present embodiment, the number of levels of multi-value quantization of pixel groups (number of states that multi-value quantization results can assume) are not all the same; rather, multi-value quantization is carried out using unique level numbers depending on pixel group classification number. As a result, even where the same given pixel group tone value undergoes multi-value quantization, the pixel group classification number will differ, and thus the number of levels for multi-value quantization will differ, so that the multi-value quantization will give different result values.

Even where the number of levels for multi-value quantization is the same, it is not the case that identical multi-value quantization result values will be obtained. For example, as will be apparent from a comparison of the pixel group of classification number N2 with the pixel group of classification number N3 in FIG. 10, even though the number of levels of multi-value quantization for each is eighteen, the pixel group tone values at which their multi-value quantization result value changes will not be the same in most instances. Similarly, for the pixel group of classification number N4 and the pixel group of classification number N5, even though the number of levels of multi-value quantization for each is twenty-one, the pixel group tone values at which their multi-value quantization result value changes will not be the same in most instances. Consequently, even where the number of levels of multi-value quantization of pixel groups is the same, where their classification numbers differ, different multi-value quantization result values will be obtained.

In the multi-value quantization depicted in FIG. 9, multi-value quantization result values for pixel group tone values are stored on a pixel group-by-group classification number basis. As shown in FIG. 10, correspondence relationships of pixel group tone values with multi-value quantization result values consist of unique correspondence relationships for each of the individual classification numbers. In Step S204 of the multi-value quantization result value generation process shown in FIG. 7, the process for generating multi-value quantization result values on a pixel group-by-groups basis is carried out by performing multi-value quantization of pixel group tone values with reference to this kind of multi-value quantization table. The method of setting up the multi-value quantization table depicted in FIG. 1 will be discussed in detail later.

Once pixels have been grouped into a pixel group, and multi-value quantization result values have been generated for the pixel group in the above manner, it is determined whether processing has been completed for all pixels (Step S206). If there are any unprocessed pixels remaining (Step S206: no), the process returns to Step S200, a new pixel group is created, and the subsequent series of processes is performed to generate a multi-value quantization result value for that pixel group. This procedure is repeated until it is determined that processing has been completed for all pixels (Step S206: yes), whereupon the multi-value quantization result values derived for the pixel groups are output to the color printer 200, and the multi-value quantization result value generation process of FIG. 7 terminates.

Where multi-value quantization result values for each pixel group are output in this way, the amount of data needing to be sent to the printer is considerably less than the case where data representing dot on/off state for each individual pixel is output. The point shall be discussed below.

In the present embodiment, since it is possible to form three types of dots, namely, large dots, medium dots, and small dots, then including the case where no dot is formed, each individual pixel can assume any of four states, and consequently 2-bit data will be necessary in order to represent the dot on/off state of each single pixel. In the present embodiment, since a single pixel group is composed of eight pixels, the amount of data needed to represent the dot on/off state of single pixels is 16 bits (= 2 bits $\times$ 8 pixels) per pixel group.

In the multi-value quantization result value generation process shown in FIG. 7, on the other hand, the number of levels is on the order of 15 -21, while differing depending on pixel group classification number (see FIGS. 9 and 10). While the method for determining the number of levels of multi-value quantization on a pixel group-by-group basis shall be described later, the number of levels of multi-value quantization will likely not exceed 30 at most. Consequently, with multi-value quantization result values for pixel groups, five bits of data should be sufficient to represent each single pixel group. As noted, since where the dot on/off state of each single pixel is represented, 16-bit data for each pixel will be needed, by outputting result values derived by multi-value quantization of pixel group tone values, the amount of data needing to be output to the color printer 200 can be reduced to one-third or less. In this way, in the image printing process of the present embodiment, because multi-value quantization result values for pixel groups are output, the amount of data can be reduced, and it is possible for the data to be output to the color printer 200 faster.

When the color printer 200 receives the multi-value quantization result values from the computer 100, it determines the dot on/off state for each pixel in the pixel groups, by means of performing the dot on/off state determination process described below.

C-2. Overview of Dot On/Off State Determination Process:

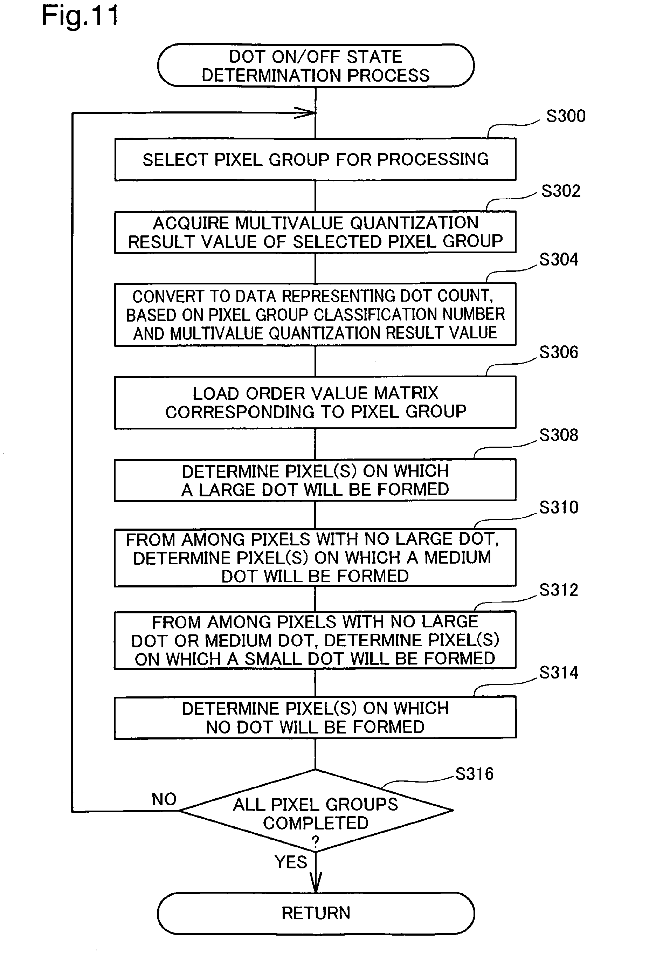

FIG. 11 is a flowchart depicting the flow of the dot on/off state determination process of Embodiment 1. The process is a process that is executed by the color printer 200, after it has received multi-value quantization result values for each pixel group from the computer 100. The description hereinbelow will follow the flowchart of FIG. 11.

When the dot on/off state determination process of Embodiment 1 is initiated, first, one pixel group is selected for processing, and the multi-value quantization result value of the selected pixel group is acquired (Steps S300, S302). Next, the multi-value quantization result value for the pixel group is converted to data representing the number of dots to be formed in the pixel group (Step S304). Here, as shown in FIG. 9 and FIG. 10, where pixel group classification numbers differ, multi-value quantization result values will assume different values even if pixel group tone values are the same. As will be apparent therefrom, pixel group multi-value quantization result values constitute data for which it is possible to compare the magnitude of result values only between pixel groups of the same classification number; it is not possible to compare multi-value quantization result values for pixel groups having different classification numbers.

Consider the case where multi-value quantization result values dependent on pixel group classification numbers are converted to multi-value quantization result values not dependent on classification numbers. Where multi-value quantization result values are converted to values not dependent on classification numbers, since the magnitude of multi-value quantization result values can be compared for all pixel groups, it is possible for appropriate numbers for forming large dots, medium dots, and small dots, i.e. data representing dot counts, to be associated according to the order of the respective converted values.

In Step S304 of FIG. 11, on the basis of this concept, multi-value quantization result values dependent on pixel group classification numbers are converted to data indicating numbers of dots to be formed in pixel groups. The actual conversion can be carried out very quickly, simply by referring to a conversion table having appropriate dot count data preestablished therein for each combination of pixel group classification number and multi-value quantization result value.

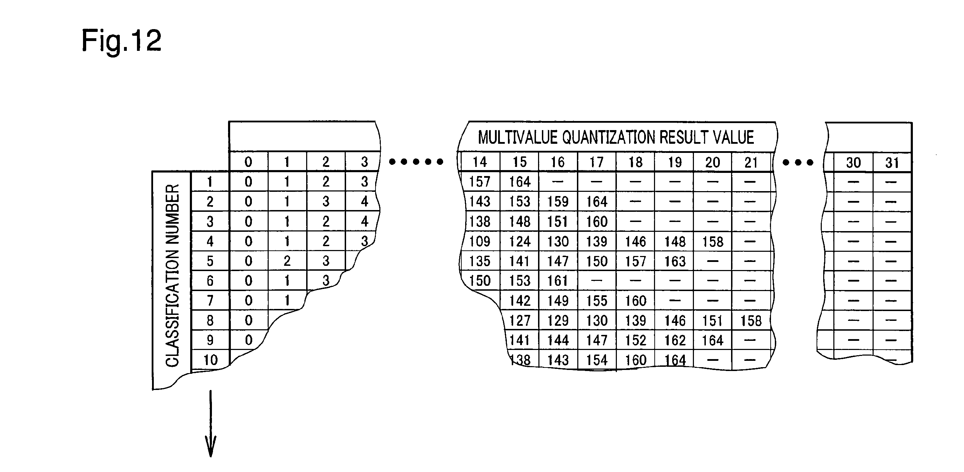

FIG. 12 is an illustration depicting conceptually a conversion table referred when combinations of pixel group classification numbers and multi-value quantization result values are converted to data representing dot counts. As illustrated, in the conversion table, data representing dot counts corresponding to multi-value quantization result values have been established for each classification number. As one example, to describe the case for a pixel group of the classification number 1, for a multi-value quantization result value of 0, dot count data of "0" is established. This dot count data of "0" is code data indicating that the number of large dots, medium dots, and small dots to be formed is 0 for each. "1" is established as the as dot count data for the multi-value quantization result value of 1. Dot count data of "1" is code data indicating that the number of large dots and medium dots to be formed is 0, while the number of small dots to be formed is 1. For the multi-value quantization result value of 15, dot count data of "164" is established. Dot count data of "164" is code data indicating that 8 large dots are to be formed, and no medium dots or small dots are to be formed.

In this way, data coding data that indicates dot count is established in the conversion table. Specifically, as long as count data is able to specify dot count by some method, then the data can take any form, even one that does not express dot count directly. For a pixel group of the classification number 1, no data is established representing dot counts for multi-value quantization result values greater than "16." This is because the number of levels of multi-value quantization for a pixel group of the classification number 1 is sixteen levels, corresponding to the fact that multi-value quantization result values can only assume values of 0 -15. Consequently, for pixel groups whose number of levels of multi-value quantization is eighteen levels, such as pixel groups of the classification number 2, data indicating dot counts will be established only for multi-value quantization result values of 0 -17, while no data is established representing dot counts is established for multi-value quantization result values greater than "18."

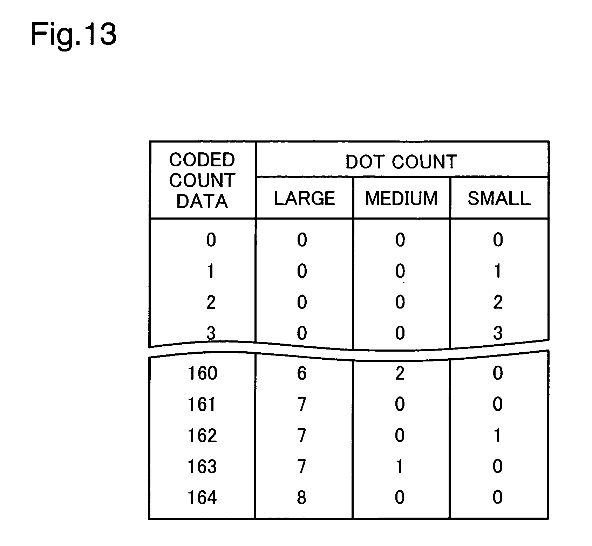

FIG. 13 is an illustration depicting correspondence relationships between coded count data and the count of each dot type represented by code data. The reason for handing dot counts of the various dot types in coded form in this way is as follows.

Here, since a single pixel group is composed of eight pixels, counts for forming large dots, medium dots, and small dots can each assume a value of 0 -8. Consequently, if dot counts were represented as-is without being coded, the large dot count, medium dot count, and small dot count would each require bits to represent them, for a total of 12 bits of data.

Meanwhile, since a single pixel group is composed of eight pixels, the total dot count that can be formed in any one pixel group is at most eight. For example, in the case of the combination of the dot counts: 4 large dots, 3 medium dots, and 2 small dots, the total dot count would be nine; since this exceeds eight, it would never actually occur. In light of this fact, the kinds of dot combinations that can actually occur are not considered to be very numerous. The actual calculation would be as follows. A pixel group contains eight pixels, and viewed in terms of each individual pixel, it can assume one of four states, namely, "form a large dot," "form a medium dot," "form a small dot," or "form no dot." The number of dot count combinations which it is possible to form in a pixel group is equivalent to the number of combinations of these four states when selected eight times permitting duplication, and thus can be calculated as:

$$_4H_8 \; (=\; _{4+8-1}C_8),$$

so ultimately a maximum of only 165 possible combinations appears. Here, nHr is an operator for calculating the number of duplicate combinations when selected r times from among n objects while permitting duplication. nCr is an operator for calculating the number of combinations when selected r times from among n objects without permitting duplication. Where the number of possible combinations is 165, these can be represented on eight bits. Consequently, where code numbers are established for combinations of dot counts that can actually occur, combinations of dot counts to be formed in pixel groups can be represented with 8-bit data. Ultimately, by coding dot count combinations, it is possible to reduce the amount of data required, as compared to where dot formation counts are represented on a per-dot type basis. For reasons such as this, count data is represented in coded form as depicted in FIG. 13, and in the conversion table shown in FIG. 12, the coded dot count data is established for multi-value quantization result values on a per-classification number basis. The method for setting up the conversion table shown in FIG. 12 will be described in detail later with reference to another drawing.

In the dot on/off state determination process depicted in FIG. 11, by means of referring to the conversion table shown in FIG. 12, the process to convert pixel group multi-value quantization result values to code data represent dot counts is performed. In order to refer to the conversion table shown in FIG. 12, a pixel group classification number is needed, in addition to a multi-value quantization result value. In the present embodiment, as described previously using FIG. 8, the classification number of a pixel group is determined on the basis of the location of the pixel group within an image. Since multi-value quantization result values are supplied on a pixel group-by-group basis, on the basis of the order in which multi-value quantization result values are supplied, the location on the image where the pixel group of a particular multi-value quantization result value to be processed can be ascertained, making it possible to easily determine a classification number thereby. The method for determining classification number according to location in an image will be described later. Of course, classification numbers could be output together with multi-value quantization result values from the computer 100 to the color printer 200

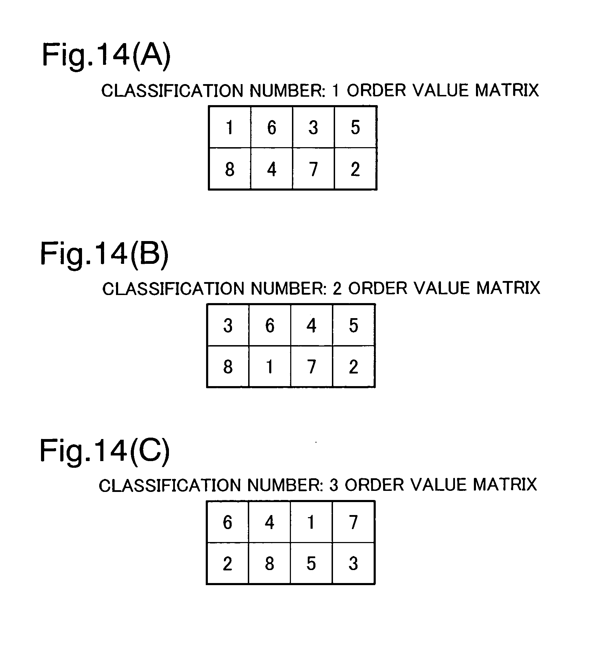

Next, a process for reading out an order value matrix corresponding to pixel groups is performed (Step S306). Here, the order value matrix is a matrix establishing a sequence of dot formation, for each pixel in a pixel group. FIG. 14 depicts exemplary order value matrices. As illustrated, for order value matrices as well, different matrices are established for different pixel group classification numbers. As one example, the order value matrix for classification number 1 shown in FIG. 14 (a) shall be described. In a pixel group of classification number 1, of the eight pixels making up the pixel group, the pixel at the upper left corner is the pixel on which a dot is most likely to be formed. The fact that a numerical value of "1" is established for the pixel at the upper left corner of the order value matrix indicates that this pixel is the pixel on which the first dot will be formed. Numerical values indicating a sequence established in an order value matrix in this way are termed order values. The fact that an order value of "2" is established for the pixel at the lower right corner of the pixel group indicates that this pixel is the pixel on which the second dot will be formed. In this way, the order value matrix establishes order values indicating a sequence of dot formation for the eight pixels contained in a pixel group.

These order value matrices differ depending on pixel group classification number. For example, in the order value matrix for classification number 2 shown in FIG. 14 (b), the pixel on which the first dot will be formed (the pixel having the order value "1") is the second pixel from the left in the lower row, and the pixel on which the second dot will be formed (the pixel having the order value "2") is the pixel at the lower right corner. In the order value matrix for classification number 3 shown in FIG. 14 (c), the pixel on which the first dot will be formed (the pixel having the order value "1") is the second pixel from the right in the upper row, and the pixel on which the second dot will be formed (the pixel having the order value "2") is the pixel at the lower left corner.

Order value matrices like those depicted in FIG. 14 for each pixel group classification number are stored in advance in the ROM on board the color printer 200 of Embodiment 1. In Step S306 of FIG. 11, a process to read out from ROM the order value matrix corresponding to the pixel group classification number is performed. The method for setting up order value matrices corresponding to individual pixel group classification numbers will be described in detail using another drawing.

Once the order value matrix corresponding to a pixel group has been read out, it is first determined which, of the eight pixels making up the pixel group, are pixels on which a large dot will be formed (Step S308). Since large dots stand out more than other dots, it is preferable that pixel locations for dot formation be determined with precedence over other dots, so that dots can be dispersed as much as possible. To this end, pixels for forming large dots are determined first. During determination of pixels for forming dots, the dot count data derived through conversion of pixel group multi-value quantization result values, and order value matrix corresponding to the pixel group, are used.

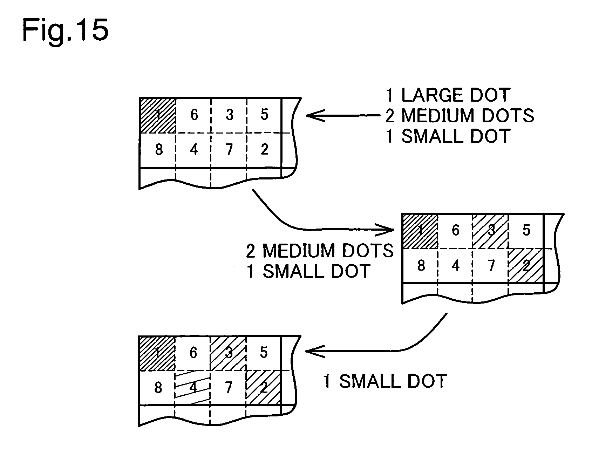

FIG. 15 is an illustration depicting conceptually determination of pixels for forming dots of each type within a pixel group, using dot count data and an order value matrix. Let it be assumed for example that the code data indicating dot counts to be formed in a pixel group represents a combination of one large dot, two medium dots, and one small dot. As noted, the sequence for forming dots on pixels in the pixel group is established in the order value matrix, and since pixels on which large dots will be formed are determined first, a large dot will be formed on the pixel for which the order value "1" has been established. Of course, if the large dot formation count were two, the large dot would be formed on the pixel having the order value "2" in addition to the pixel having the order value "1." In FIG. 15, the pixel on which the large dot is formed is shown with fine hatching. In Step S308 of FIG. 11, determination of pixels on which to form the large dot is performed on the basis of this dot count data and the order value matrix.

Once pixels on which large dots are to be formed have been determined, pixels on which medium dots are to be formed are determined next (Step S310 of FIG. 11). In the example of FIG. 15, the number of medium dots to be formed is two. Since the large dot has already been formed on the pixel having the order value "1," medium dots will be formed on the pixel having the order value "2" and on the pixel having the order value "3." In FIG. 15, the pixels on which the medium dot is formed are shown with somewhat coarser hatching. In Step S310 of FIG. 11, a process to determine pixels on which to form the medium dots, from among pixels having no large dot formed thereon, is carried out.

Once the pixels on which the medium dot is to be formed have been determined, pixels on which the small dot is to be formed are now determined (Step S312 of FIG. 11). In the example of FIG. 15, the number of small dots to be formed is one, and since the large dot and medium dots have already been formed on the pixels having the order values "1" to "3," the small dot will be formed on the pixel having the order value "4." In FIG. 15, the pixel on which the small dot is formed is shown with coarse hatching.

Once the pixels on which large, medium, and small dots are to be formed have been determined in this way, it may be determined that any remaining pixels in the pixel group are pixels on which no dots are to be formed (Step S314 of FIG. 11). Once all of the above processes have been carried out, dot on/off state will have been determined for all pixels in the pixel group.

Next, it is decided whether the above processes have been performed to determine the dot on/off state for all pixel groups (Step S316), and if there are any unprocessed pixel groups remaining (Step S316: no), the system returns to Step S300, a new pixel group is selected, and the series of processes is carried out for this pixel group. This procedure is repeated until it is finally determined that processing has been completed for all pixel groups (Step S316: yes), whereupon the dot on/off state determination process shown in FIG. 11 terminates, and the system returns to the image printing process shown in FIG. 6. In the image printing process described above, an image is printed on the printing paper by means of forming dots according to the results of determining dot on/off state.

As described hereinabove, in the image printing process of Embodiment 1, pixel groups are composed by grouping together a plurality of pixels, and multi-value quantization is carried out on a pixel group-by-group basis, with the multi-value quantization result values obtained thereby being output to the color printer 200. During multi-value quantization of pixel groups, pixel group classification numbers and pixel group tone values are calculated, and multi-value quantization result values can be obtained immediately simply by referring to a multi-value quantization table like that depicted in FIG. 9. Since both pixel group classification numbers and pixel group tone values can be derived in an extremely simple manner as described previously, it is possible for pixel group multi-value quantization result values to be arrived at extremely quickly, and by means of an extremely simple process.

Additionally, since multi-value quantization result values can be represented on a small number of bits per pixel group (in the present embodiment, five bits at most), the amount of data can be reduced considerably as compared with data representing dot on/off state for individual pixels. Consequently, by outputting multi-value quantization result values for pixel groups, rather than data representing dot on/off state for individual pixels, to the color printer 200, it is possible to supply the data faster, commensurate with the reduction in the amount of data.

In the color printer 200, once the multi-value quantization result values for pixel groups have been received, these are converted to data indicating dot counts to be formed within pixel groups. The conversion can be carried out rapidly, simply by referring to a conversion table like that shown in FIG. 12. Next, large dot/medium dot/small dot on/off states are determined on the basis of the order value matrices and the data indicating dot counts derived by this conversion, and then an image is printed by forming dots. Where by reference is made to order value matrices, pixels for large dot/medium dot/ small dot formation can be determined relatively simply. Consequently, in the color printer 200 as well, once the multi-value quantization result values for pixel groups have been received, dot on/off states for pixels can be determined rapidly, and it is accordingly possible for the image to printed rapidly.

Additionally, in the image printing process of Embodiment 1, it is possible not merely to be able to print images rapidly, but also to print images with ample picture quality. In particular, by appropriately establishing multi-value quantization tables, conversion tables, and order value matrices depending on pixel group classification number, it becomes possible to print images of high picture quality with good dispersion of dots, such as can be achieved through the use of a dither matrix known as a blue noise mask or green noise mask. Following is a description of the concept of determining pixel group classification number, including the reason that this is possible; followed by a description of methods for setting up multi-value quantization tables, conversion tables, order value matrices and so on.

C-3. Overview of Dither Method:

The image printing process of Embodiment 1 discussed above has been improved through deployment of a method known as the dither method. First, an overview of the dither method will be described in brief, to provide a foundation for discussion of the concept of determining pixel group classification number, and of methods for setting up multi-value quantization tables, conversion tables, order value matrices and so on.

The dither method is a typical method for use in converting image data to data representing the dot on/off state for each pixel. With this method, threshold values are established in a matrix known as a dither matrix; for each pixel, the tone value of the image data is compared with the threshold values are established in the dither matrix, and it is decided to form dots on those pixels for which the image data tone value is greater, and to not form dots on pixels for which this is not the case. By performing this decision for all pixels within an image, image data can be converted to data representing the dot on/off state for each pixel.

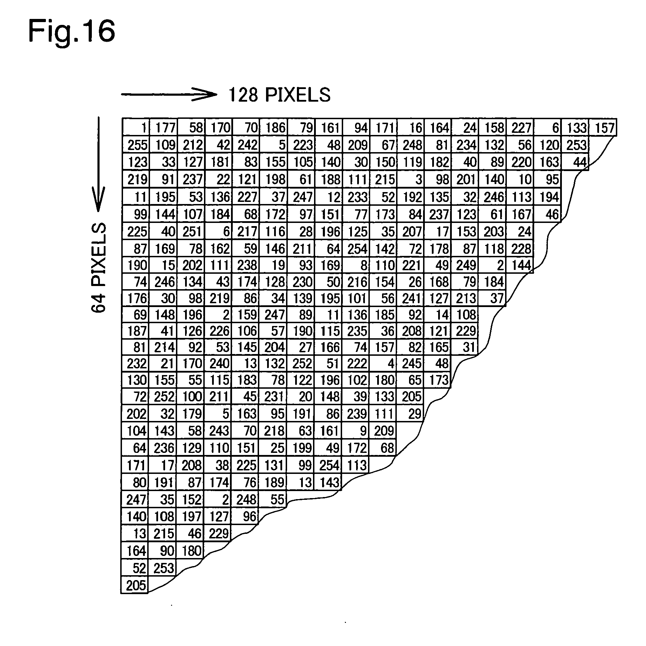

FIG. 16 an illustration depicting conceptually a portion of a dither matrix. In the illustrated matrix, there are randomly stored threshold values selected randomly from a tone value range of 1 -225, for a total of 8192 pixels consisting of 128 pixels in the horizontal direction (main scanning direction) and 64 pixels in the vertical direction (sub-scanning direction). Here, the reason for selecting threshold value tone values from the range of 1 -225 is that, in the present embodiment, the image data is 1-byte data able to assume tone values of 0 -255, and additionally that where an image data tone value and a threshold value are equal, a decision is made to form a dot on that pixel.

Specifically, where dot formation is limited to pixels for which the image data tone value is greater than the threshold value (i.e. not to form a dot on any pixel whose image data tone value and threshold value are equal), no dot will ever be formed on any pixel having a threshold value equal in value to the maximum tone value that can be assumed by the image data. In order to avoid this, the value range that can be assumed by the threshold values is a range that excludes the maximum tone value from the range that can be assumed by the image data. Conversely, where a dot is formed on any pixel whose image data tone value and threshold value are equal as well, a dot will always be formed on any pixel having a threshold value equal in value to the minimum tone value that can be assumed by the image data. In order to avoid this, the value range that can be assumed by the threshold values is a range that excludes the minimum tone value from the range that can be assumed by the image data.

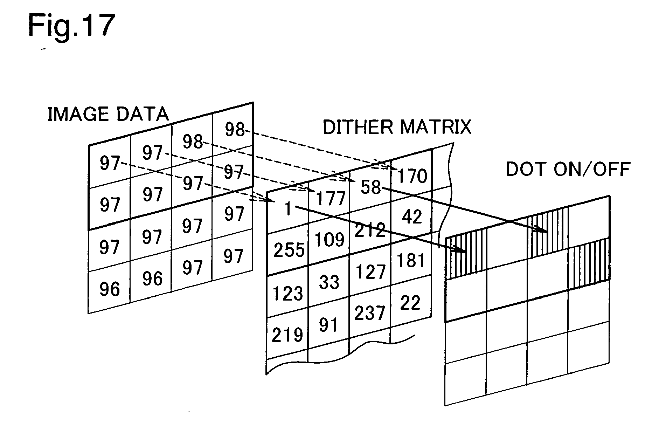

In the present embodiment, since image data can assume tone values of 0 - 255, and a dot is formed on any pixel whose image data tone value and threshold value are equal, the range that can be assumed by the threshold value is set to 1 - 255. The size of the dither matrix is not limited to the size shown by way of example in FIG. 16; various sizes can be used, including matrices having the same pixel count in both the horizontal and vertical directions. FIG. 17 is an illustration depicting conceptually the dot on/off state decision for pixels, made while referring to the dither matrix. When deciding dot on/off state, first, a pixel for decision is selected, and the image data tone value for this pixel is compared with the threshold value stored at the corresponding location in the dither matrix. The fine broken line arrows in FIG. 17 depict in model form pixel-by-pixel comparison of image data tone values with threshold values stored in the dither matrix. For example, for the pixel in the upper left corner of the image data, the image data tone value is 97, while the dither matrix threshold value is 1, so the decision is made to form a dot on this pixel. The solid line arrow in FIG. 17 depicts in model form the decision to form a dot on this pixel, with the decision result being written to memory. For the pixel neighboring this pixel to right, meanwhile, the image data tone value is 97, while the dither matrix threshold value is 177, and since the threshold value is greater, the decision is made to not form a dot on this pixel. With the dither method, by deciding on a pixel-by-pixel basis whether or not to form a dot, while making reference to the dither matrix, the image data is converted to data representing dot on/off state on a pixel-by-pixel basis.

In view of the preceding description, the concept of determining pixel group classification number, and methods for setting up multi-value quantization tables, conversion tables, order value matrices and so on, shall now be described.

C-4. Conceptual Approach of Determining Classification Number:

First, the concept of assigning to classification numbers to pixel groups shall be discussed. Next, the reason why pixel group classification numbers can be derived by means of the simple method described using FIG. 8 shall be discussed.

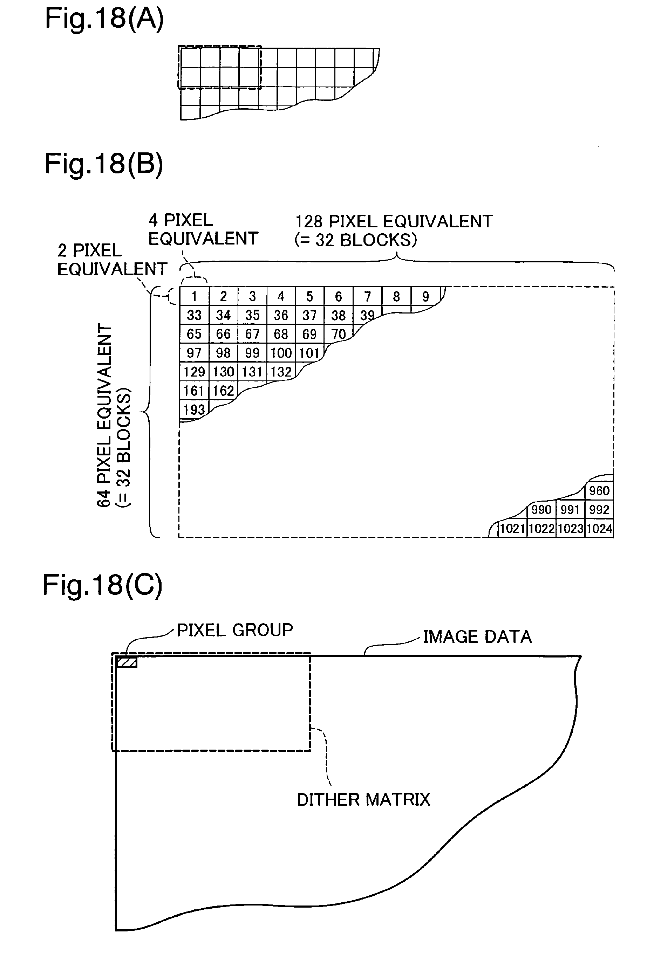

FIG. 18 illustrates the conceptual approach of determining classification number on a pixel group-by-group basis. FIG. 18 (a) illustrates conceptually a single pixel group created by grouping together a total of 8 pixels, namely four pixels in the horizontal direction and two pixels in the vertical direction, at a location at the upper leftmost corner of an image.

As noted, in the dither method, dot on/off state is decided on a pixel-by-pixel basis, by comparing the tone values of image data assigned to pixels, with threshold values established at corresponding locations in the dither matrix. In the present embodiment meanwhile, since prescribed numbers of neighboring pixels are grouped into pixel groups, the threshold values established in the dither matrix are likewise grouped together in prescribed numbers corresponding to the pixel groups, to create blocks. FIG. 18 (b) depicts multiple blocks created by grouping threshold values established in the dither matrix, and each composed of four values in the horizontal direction and two values in the vertical direction. The dither matrix depicted in FIG. 16 is composed of threshold values equivalent to a total of 8192 pixels, namely 128 pixels in the horizontal direction (main scanning direction) and 64 pixels in the vertical direction (sub-scanning direction), so by grouping together threshold values in blocks each composed of four in the horizontal direction and two in the vertical direction, the dither matrix is divided into 32 blocks each in the horizontal and vertical directions, for a total of 1024 blocks.

As shown in FIG. 18 (b), these blocks are assigned serial numbers from 1 to 1024. When the dither matrix is applied to image data, pixel groups are classified according to the serial number of the block which will be applied to the location of a pixel group. For example, as shown in FIG. 18 (c), since the block having the serial number 1 in FIG. 18 (b) will be applied to the pixel group in the uppermost left corner of the image, this pixel group is classified as a pixel group of classification number 1. The preceding represents the basic concept for determining pixel group classification numbers.

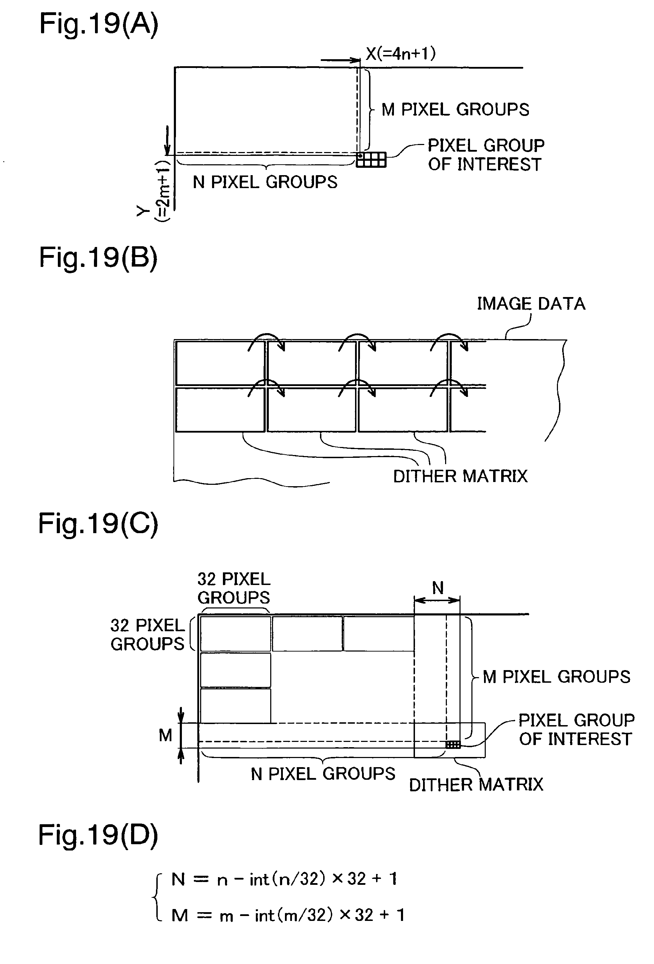

Next, the reason why it is possible to calculate pixel group classification numbers by means of the method described previously with FIG. 8 will be discussed. FIG. 19 illustrates the method for calculating classification numbers of pixel groups. FIG. 19 (a) shows a single pixel group created in an image. In the description hereinbelow, the method for calculating classification number will be described, taking this pixel group as the pixel group of interest. As noted, the location of a pixel group of interest is represented by the pixel location of the pixel in the upper left corner of the pixel group. In FIG. 19 (a), the location of this pixel group is shown by a black dot on the pixel. The pixel location of this pixel is denoted as (X, Y). Since the size of each pixel group is 4 pixels in the main scanning direction and two pixels in the sub-scanning direction, there exist numbers n, m (here, n and m are positive integers ≥ 0) such that

$$X = 4n + 1, \; Y = 2m + 1.$$

In other words, n pixel groups are arrayed to the left side of the pixel group of interest, and m pixel groups are arrayed to the upper side of the pixel group of interest.

Here, as noted, when the dither matrix is applied to the image data, the pixel groups are classified on the basis of the serial number of the block applied to the pixel group of interest (see FIG. 18), and thus by means of a method of moving the dither matrix while applying it to image data, a given pixel group will be classified into different classification numbers. In actual practice, any method of moving the dither matrix while applying it to image data is acceptable; for convenience, however, the simplest method, i.e. moving the dither matrix in the horizontal direction, is described here. FIG. 19 (b) illustrates conceptually repeatedly applying the dither matrix to image data while moving it in small increments in the horizontal direction.

FIG. 19 (c) illustrates conceptually application of the dither matrix to the pixel group of interest shown in FIG. 19 (a), while repeatedly using the dither matrix as shown in FIG. 19 (b). When the dither matrix is moved in this way, any block in the dither matrix is applied to the pixel group of interest. Here, let is be assumed that the block of row M, column N of the dither matrix has been applied to the pixel group of interest. Since as shown in FIG. 19 (a) there are n pixel groups situated to the left of the pixel group of interest and m pixel groups situated to the upper side, for N and n and for M and m, the following relationships are respectively true:

$$N = n - int \, (n/32) \times 32 + 1$$

$$M = m - int \, (m/32) \times 32 + 1$$

Here, int is an operator representing rounding off to the decimal point to give an integer. Specifically, int (n/32) represents an integer value derived by rounding off to the decimal point the result of the calculation n/32. In this way, once the location of a pixel group of interest is known, numerical values M and N are derived from the equations given above shown in FIG. 19 (d), and the block number of the block of row M, column N of the dither matrix is assigned as the classification number of the pixel group of interest. In actual practice, as described previously with reference to FIG. 8, values can be derived very easily, simply by extracting data of a prescribed bit from data providing binary representation of the coordinate values X, Y for the pixel group of interest. The reason for this is as follows.

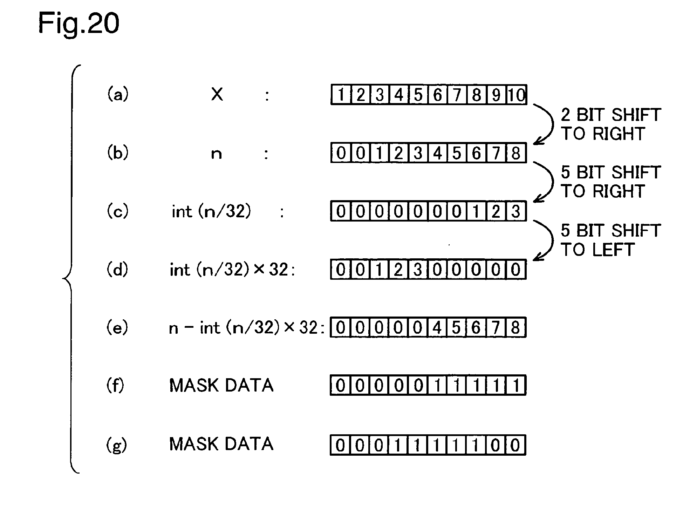

FIG. 20 is an illustration depicting a method for deriving a classification number from binary representation of the coordinates of a pixel group of interest. Let the coordinate values for the pixel group of interest be denoted as (X, Y), with X, Y represented on 10 bits. FIG. 20 (a) depicts conceptually binary data of the 10 bits representing the numerical value X. In the drawing, in order to identify each bit, they are shown assigned serial numbers from 1 to 10, starting from the most significant bit towards the least significant bit.

As described previously with reference to FIG. 19, the number n of pixel groups situated to the left side of the pixel group of interest can be derived by subtracting 1 from the value of X and dividing by 4. Here, since division by 4 can be accomplished by shifting to the right by the equivalent of 2 bits, it suffices to subtract 1 from the value of X and then bit shifting the binary data derived thereby to the right by the equivalent of 2 bits. Further, since the value of X does not assume an arbitrary value, but rather can only assume a numerical value representable in the form 4n + 1, the number n of pixel groups can be derived simply by bit shifting the binary data to the right by the equivalent of 2 bits, without subtracting 1. FIG. 20 (b) depicts conceptually binary data for the number n, derived by bit shifting the value of X in this way.

Next, the expression int (n/32) is calculated. Specifically, the number n is divided by 32, and an operation to round off to the decimal place is performed. Division by 32 can be accomplished by bit shifting the binary data to the right by the equivalent of 5 bits, and where data is handed in integer form, rounding off to the decimal place will take place automatically. Ultimately, binary data for int (n/32) can be derived simply by bit shifting the binary data for the number n to the right by the equivalent of 5 bits. FIG. 20 (c) depicts conceptually binary data for int (n/32), derived by bit shifting the number n.

int (n/32) derived in this way is multiplied by 32. Multiplication by 32 can be accomplished by bit shifting the binary data to the left by the equivalent of 5 bits. FIG. 20 (d) depicts conceptually binary data for the int (n/32) × 32 derived by bit shifting the number n.

Next, the number N mentioned above can be derived by subtracting int (n/32) × 32 from the number n. As will be apparent by comparing the binary data for the number n (see FIG. 20(b)) with the data for the expression int (n/32) × 32 (see FIG. 20(d)), these sets of binary data have the five higher order bits in common, while the five lower order bits of the number of the subtrahend are all "0". Consequently, the derived value M can be obtained by extracting as-is the five lower order bits of the minuend value (the number n),. Specifically, it is possible to derive the value N in a very simple manner, merely by applying mask data like that shown in FIG. 20 (f) to the binary data shown in FIG. 20 (b). Alternatively, is possible to derive the value N by applying mask data like that shown in FIG. 20 (g) to the binary data of the value X shown in FIG. 20(a) and indicating the location of the pixel of interest, and directly extracting the fourth to eighth bit data.

In FIG. 20, there is described a case where a value N indicating block location within the dither matrix is derived from the value X of the coordinates (X, Y) indicating the location of a pixel group; however, a value M indicating block location can be derived in exactly the same way from the value Y. Ultimately, where the location of a pixel group of interest is known, the pixel block at a particular row and column in the dither matrix to which the pixel group of interest corresponds can be ascertained simply by extracting specific bit location data from the binary data; and by calculating the serial number of this block, the classification number of the pixel group of interest can be derived. The classification number calculation method described previously in FIG. 8 is a method that has been derived in this way.

C-5. Multi-value Quantization Table Setup Method:

Next, the method for setting up the multi-value quantization table shown in FIG. 9 shall be described. As discussed previously, multi-value quantization result values for pixel group tone values are established on a pixel group classification number by number basis; and by carrying out multi-value quantization while referring to the multi-value quantization table, pixel group tone values undergo multi-value quantization in unique form depending on pixel group classification number as shown in FIG. 10.

The multi-value quantization table of the present embodiment is established on the basis of a method that deploys the dither method described above, so as to enable dot on/off state decisions to be made on a pixel-by-pixel basis for multiple types of dots differing in size. The details of the method are disclosed in Japanese Patent No. 3292104. By way of providing a groundwork, prior to describing the multi-value quantization table, an overview of the technology disclosed in the aforementioned patent publication shall be described.

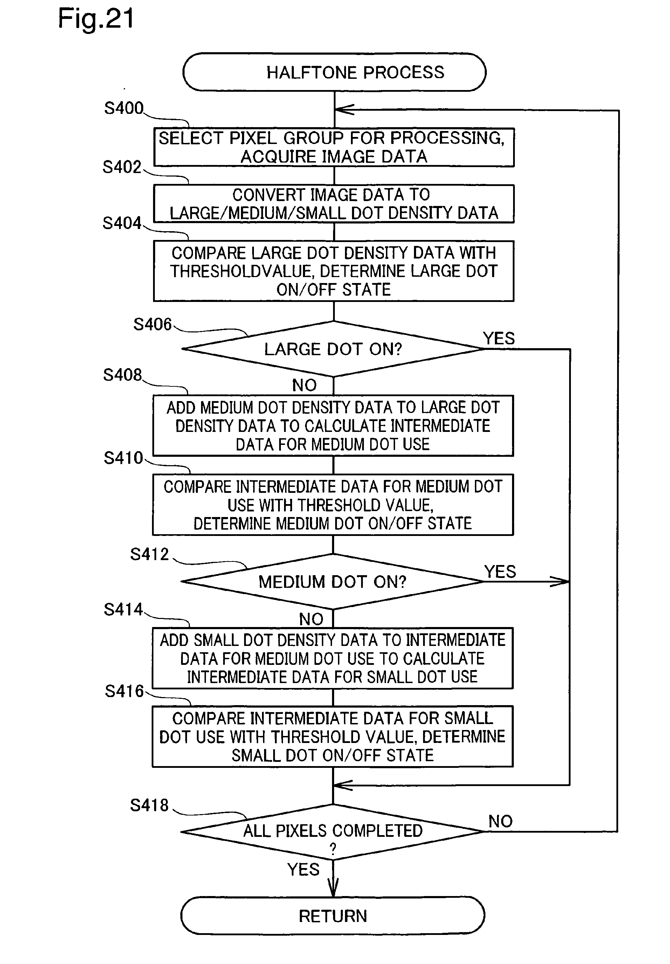

FIG. 21 is a flowchart depicting the flow of a halftone process in which a dither process is deployed making possible determination of the large/medium/small dot on/off states on a pixel-by-pixel basis. When the halftone process commences, first, a pixel for which dot on/off state decisions are to be made is selected, and image data for that pixel is acquired (Step S400). Next, the acquired image data is converted to density data for the large, medium, and small dots. Here, density data refers to data indicating densities at which to form dots. Density data will represent dot formation at higher density in association with greater tone value. For example, a density data tone value of "255" represents dot formation density of 100%, i.e. dots being formed on all pixels, while a density data tone value of "0" represents dot formation density of 0%, i.e. no dots being formed on any pixel. Conversion to such density data can be carried out by means of referring to a numerical table called a dot density conversion table.

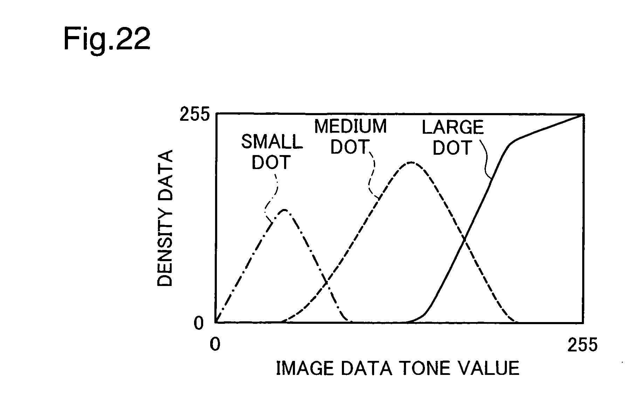

FIG. 22 is an illustration depicting conceptually a dot density conversion table used for lookup when converting image data tone values to density data for the large/medium/small dots. As shown in the drawing, in the dot density conversion table there is established density data for each type of dot, namely small dots, medium dots, and large dots, with respect to image data tone values. In the range where image data approaches a tone value of "0," the density data for both medium dots and large dots is set to a tone value of "0." The small dot density data increases in association with increasing image data tone value, but once image data reaches a certain tone value it conversely starts to decrease, with the medium dot density data beginning to increase in its place. As image data tone value increases further, the small dot density data drops to a tone value of "0," the medium dot density data starts to decrease, and the large dot density begins to increase in its place. In Step S402 of FIG. 21, a process to convert image data tone values to large dot density data, medium dot density data, and small dot density data is carried out while referring to this dot density conversion table.

Once the large/medium/small dot density data has been derived for a pixel being processed, first, the on/off state decision is made for the large dot (Step S404 of FIG. 21). The decision is carried out by comparing the large dot density data with the dither matrix threshold value established at the location corresponding to the pixel being processed. In the event that the large dot density data is greater than the threshold value, the decision is made to form the large dot on the pixel being processed, while conversely if the density data is smaller, the decision is made to not form the large dot.

Next, it is determined whether a decision has been made to form the large dot on the pixel being processed (Step S406), and in the event that a decision has been made to form the large dot on the pixel being processed (Step S406: yes), the decisions regarding the medium dot and the small dot are dispensed with, and it is decided whether all pixels have been completed (Step S418). In the event that there are any remaining pixels for which dot on/off state has yet to be determined (Step S418: no), the routine returns to Step S400, a new pixel is selected, and the series of processes is carried out.

If on the other hand it has not been decided to form the large dot on the pixel being processed (Step S406: no), then for the purpose of deciding the on/off state for the medium dot, the medium dot density data is added to the large dot density data to calculate intermediate data for medium dot use (Step S408). The intermediate data for medium dot use derived in this way is compared with the threshold value in the dither matrix. If the intermediate data for medium dot use is greater than the threshold value, a decision is made to form the medium dot, whereas conversely if the dither matrix threshold value is greater than the intermediate data for medium dot use, a decision is made to not form the medium dot (Step S410).

Next, it is determined whether a decision has been made to form the medium dot on the pixel being processed (Step S412), and in the event that a decision has been made to form the medium dot on the pixel being processed (Step **S412:** yes), the decision regarding the small dot is dispensed with, and it is decided whether all pixels have been completed (Step S418).

In the event that it has not been decided to form the medium dot on the pixel being processed (Step S412: no), then for the purpose of deciding the on/off state for the small dot, the small dot density data is added to the intermediate data for medium dot use to calculate intermediate data for small dot use (Step S414). The intermediate data for small dot use derived in this way is compared with the threshold value in the dither matrix. If the intermediate data for small dot use is greater than the threshold value, a decision is made to form the small dot, whereas conversely if the dither matrix threshold value is greater than the intermediate data for small dot use, the decision is made to form no dot whatsoever (Step S416).

That is, for a pixel for which the threshold value in the dither matrix is greater than the large dot density data (i.e. a pixel not having the large dot formed thereon), the medium dot density data is added to the large dot density data, the intermediate data derived thereby is compared with the threshold value, and if the intermediate data is greater the decision is made to form the medium dot. Meanwhile, for pixels for which the threshold value is still greater than the intermediate data, the small dot density data is added to the intermediate data and new intermediate data is calculated. This intermediate data is compared with the threshold value, and if the new intermediate data is greater than the threshold value the decision is made to form the small dot, whereas for a pixel for which the threshold value is still greater, the decision is made to form no dot whatsoever.

By means of carrying out the process described above, it is possible to decide, for a pixel being processed, whether to form the large dot, the medium dot, or the small dot, or to form no dot whatsoever. At this point it is decided whether processing has been completed for all pixels (Step S418), and in the event that there are any pixels remaining undecided (Step S418: no), the routine returns to Step S400, a new pixel is selected, and the series of processes is carried out. In this way, decisions as to whether to form the large, medium or small dot are made one at a time for a pixel selected for processing. Once it is decided that processing has been completed for all pixels (Step S418: yes), the halftone process shown in FIG. 21 terminates.

The preceding description relates to the method for deciding the on/off states for the large, medium, and small dot utilizing the dither matrix. The following description of the method for setting up the multi-value quantization table shown in FIG. 9 is based on the preceding discussion.

In the multi-value quantization result value generation process discussed previously, image data for pixels in a pixel group are represented by a pixel group tone value, and the pixel group undergoes multi-value quantization as a unit. During setup of the multi-value quantization table, first, consider deciding on/off state for each dot type, i.e. large/medium/small, on the assumption that all pixels within a pixel group have image data of the same value as the pixel group tone value. Decisions as to on/off state for each dot type are carried out by means of the halftone process described previously using FIG. 21.

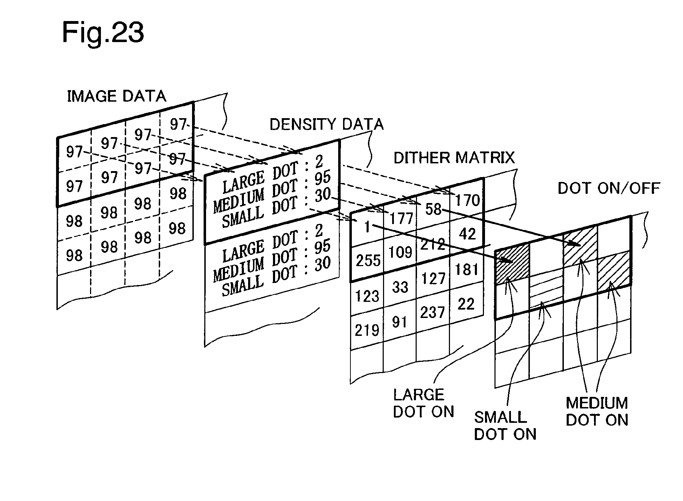

FIG. 23 is an illustration depicting conceptually the large/medium/small dot on/off state decisions for pixels within a pixel group. In the drawing, a pixel group of interest for the purpose of carrying out the halftone process is shown bordered by a heavy solid line. The pixel group is made up of eight pixels, with the image data for each pixel having the same value as the pixel group tone value (in the illustrated example, a tone value of 97). In order to decide on/off state for each dot type, i.e. large/medium/small, the image data is converted to density data for each dot. Conversion to density data is carried out by referring to the dot density conversion table depicted in FIG. 22. Here, since all of the pixels in the pixel group have identical image data, the density data for each dot type will be identical for all pixels. In the illustrated example, there is depicted a case where the tone value of the large dot density data is "2," the tone value of the medium dot density data is "95," and the tone value of the small dot density data is "30."

Next, as described with FIG. 21, the on/off state for each dot type is decided on a pixel-by-pixel basis by comparing the large dot density data, the intermediate data for medium dot use, or the intermediate data for small dot use with threshold values in the dither matrix. Here, the dither matrix threshold values used for the comparisons are threshold values established at locations corresponding to the pixel group of interest, taken from the dither matrix. For example, in the example depicted in FIG. 23, since the pixel group is situated in the upper left corner of the image, for the threshold values as well, the threshold values established in the pixel group is situated in the upper left corner of the dither matrix are used.

Of the eight threshold values established for the pixel group, for pixels for which a threshold value smaller than the large dot density data has been established, the decision will be made to form the large dot. Here, since the large dot density data has the tone value "2," the only pixel on which the large dot will be formed is the pixel for which the threshold value has been set to "1." In FIG. 23, the pixel on which it has been decided to form the large dot is indicated by fine hatching. For pixels for which a threshold value greater than the large dot density data of "2" but smaller than the intermediate data for medium dot use of "97", derived by adding the large dot density data and the medium dot density data, has been established, the decision will be made to form the medium dot. There are only two such pixels, namely, the pixel for which a threshold value of "42" has been established, and the pixel for which a threshold value of "58" has been established. In FIG. 23, the pixels on which it has been decided to form the medium dot are shown with somewhat coarser hatching. Finally, for pixels for which a threshold value greater than the intermediate data for medium dot use of "97" but smaller than the intermediate data for small dot use of "127", derived by adding the small dot density data to the intermediate data for medium dot use, has been established, the decision will be made to form the small dot. There is only one such pixel, namely, the pixel for which a threshold value of "109" has been established. In FIG. 23, the pixel on which it has been decided to form the small dot is shown with coarse hatching. As a result of deciding large dot, medium dot, and small dot on/off states in this way, in the case of a pixel group of interest with a pixel group tone value of "97," one large dot, two medium dots, and one small dot will be formed.

Where pixel group tone values differ considerably, the numbers of large dots, medium dots, and small dots formed within pixel groups will likewise differ considerably. Where pixel group tone values vary from "0" to "255," in association therewith, numbers of large dots, medium dots, and small dots will likely vary in a number of stages. Additionally, where pixel group classification numbers differ, since the dither matrix threshold values will differ as well, the manner of variation of dot count will likely vary as well. The multi-value quantization table shown in FIG. 9 has been set up by means of investigating, on a classification number-by-number basis, the behavior of stepwise change in dot count of each dot type, when pixel group tone values vary from "0" to "255."

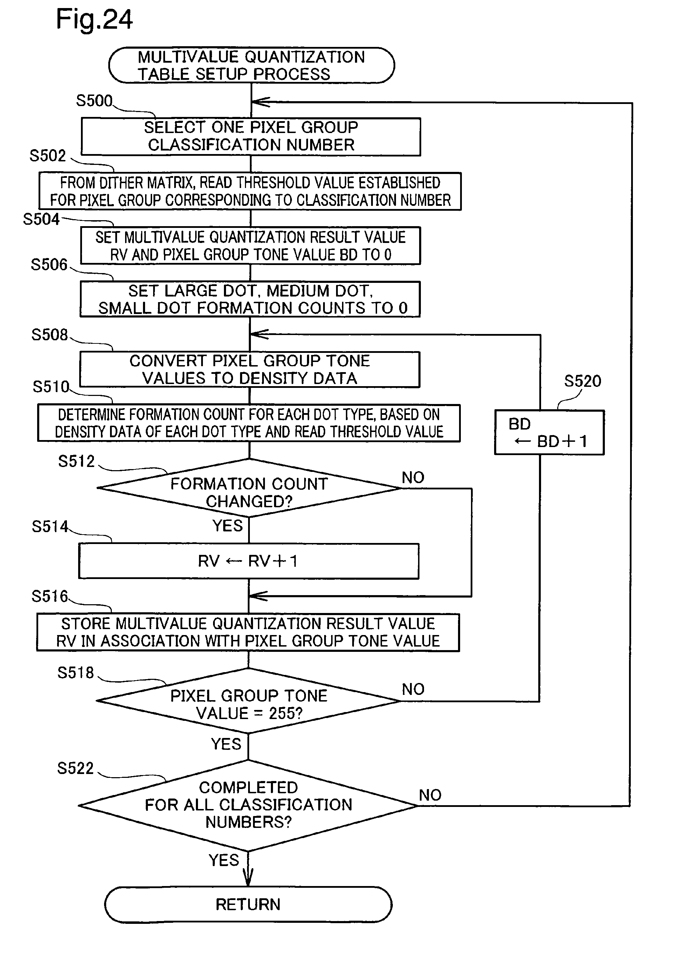

FIG. 24 is a flowchart depicting the flow of the process for setting up the multi-value quantization table. The description hereinbelow follows the flowchart. When the multi-value quantization table setup process is initiated, first, a single pixel group classification number is selected (Step S500). For example, here, classification number 1 is selected.

Next, the threshold values corresponding to the pixel group of the selected classification number are read from the dither matrix (Step S502). For example, since classification number 1 has been selected here, the eight threshold values established at the block location indicated by the number 1 in FIG. 18 (b) are read out from the dither matrix depicted by way of example in FIG. 16.

Then, the multi-value quantization result value RV and the pixel group tone value BD are set to "0" (Step S504), and the large dot, medium dot, and small dot formation counts are each set to 0 (Step S506).

Next, by referring to the dot density conversion table shown in FIG. 22, the pixel group tone value is converted to density data for the large dot, the medium dot, and the small dot (Step S508), after which, on the basis of this density data the threshold values read previously, formation counts for each dot type, i.e. large/medium/small, are determined (Step S510). Specifically, as described with FIG. 21 or FIG. 23, the number of threshold values smaller than the large dot density data is derived, and the number derived thereby is designated to be the large dot formation count. The number of threshold values greater than the large dot density data but smaller than the intermediate data for medium dot use is derived, and designated to be the medium dot formation count. Finally, the number of threshold values greater than the intermediate data for medium dot use but smaller than the intermediate data for small dot use is derived, and designated to be the small dot formation count.

It is then decided whether the formation counts for each of the dot types derived in the manner modify the formation counts established previously (Step S512). If it is decided that the formation counts are modified (Step S512: yes), the multi-value quantization result value RV is incremented by "1" (Step S514), and the multi-value quantization result value RV derived thereby is associated with the pixel group tone value BD and stored in memory (Step S516). If on the other hand it is decided that the formation counts are unchanged (Step S512: no), the multi-value quantization result value RV is not incremented, and is associated as-is with the pixel group tone value BD and stored in memory (Step 5516).

Once a multi-value quantization result value for a given pixel group tone value has been stored in memory in this way, it is decided whether the pixel group tone value BD has reached a tone value of 255 (Step S518). If a tone value of 255 has not been reached (Step S518: no), the pixel group tone value BD is incremented by "1" (Step S520), and the process returns to Step S508 whereupon the pixel group tone value BD is again converted to density data, and the series of process carried out to associate a multi-value quantization result value RV with the new pixel group tone value BD and store these in memory (Step S516). This procedure is repeated until the pixel group tone value BD reaches a tone value of 255. Once the pixel group tone value BD has reached a tone value of 255 (Step S516: yes), all multi-value quantization result values will have been established for the selected classification number.

It is then decided whether the above process has been completed for all classification numbers (Step S522), and in the event that any unprocessed classification numbers remain (Step S522: no), the process returns to Step S500, and the above process is carried out again. This procedure is repeated until it is decided that all multi-value quantization result values have been established for all classification numbers (Step S522: yes), whereupon the multi-value quantization table setup process depicted in FIG. 24 terminates.

As will be apparent from the preceding description, multi-value quantization result values are determined by means of large/medium/small dot density data derived by conversion of a pixel group tone values, and threshold values stored in the dither matrix at locations corresponding to pixel groups. Here, as regards the dot density conversion table shown in FIG. 22, since reference is made to the same table even where pixel group classification numbers differ, dot density data for pixel group tone values will be identical density data, irrespective of the classification number. However, the combination of threshold values read out from the dither matrix does vary on a classification number-by-number basis. The reason is that the dither matrix has been established with threshold values dispersed as much as possible and as randomly as possible, in order to avoid dots from being produced in a given pattern on an image, or from being produced clustered together at proximate locations so that picture quality deteriorates. Thus, the plurality of threshold values included in pixel groups, when viewed as sets, are thought to have low probability of occurring in exactly the same combination. For reasons such as this, the multi-value quantization table used for lookup in the multi-value quantization result value generation process of the present embodiment contains pixel group tone value-multi-value quantization result value correspondence relationships that differ on a classification number-by-number basis, with the number of times that multi-value quantization result values change (the number of levels of multi-value quantization shown in FIG. 10) differing by classification number as well.

C-6. Conversion Table Setup Method:

Next, the method for setting up the conversion table described previously with FIG. 12 shall be discussed. This table is a table used in the dot on/off state determination process shown in FIG. 11, for lookup for the purpose of combining multi-value quantization result values with classification numbers, and converting these to data representing dot counts to be formed in pixel groups.

As will be apparent from the multi-value quantization table setup method described previously with FIG. 24, multi-value quantization result values established in the multi-value quantization table are determined based on large/medium/small dot counts formed in pixel groups. Naturally, multi-value quantization result values are not associated directly with combinations of dot counts formed in pixel groups; rather, they can be associated with specific combinations of dot counts for the first time, by combining multi-value quantization result values with pixel group classification numbers. The reason is that multi-value quantization result values are established merely by extracting whether large/medium/small dot counts have changed when pixel group tone value is increased from a tone value of 0 to a tone value of 255, while omitting information indicating in what manner specific combinations of dot counts have changed.

That said, if the classification number of a pixel group is known, a combination of specific counts of each type of dot can be identified from the corresponding iteration of change of the pixel group, i.e. from the multi-value quantization result value. Consequently, on a classification number-by-number basis, specific counts of each type of dot that resulted in the multi-value quantization result value being established are derived, and code data corresponding to the dot count combination derived thereby is stored in memory, in association with the multi-value quantization result value. The conversion table shown in FIG. 12 has been established by carrying out this procedure for all classification numbers.

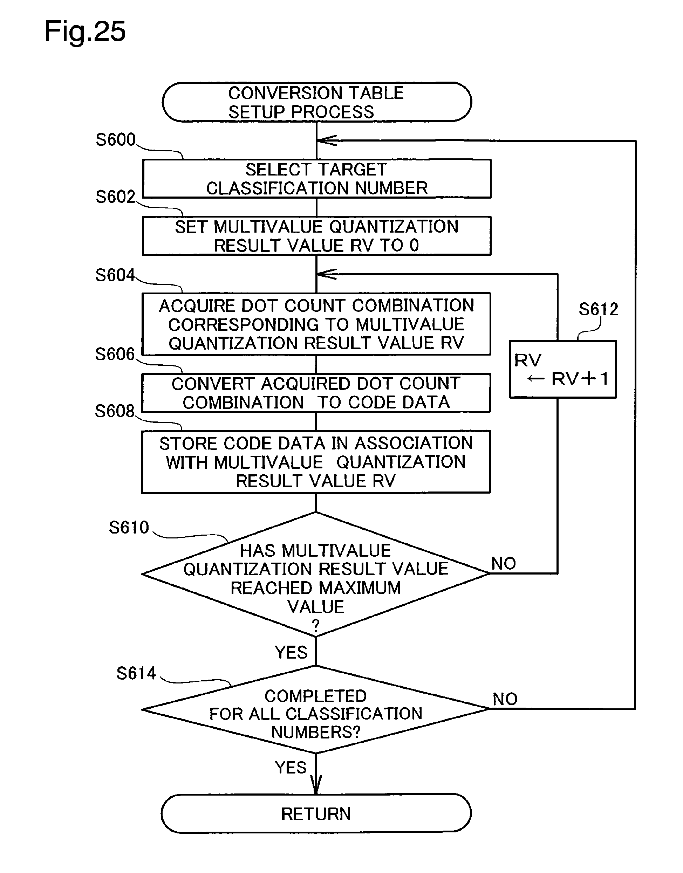

FIG. 25 is a flowchart depicting the flow of a process for setting up the conversion table. The description hereinbelow will follow the flowchart. When the conversion table setup process is initiated, first, a single classification number is selected for processing (Step S600), and the multi-value quantization result value RV is set to 0 (Step S602).

Next, the large/medium/small dot counts corresponding to the multi-value quantization result value RV are acquired (Step S604). For example, assuming the multi-value quantization result value was "N," for the pixel group of that classification number, the large/medium/small dot on/off states are decided while varying the pixel group tone value from "0" to "255," and the large dot, medium dot, and small dot counts when the dot formation count has changed to the N-th iteration is acquired.

The dot count combination acquired in this way is converted to code data (Step S606). Conversion from dot count combination to code data is carried out by looking up the correspondence relationship table shown in FIG. 13. Next, the code data derived thereby is associated with the multi-value quantization result value and stored in memory (Step S608), after which it is decided whether the maximum multi-value quantization result has been reached for the classification number being processed (Step S610). Specifically, since the maximum value of the multi-value quantization result differs depending on classification number as described with FIG. 9, it is decided whether the maximum multi-value quantization result has been reached for the classification number being processed.

In the event of a decision that the multi-value quantization result maximum value has not been reached (Step S610: no), the multi-value quantization result value RV is incremented by "1" (Step S612). The routine then returns to Step S604, and after acquiring dot counts associated with the new multi-value quantization result value RV, the subsequent series of processes is repeated. This procedure is repeated, and once it is decided that the maximum multi-value quantization result has been reached (Step S610: yes), all of the data for that classification number will have been established in the conversion table.

Now, it is decided whether this same process has been carried out for all classification numbers (Step S614). In the event that any unprocessed classification numbers remain, the routine then returns to Step 600, a new classification number is selected, and the series of processes described above is carried out for this classification number. Once it is decided that the process has been completed for all classification numbers ((Step S614: yes), all of the data of the conversion table will have been established, so the process shown in FIG. 25 terminates.

The color printer 200 of Embodiment 1 has the conversion table set up in the above manner stored in memory in the ROM in the control circuit 206. In the dot on/off state determination process depicted in FIG. 11, multi-value quantization result values are converted to count data by means of looking up this conversion table.

C-7. Order Value Matrix Setup Method:

Next, the method for setting up the order value matrix shown by way of example in FIG. 14 shall be discussed. The order value matrix is a matrix that establishes a sequence for forming dots on pixels in a pixel group. In the dot on/off state determination process depicted in FIG. 11, the order value matrix corresponding to a pixel group is loaded, and pixels on which the large dot, the medium dot, and the small dot will be formed are determined according to the sequence established in the matrix.

Like the multi-value quantization table discussed earlier, the order value matrix is set up on the basis of the method disclosed in Japanese Patent No. 3292104 (method deploying the dither method to enable dot on/off state decisions to be made on a pixel-by-pixel basis for multiple types of dots differing in size). Specifically, as described previously, in the case of setting up the multi-value quantization table, on the assumption that all pixels within a pixel group have identical image data (i.e. the pixel group tone value), the pixel group tone value is varied from "0" to "255" while determining the large/medium/small dot counts formed in the pixel group, taking note of the change in the numbers of dots formed at this time, to establish the multi-value quantization result values. As shown in FIG. 12, by combining the multi-value quantization result value with the classification number, the large/medium/small dot counts formed in the pixel group can be restored. However, information as to which pixels in the pixel group dots of each type are formed on is missing, and cannot be ascertained from the multi-value quantization result value or classification number. The order value matrix can be thought of as storing information relating to the pixel positions at which dots of each type are formed in a pixel group. Specifically, by applying the method taught in Japanese Patent No. 3292104, it is possible to determine not only the numbers in which dots of each type are formed, as described previously using FIGS. 21 to 23, but also the pixel positions at which dots of each type are formed in the pixel group. In the present embodiment, this method can be broken down into two elements, and thought of as causing information relating to numbers in which dots of each type are formed to be reflected primarily in multi-value quantization result values (more accurately, multi-value quantization result value/classification number combinations), while causing information relating to the pixel positions at which dots of each type are formed to be reflected in the order value matrix. In actual practice, such an order value matrix can be set up relatively easily.

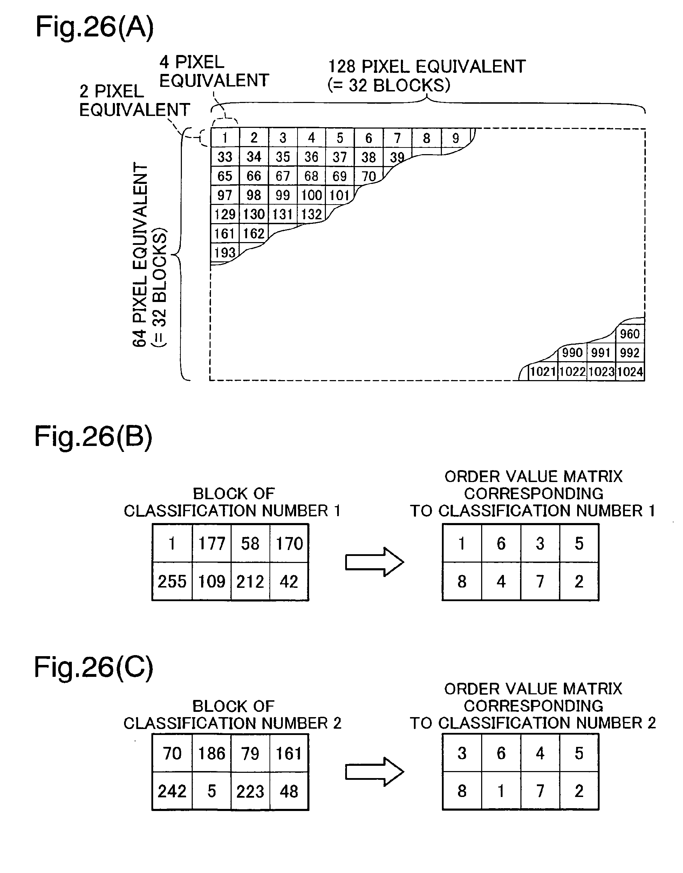

FIG. 26 illustrates specifically the method for setting up the order value matrix. The following description makes reference to the drawing. During setup of the order value matrix, first, the dither matrix is divided into a plurality of blocks having the same size as the pixel groups, and each block is assigned a serial number. As described previously with FIG. 18, these serial numbers are simply the pixel group classification numbers. FIG. 26 (a) is an illustration depicting conceptually a dither matrix divided into a plurality of blocks. Where the dither matrix is assumed to have the size depicted in FIG. 16 (i.e.128 pixels in the main scanning direction and 64 pixels in the sub-scanning direction), since a single pixel group has a size of four in the main scanning direction and two pixels in the sub-scanning direction, as shown in FIG. 26 (a), the dither matrix will be divided into 32 blocks in both the main scanning direction and the sub-scanning direction, so that overall it is divided into 1024 blocks assigned classification numbers from 1 to 1024.

Once the dither matrix has been divided into a plurality of blocks in this way, a single order value matrix is generated from each block. FIG. 26 (b) illustrates by way of example generation of an order value matrix from the block of classification number 1. In the left half of FIG. 26 (b) are shown the threshold values of the dither matrix included in the block of classification number 1. As discussed previously referring to FIG. 23, dots are formed in sequence starting from the pixel for which the smallest threshold value has been established. Consequently, the pixel on which a dot will be formed first in the first block depicted in FIG. 26 (b) can be thought of as the pixel for which the threshold value of "1" has been established. Accordingly, an order value of "1" will be established for that pixel. Similarly, the pixel on which a dot will be formed second can be thought of as the pixel for which the second smallest threshold value of "42" has been established. Accordingly, an order value of "2" will be established for that pixel. By determining order values of "1" to "8" sequentially in this way, starting from the pixel for which the smallest threshold value has been established in the block, the order value matrix of classification number 1 shown in the right half of FIG. 26 (b) may be derived.

FIG. 26 (c) similarly depicts an order value matrix of classification number 2, derived by establishing order values of "1" to "8" in sequence starting from the pixel for which the smallest threshold value has been established in the block. By carrying out the above procedure for all blocks from classification number "1" to "1024" shown in FIG. 26 (a), order value matrices numbered from classification number "1" to "1024" can be derived.

The color printer 200 of Embodiment 1 has order value matrices set up in this way, associated with pixel group classification numbers and stored in memory in the ROM housed in the control circuit 260. When carrying out the dot on/off state determination process depicted in FIG. 11, the matrices corresponding to the pixel group classification numbers are loaded from among the order value matrices stored in memory. C-8: Basic Principle Enabling Appropriate Determination of Dot On/Off State from Multi-value Quantization Result Values:

As discussed previously, in the image printing process of Embodiment 1, multiple pixels are grouped into pixel groups, and by looking up the multi-value quantization table shown by way of example in FIG. 9, multi-value quantization result values are determined on a pixel group-by-group basis. Next, while looking up the conversion table shown by way of example in FIG. 12 and the order value matrix shown by way of example in FIG. 14, pixel locations for forming each type of dot in a pixel group are determined on the basis of the multi-value quantization result value. Even where pixel locations for forming dots have been determined in this way, an image of high picture quality in which dots are dispersed appropriately can be output. Additionally, despite the fact that relatively small groups of pixels are grouped into pixel groups (groups of eight in the present embodiment) for processing, it is nevertheless possible to achieve good dot distribution, such as that attained through the use of a large-scale dither matrix with a pixel count exceeding a thousand, such as a blue noise mask or green noise mask. The basic principle for why this is possible shall be discussed below.

Where the technology taught in the aforementioned Japanese Patent No. 3292104 is employed, by converting image data to large dot density data, intermediate data for medium dot use, and intermediate data for small dot use, and then comparing these with threshold values established in the dither matrix as described previously with FIG. 21 and FIG. 22, dot on/off states for large, medium, and small dots can be decided. Additionally, where the dither matrix looked up at this time is a matrix that has taken dispersion into consideration, such as one typified by a blue noise mask or green noise mask, high quality images with good dispersion of dots can be obtained.

In typical image data, similar (or identical) tone values tend to be assigned to neighboring pixels. In recent years, demand for higher picture quality has been associated with increasingly high resolution for image data, and the tendency for similar or identical tone values to be assigned to neighboring pixels is increasingly noticeable at higher image data resolution. Consequently, even where multiple pixels are grouped together into pixel groups and large/medium/small dot on/off state decisions are made on the assumption that all of the pixels in a pixel group have identical image data, as described previously referring to FIG. 23, in actual practice it is rare for any difference in picture quality to result therefrom.

Here, in the multi-value quantization result value generation process of the present embodiment discussed previously, multi-value quantization result values dependent on pixel group classification number are generated. In combination with the pixel group classification numbers, the multi-value quantization result values generated in this manner constitute data indicating the count of each type of dot formed in pixel groups. For the pixel group shown in FIG. 23, there is generated a multi-value quantization result value that, in combination with the pixel group classification number, indicates that the large dot, the medium dot, and the small dot are formed in numbers of one, two, and one respectively.

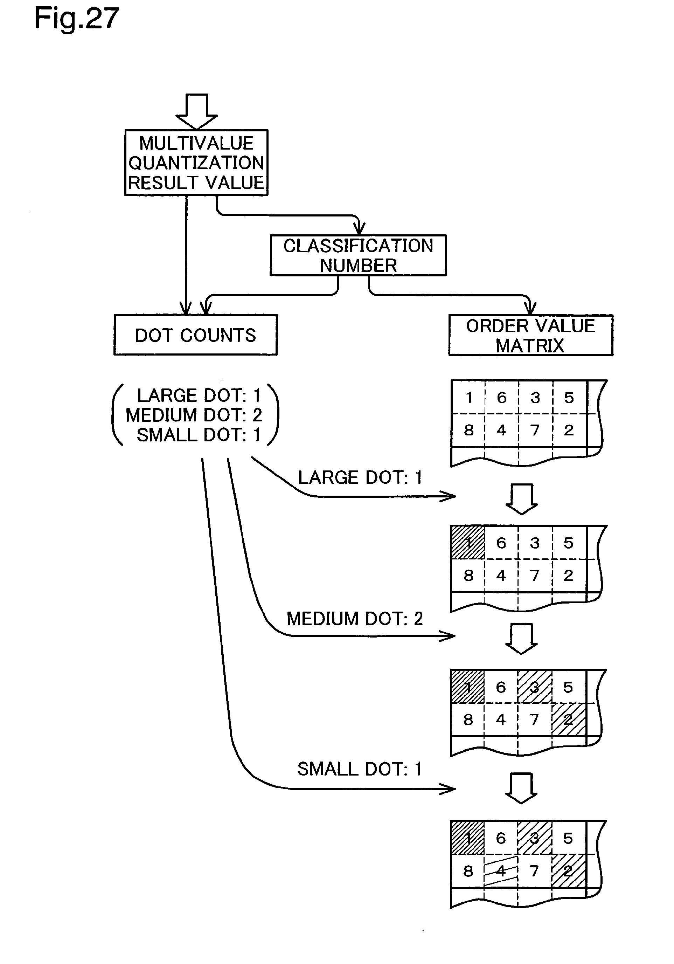

In the dot on/off state determination process of Embodiment 1 discussed previously, when such a multi-value quantization result value is received, the on/off states for large/medium/small dots are determined for each pixel in the pixel group. FIG. 27 is an illustration depicting conceptually the general flow of a process for receiving a multi-value quantization result and determining large/medium/small dot on/off states for each pixel in a pixel group, in the dot on/off state determination process discussed previously. As illustrated, when a multi-value quantization result value is received, the pixel group classification number represented by the result value is derived, after which the numbers of large/medium/small dot formed are acquired on the basis of the multi-value quantization result value and the classification number. The stored matrix associated with the classification number is read out from among the order value matrices that have been stored in advance. The specific method for deriving the classification number will be described later.

Assuming for the purpose of the following discussion that the pixel group is the one depicted in FIG. 23, since the pixel group is situated at the upper left corner of the image, the number 1 is derived as the classification number. By combining the multi-value quantization result value of this pixel group with the classification number derived in this way, it is ascertained that one large dot, two medium dots, and one small dot are formed in the pixel group. In order to determine on which pixels in the pixel group these dots should be formed, the order value matrix of classification number 1 is looked up. This order value matrix is a order value matrix generated from the relevant portion of the dither matrix used for the dot on/off state decisions in FIG. 23, i.e. the relevant portion used for deciding the dot on/off states for each pixel in the pixel group.

On the basis of the large/medium/small dot counts derived in this way and the order value matrix, pixel locations for forming these dots in the pixel group are determined. The specific method for determining pixel locations has been discussed previously with reference to FIG. 15 and need not be discussed again here, except to note that as a result, a large dot is formed on the pixel of the order value 1, medium dots are formed on pixels of the order values 2 and 3, and a small dot is formed on the pixel of the order value 4. In FIG. 27, employing the convention of FIG. 15, the pixel on which the large dot is formed is shown with fine hatching, the pixels on which the medium dots are formed are shown with somewhat coarser hatching, and the pixel on which the small dot is formed is shown with coarse hatching. From a comparison of the dot distribution derived in this manner with the dot distribution derived through dot on/off state decisions on a pixel-by-pixel basis shown in FIG. 23, it will be apparent that the two dot distributions match completely.

Specifically, even where only multi-value quantization result values dependent on classification number are received, by determining dot on/off state using the method discussed above, it is possible to derive a dot distribution identical to that derived where large/medium/small dot on/off states are decided on a pixel-by-pixel basis while applying the aforementioned Japanese Patent No. 3292104 and referring to the dither method.

Additionally, the multi-value quantization table looked up in order to generate multi-value quantization result values has been set up on the basis of the dither matrix (see FIG. 25). Similarly, the conversion table and the order value matrices looked up in the process of determining dot on/off states from multi-value quantization result values have been set up on the basis of the dither matrix (see FIGS. 25, 26). Consequently, where a blue noise mask or green noise mask is used as the dither matrix for setting up these tables, it is possible to obtain images of high picture quality, such as could be obtained only through the use of such masks.

C-9. Method of Determining Classification Number from Pixel Group Location:

Here, the method for deriving the classification number of a pixel group from the location of the pixel group on an image shall be described briefly.

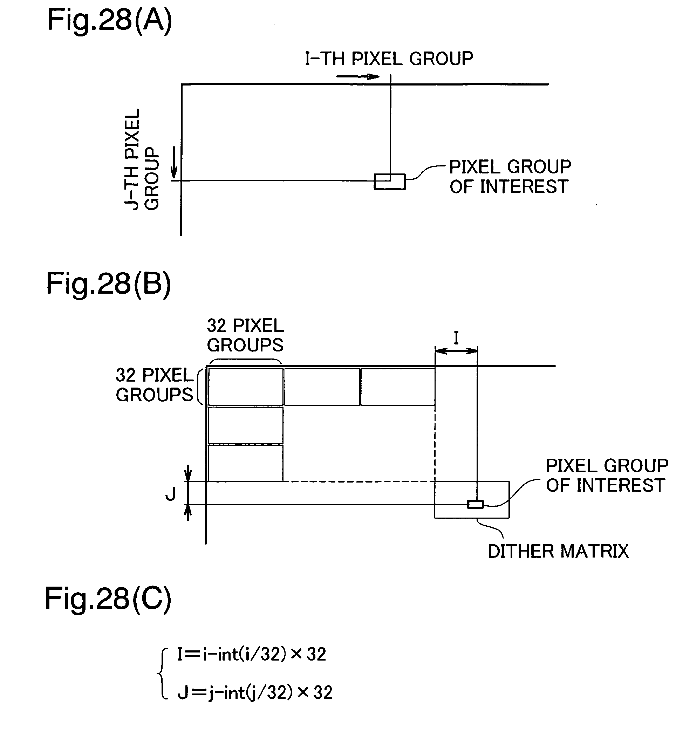

FIG. 28 illustrates the method for determining classification number on the basis of pixel group location in an image. As shown in FIG. 28 (a), the pixel group currently targeted is situated at the location of the i-th pixel group in the main scanning direction and the j-th pixel group in the sub-scanning direction, with reference to the uppermost left corner of the image. Let this pixel group location is represented by the coordinates (i, j). Since the size of the dither matrix is typically not large like the image, as discussed previously with reference to FIG. 19 (b), the dither matrix is used repeatedly while moving it across the main scanning direction.

Since a single dither matrix contains 32 blocks each in the main scanning and sub-scanning directions (see FIG. 18 (b)), where the location of a pixel group of interest is designated as row I, column J in the dither matrix,
I and J can be derived with the following equations:

$$I = u - \text{int}\,(i/32) \times 32 + 1$$

$$J = j - \text{int}\,(j/32) \times 32 + 1$$

Here, int is the aforementioned operator representing rounding off to the decimal point to give an integer. Consequently, by deriving I and J through the application of the above equations to the pixel group coordinates (i, j), it is ascertained that the pixel group is situated at row I, column J in the dither matrix. Thus, the classification number can be derived from:

$$I + (J - 1) \times 32 \qquad \ldots (2)$$

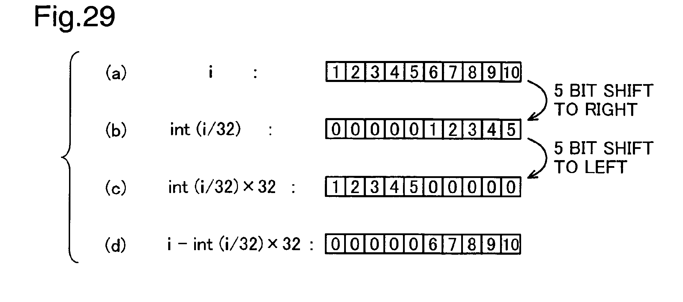

The values I, J representing the location of the pixel group in the dither matrix can also be derived extremely simply, even without performing the calculations discussed above, simply by extracting data of prescribed bits from the binary representation of i, j. FIG. 29 illustrates specifically the method for calculating location of a pixel group in the dither matrix, from the coordinate values (i, j) of a pixel group. FIG. 29 (a) depicts conceptually data expressing the numerical value i in 10-bit binary representation. In FIG. 29 (a), in order to identify each bit, they are shown assigned serial numbers from 1 to 10, starting from the most significant bit towards the least significant bit.

When deriving the numerical value i which indicates the pixel group location, first, the expression int (i/32) is calculated. This calculation can be accomplished by bit-shifting the binary data of i to the right by the equivalent of 5 bits (see FIG. 29 (b)). Next, the expression int (i/32) $\times$ 32 is calculated. This calculation can be accomplished by bit-shifting the binary data of int (i/32) to the left by the equivalent of 5 bits (see FIG. 29 (c)). Finally, by subtracting int (i/32) $\times$ 32 from the numerical value i, the desired numerical value I can be derived. Since this operation ultimately represents nothing more than extracting only the five lower order bits from the binary data of the numerical value i, it is possible to derive the numerical value I extremely simply. Similarly, the numerical value J can be derived extremely simply, by extracting only the five lower order bits from the binary data of the numerical value j. Where the numerical values I and J have been derived in this way, classification number can now be calculated using the aforementioned equation (2).

The particulars of the multi-value quantization result value generation process (Step S106 of FIG. 6) and the dot on/off state determination process (Step S108 of FIG. 6) performed in the image printing process of Embodiment 1 have been described in detail above. In the multi-value quantization result value generation process described above, pixels are grouped together in prescribed number to generate a pixel group, and a result value derived by multi-value quantization of the pixel group tone value of the group is generated. During generation of multi-value quantization result values, generation can take place extremely quickly, by means of lookup in the multi-value quantization table. Additionally, the multi-value quantization result values derived in this way are result values dependent on pixel group classification number, but since the amount of data is considerably less than data representing dot on/off state on a pixel-by-pixel basis, the data can be output very quickly from the computer 100 to the color printer 200. That is, in the multi-value quantization result values generation process described above, it is possible for multi-value quantization result value generation and output to be executed quickly, and possible for images to printed out commensurately faster.

Additionally, the process for generating multi-value quantization result values is simply a process of lookup in the multi-value quantization table, and since the classification numbers and pixel group tone values used for lookup in the multi-value quantization table can also be derived by extremely simple processes, processing can be carried out at practicable speed, even when using a device not equipped with high data processing capability like that of a computer 100.

Additionally, since the majority of process content consists of the extremely simple process of lookup in a table, it is a simple matter for it to realized through hardware using an IC chip incorporating a dedicated logic circuit, rather than through software using the CPU, and by so doing to make possible extremely fast processing. Consequently, even in the case of a direct connection between a digital camera 120 or other device which generates image data and the color printer 200, images can be printed quickly by executing the multi-value quantization result value generation internally within the digital camera 120 of the color printer 200.

Meanwhile, in the dot on/off state determination process performed in the image printing process of Embodiment 1, when a multi-value quantization result value is received, dot on/off states are determined for each pixel in the pixel group. During determination of dot on/off states, the result value is converted to a combination of dot counts, by means of lookup in the conversion table. Then, by lookup in an order value matrix, locations for forming each type of dot are determined. That is, by means of lookup in the conversion table and the order value matrix, locations for forming each type of dot can be determined quickly.

Normally, as the number of dots it is possible to form increases, the process for determining the locations at which each type of dot will be formed becomes increasingly complex. With the dot on/off state determination process of Embodiment 1, on the other hand, even with an increased number of dot types, the basic process content, namely that of lookup in the conversion table and the order value matrix, remains the same, and the process does not become any more complex. In this respect as well, the dot on/off state determination process of Embodiment 1 can be said to afford simpler and faster processing. Also, as with the multi-value quantization result value generation process described earlier, in the dot on/off state determination process of the present embodiment, since the majority of process content consists of the extremely simple process of lookup in a table, it is a simple matter for it to realized through hardware using an IC chip incorporating a dedicated logic circuit, rather than through software using the CPU, and by so doing to make possible extremely fast processing.

C-10. Variation Examples:

C-10-1. Variation Example 1:

In the multi-value quantization result value generation process of Embodiment 1 described hereinabove, a multi-value quantization table storing a corresponding multi-value quantization result values for each pixel group tone value from a tone value of 0 to a tone value of 255 is used for lookup. However, since multi-value quantization result values simply increase in stepwise manner in association with increasing pixel group tone values, it will be possible to derive multi-value quantization result values for pixel group tone values provided merely that those pixel group tone values at which multi-value quantization result values change have been stored in memory. In the image printing process of Variation Example 1 described hereinbelow, the multi-value quantization result value generation process of such a variation example is carried out.

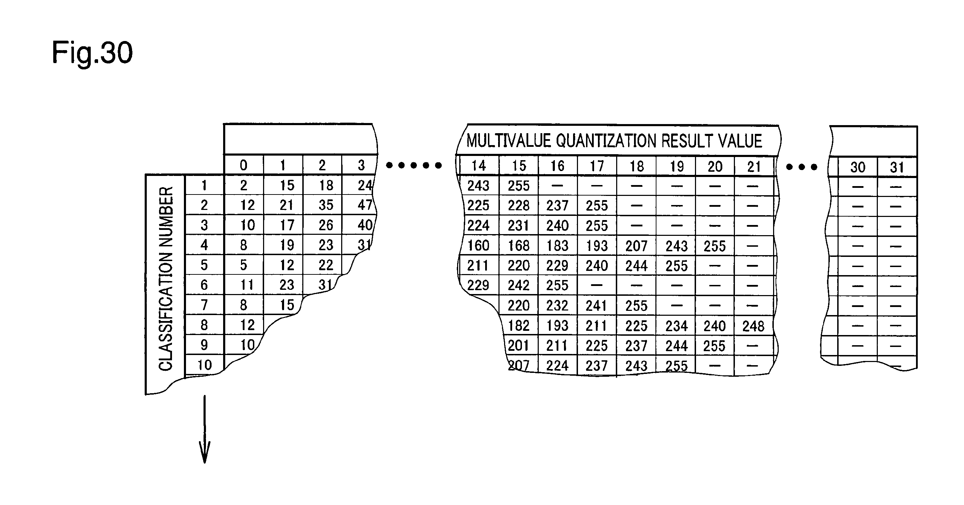

FIG. 30 is an illustration depicting conceptually a threshold value table referred to in the multi-value quantization result value generation process of the variation example. As shown in the drawing, in the threshold value table, threshold values corresponding to multi-value quantization result values are established on a classification number-by-number basis. This threshold value represents the largest pixel group tone value affording a particular multi-value quantization result value, as the pixel group tone value is increased from a tone value of 0 to a tone value of 255. The discussion shall take the pixel group of classification number 1 as an example. For classification number 1, a threshold value of "2" is established for a multi-value quantization result value of "0." This represents that, for a pixel group of classification number 1, the multi-value quantization result value will be "0" as long as the pixel group tone value is within the range of "0" to "2." A threshold value of "15" is established for a multi-value quantization result value of "1." This represents that, for a pixel group of classification number 1, the multi-value quantization result value will be "1" as long as the pixel group tone value is within the range of "3" to "15." Similarly, a threshold value of "243" is established for a multi-value quantization result value of "14." This represents that the multi-value quantization result value will be "15" as long as the pixel group tone value is within the range of "244" to "255," and that for a pixel group of classification number 1, the maximum value for the multi-value quantization result value is "15."

In FIG. 30, a threshold value for each classification number is established in association with the respective multi-value quantization result value. However, simple threshold value sets may be stored on a classification number-by-number basis, without being associated with multi-value quantization result values. In this case, a multi-value quantization result value can be derived by counting the number of threshold values smaller than a particular pixel group tone value. This shall be described, again taking the example of the pixel group of classification number 1. For example, let the pixel group tone value be "20." In the set of threshold values established for classification number 1, there are three threshold values smaller than the tone value of 20, namely, "2," "15," and "18." From this it may be determined that the multi-value quantization result value for the pixel group tone value of 20 is "3."

In the multi-value quantization result value generation process of the variation example described above, once a pixel group tone value and a classification number for a pixel group have been derived, a multi-value quantization result value is generated by means of lookup in the threshold value table depicted in FIG. 30. This threshold value table can store a smaller amount of data than does the multi-value quantization table used for lookup in the multi-value quantization result value generation process of Embodiment 1 (see FIG. 9). Thus, as compared to the process of Embodiment 1, the multi-value quantization result value generation process of the variation example is able to use less memory capacity. In contrast, in the multi-value quantization result value generation process of Embodiment 1, multi-value quantization result values can be derived immediately simply by lookup from classification numbers and pixel group tone values in the multi-value quantization table. That is, it is possible for multi-value quantization to be faster, since there is no need to compare pixel group tone values with threshold values as in the process of the variation example.

C-10-2. Variation Example 2:

In the dot on/off state determination process of Embodiment 1 described previously, when a pixel group classification number and a multi-value quantization result value are received, these are initially converted to data representing the number of each type of dot to be formed in the pixel group. Then, when deciding the dot on/off state, it is determined for each dot type whether a dot or dots should be formed on any pixel or pixels in the pixel group. For example, in the flowchart shown in FIG. 11, the dot on/off state is decided for each dot type, first deciding the dot on/off state for the large dot, then deciding for the medium dot, and finally deciding for the small dot. However, the method of deciding dot on/off state is not limited to this method. For example, selecting one pixel at a time within a pixel group, it could be decided whether to form a large, medium, or small dot thereon, or to form no dot at all. In the image printing process of Variation Example 2 described hereinbelow, the dot on/off state determination process of such a variation example is carried out.

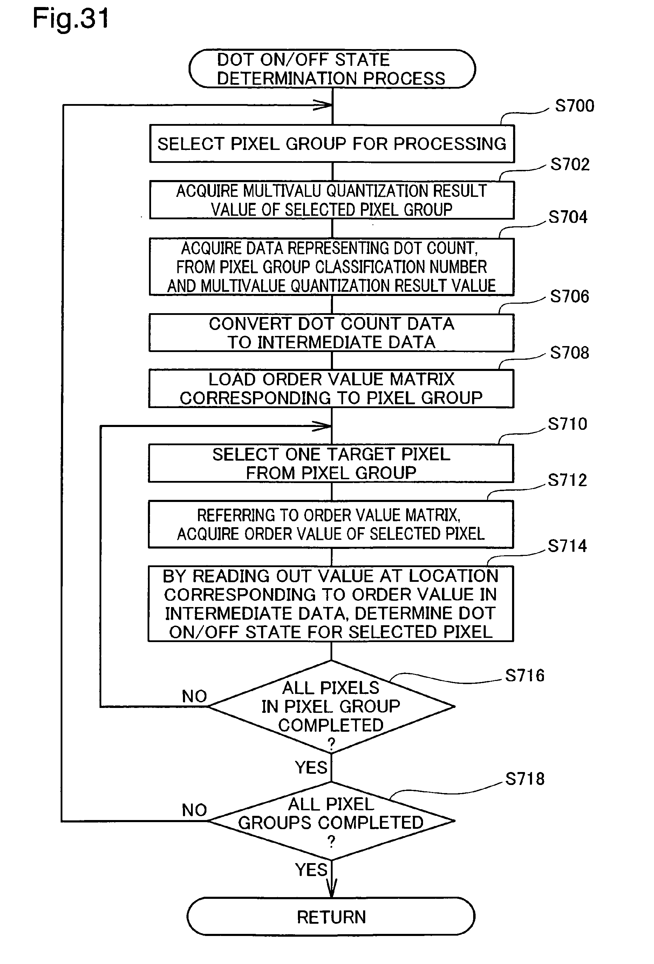

FIG. 31 is a flowchart depicting the flow of the dot on/off state determination process of the variation example. The description of the dot on/off state determination process of such a variation example hereinbelow shall follow the flowchart.

As in the process of Embodiment 1 described previously, in the dot on/off state determination process of the variation example, when the process is initiated, first, one pixel group is selected for processing (Step S700). Next, the multi-value quantization result value of the selected pixel group is acquired (Step S702), and on the basis of the pixel group classification number and the multi-value quantization result value, data representing dot counts to be formed in the pixel group is acquired (Step S704). The dot count data can be acquired quickly, from the combination of the classification number and the multi-value quantization result value, by looking up in the conversion table shown in FIG. 12.

In the dot on/off state determination process of the variation example, the dot count data acquired in this way is initially converted to intermediate data of 16-bit length (Step S706). Specifically, in the conversion table of FIG. 12, in order to reduce the amount of data it is represented as code data of 8-bit length; in the dot on/off state determination process of the variation example, however, it is initially converted to intermediate data represented in a format that enables the dot on/off state to be determined more easily. Here, reason for the 16-bit data length of the intermediate data is that the pixel count in the pixel groups is eight, and the dot on/off state for each pixel can be represented on two bits. In other words, with each two bits of the intermediate data constituting one set, the data represents the dot count with eight sets of data corresponding to the pixel count. Where the dot count to be formed in a pixel group is represented in this way, association with pixels becomes easy (as will be described later), and thus it is possible to determine dot on/off states easily. In the dot on/off state determination process of the variation example, correspondence relationships of dot counts with intermediate data are pre-stored in memory, and in Step S706, the intermediate data is acquired by looking up these correspondence relationships.

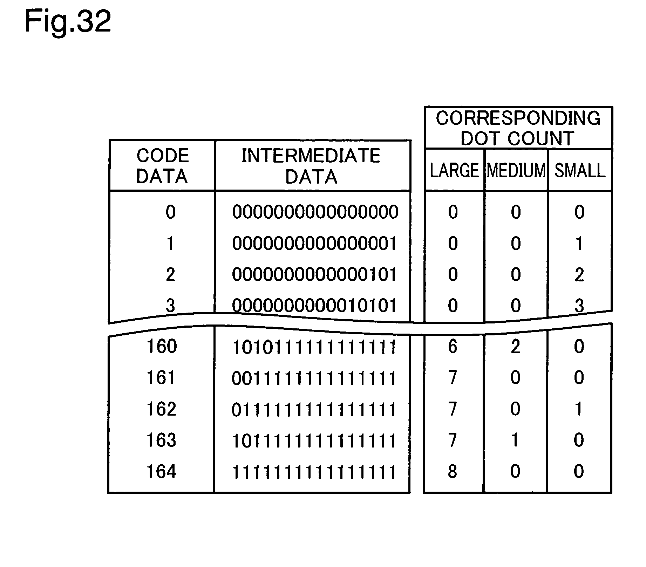

FIG. 32 is an illustration depicting a correspondence relationship table in which intermediate data is associated with code data representing dot counts. Since code data like that described above is associated with combinations of dot counts for each dot type (see FIG. 13), where converted to a representation format in which dot type is represented in sets of 2 bits each, and these bit sets are arrayed in a number corresponding to the dot count, the result is 16-bit data. The intermediate data of 16-bit data length is data derived by conversion of the code data representation format in this way.

For example, code data of "1" represents the combination of zero large dots, zero medium dots, and one small dot. For reference, the dot count combinations represented by the respective code data are shown at left in FIG. 32. Where the 2-bit data representing the small dot is "01," the 16-bit data corresponding to code data of "1" will include only one "01" set, with the other seven sets of 2-bit data being "00." 2-bit data of "00" is data representing that no dot is formed.

Similarly, code data of "163" represents the combination of seven large dots, one medium dot, and zero small dots. Where the 2-bit data representing the large dot is "11" and the 2-bit data representing the medium dot is "10," the 16-bit data corresponding to code data of "163" will include seven sets of the 2-bit data "11" and one set of the 2-bit data "10."

The 2-bit data is established right-aligned in the sequence: large dot, medium dot, small dot. For example, where the dot count combination is one large dot, two medium dots, and three small dots, in the eight sets of 2-bit data, one set of the 2-bit data "11" representing the large dot will be established at the right end; continuing to the left thereof, there will be established two sets of the 2-bit data "10" representing the medium dot; continuing further to the left thereof, there will be established three sets of the 2-bit data "01" representing the small dot; and in the remaining two sets there will be established the 2-bit data "00" representing that no dot is to be formed. The 2-bit data could be left-aligned instead. That is, it would be acceptable for the data to be established from the left end in the sequence: large dot, medium dot, small dot.

In S706 of the dot on/off state determination process of the variation example shown in FIG. 31, the process for converting data representing dot counts to intermediate data is carried out by means of looking up the correspondence relationships shown in FIG. 32. In the preceding description, once a combination of a classification number and a multi-value quantization result value has been converted to 8-bit code data by means of lookup in the conversion table shown in FIG. 12, the code data is converted to 16-bit intermediate data on the basis of the correspondence relationships shown in FIG. 32. Since there is a one-to-one correspondence between the code data and the intermediate data, it would be possible to establish 16-bit intermediate data rather than 8-bit code data in the conversion table shown in FIG. 12, and to acquire 16-bit intermediate data directly on the basis of the pixel group classification number/pixel group tone value combination. While this would mean a larger amount of data in the conversion table, the intermediate data could be derived quickly.

Once the intermediate data has been acquired in the above manner, the order value matrix corresponding to the pixel group is loaded (Step S708), a single pixel is selected for determination of dot on/off state from within the pixel group (Step S710), and the order value established in the order value matrix for the selected pixel location is acquired (Step S712).

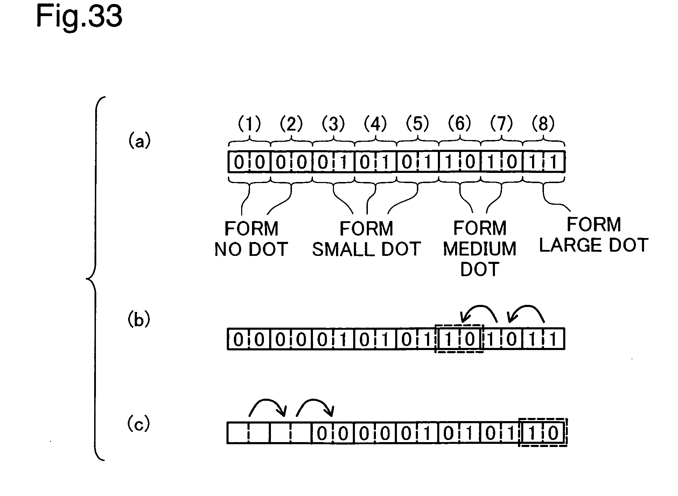

Next, from the previously acquired intermediate data, the 2-bit data established at the location corresponding to the order value is read out, in order to determine the dot on/off state for the selected pixel (Step S714). FIG. 33 is an illustration depicting determination of dot on/off state by means of reading out at data at a location corresponding to an order value in the intermediate data. FIG. 33 (a) shows an example of intermediate data derived by conversion of data for dot counts to be formed in a given pixel group. As mentioned previously, the intermediate data is data of 16-bit length, composed of eight sets of 2-bit data. The intermediate data shown in FIG. 33 (a) includes one set of the 2-bit data "11" representing the large dot, two sets of the 2-bit data "10" representing the medium dot, three sets of the 2-bit data "01" representing the small dot, and two sets of the 2-bit data "00" representing that no dot is to be formed, with the 2-bit data having been established right-aligned in the sequence: large dot, medium dot, small dot.

Let the order value of the pixel for which dot on/off state is being determined be "3." In this case, the type of dot to be formed on the pixel of order value 3 can be determined by reading out the 2-bit data established in the third set from the right in the intermediate data. FIG. 33 (b) depicts conceptually reading out of the 2-bit data in the third set from the right end of the intermediate data. In the illustrated example, since the read out 2-bit data is "10," is it decided to form a medium dot on this pixel. If the order value had been "1," the 2-bit data established at the right end of the intermediate data would be read out, and it would be decided to form a large dot.

In this way, in the dot on/off state determination process of the variation example, dot on/off states can be determined by an exceptionally simple procedure, namely, of reading out from the intermediate data 2-bit data that has been established at locations corresponding to the order values. The reason for this is as follows. First, in the intermediate data, 2-bit data representing the large dot, medium dot, and small dot is established right-aligned. Meanwhile, in the process for determining large/medium/small dot on/off states using the dither process as illustrated in FIG. 21 or FIG. 23, dot on/off states are determined in the sequence large dot, medium dot, small dot. Consequently, by reading the 2-bit data from the intermediate data sequentially starting from the right end, a string of 2-bit data representing the large dot, medium dot, small dot can be derived in the same sequence as that in which pixel locations for forming each dot type have been determined through application of the method described previously using FIG. 21 or FIG. 23.

In the method described previously using FIG. 21 or FIG. 23, dots are formed sequentially starting with the pixel with the smallest threshold value in the dither matrix. Meanwhile, the order values established in the order value matrix represent the sequence starting with the smallest threshold value in the dither matrix. Consequently, the order values match the sequence of dot formation, when dot on/off states are decided using the method described previously using FIG. 21 or FIG. 23.

Thus, once the order value of a targeted pixel is known, it can be ascertained in what position in the sequence a dot will have been formed on that pixel in the pixel group through application of the method of FIG. 21 or FIG. 23; and by counting up from the right end of the intermediate data and reading out the 2-bit data of the set corresponding to the order number, the dot on/off state decision result obtained through application of the method of FIG. 21 or FIG. 23 can be ascertained.

In the preceding discussion, the location for reading out 2-bit data from the intermediate data changes depending on the order value. However, it would be acceptable, instead of changing the readout location from the intermediate data, to have the data readout location be fixed, and to shift the intermediate data by the equivalent of a number of sets, which number corresponds to the order value. Dot on/off states can be determined in this manner as well. FIG. 33 (c) depicts conceptually determination of dot on/off state by means of shifting the intermediate data in this way. In the illustrated example, on the assumption that the 2-bit data located at the right end of the intermediate data is to be read out, the intermediate data is shifted rightward, by a number of sets corresponding to the order value of the pixel (specifically, a number of sets equal to one less than the order value). As will be apparent from a comparison of FIG. 33 (b) with FIG. 33 (c), with either operation, the 2-bit data established at the same location in the intermediate data will be read out. Since the process for shifting the data by a prescribed number of bits can be carried out relatively quickly, by shifting the intermediate data in this way, the 2-bit data at the location corresponding to the order value can be read out quickly, and the dot on/off state for the pixel of interest can be determined quickly.

Once the dot on/off state for the pixel of interest has determined by means of reading out from the intermediate data the 2-bit data at the location corresponding to the order value (Step S712 of FIG. 31), it is then decided whether the dot on/off state has been determined for all pixels within the pixel group currently being processed (Step S714). Then, in the event that there are any pixels whose dot on/off state has not yet been determined remaining in the pixel group (Step S714: no), the routine returns to Step S710, a new pixel is selected, and the series of processes described above are performed for the selected pixel, and it is again decided whether the dot on/off state has been determined for all pixels within the pixel group (Step S716). The procedure is repeated until it is decided that dot on/off state has been determined for all pixels (Step S716: yes), whereupon it is now decided whether the dot on/off state has been determined for all pixel groups in the image (Step S718). If any unprocessed pixel groups remain (Step S718: no), the routine returns to Step S700, a new pixel group is selected, and the series of processes described above are performed for that pixel group. The procedure is repeated until it is finally decided that processing has been completed for all pixel groups (Step S718: yes), whereupon the dot on/off state determination process of the variation example shown in FIG. 31 terminates.

As described above, in the dot on/off state determination process of the variation example, dot on/off state can be determined simply by reading out from the intermediate data the 2-bit data at the appropriate location depending on the order value. In the image printing process of Variation Example 2, dot on/off state can be determined quickly in this manner, making it possible for the image to be printed out commensurately faster.

D. Embodiment 2:

In the dot on/off state determination process of Embodiment 1 discussed previously, when per-pixel group multi-value quantization result values are received, by means of lookup in the conversion table shown in FIG. 12, they are initially converted to data representing dot counts, and subsequently pixel locations for forming dots within the pixel groups are determined with reference to the order value matrices. However, once per-pixel group multi-value quantization result values have been received, it would be possible to instead determine directly the pixel locations for forming dots within the pixel groups. The dot on/off state determination process of such an Embodiment 2 shall be described below.

D-1. Basic Principle of Dot On/Off State Determination Process of Embodiment 2:

As shown in FIG. 27, in the dot on/off state determination process of Embodiment 1, once a per-pixel group multi-value quantization result value has been received, the classification number of the pixel group is derived, and then the count of each type of dot to be formed in the pixel group is determined from the combination of the multi-value quantization result value and the classification number. Then, as regards the pixel locations for forming these dots, these are determined with reference to an order value matrix corresponding to the classification number. That is, once the multi-value quantization result value and the classification number of a pixel group have been determined, the type of dot to be formed on each pixel in the pixel group can be determined. Consequently, where the types of dots to be formed on pixels in pixel groups are derived in advance for each combination of multi-value quantization result value and classification number, and these are stored in a correspondence relationship table, it should be possible to immediately determine dot on/off states simply by looking up in the correspondence relationship table. In the dot on/off state determination process of Embodiment 2, on the basis of this concept, it is possible for dot on/off states for each pixel to be determined quickly, from the multi-value quantization result value of the pixel group.

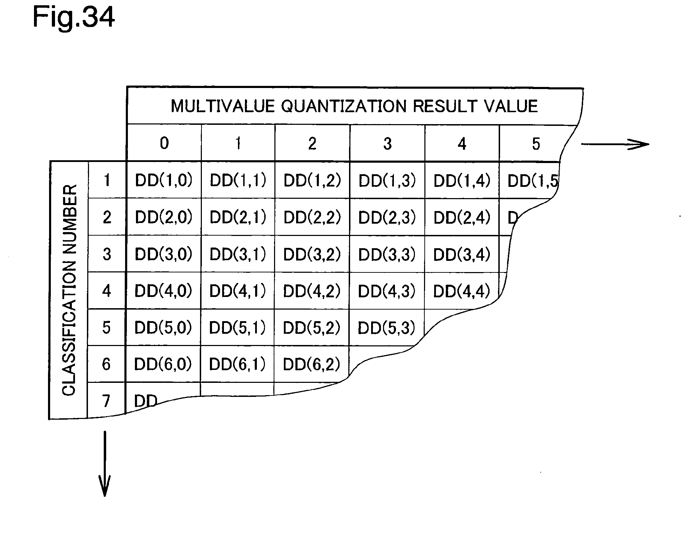

FIG. 34 is an illustration depicting conceptually a conversion table for lookup in the dot on/off state determination process of Embodiment 2. As shown in the drawing, data representing types of dots to be formed on pixels in pixel groups, associated with multi-value quantization result value/classification number combinations, is established in the conversion table of Embodiment 2. This data shall hereinafter be referred to as dot data. By means of lookup in the conversion table shown in FIG. 34, corresponding dot data can be read out directly from multi-value quantization result value/classification number combinations. For example, where the classification number is i and the pixel group tone value is j, the dot data will be DD (i, j). Dot data read out in this manner describes the dot on/off state for each pixel in the pixel group.

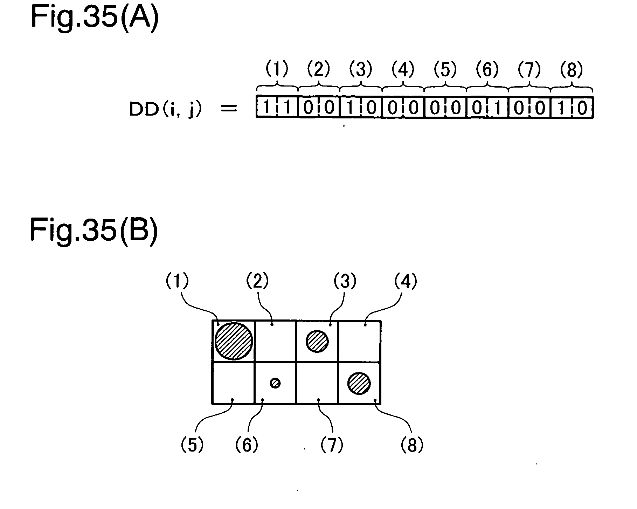

FIG. 35 illustrates the data structure of the dot data established in the conversion table of Embodiment 2. As shown in FIG. 35 (a), the dot data is data of 16-bit length composed of eight sets of two bits each. Here, the fact that one item of dot data is composed of eight sets of data corresponds to the fact that, in the image process of the present embodiment, a single pixel group contains eight pixels. Consequently, in the event that a single pixel group were composed of four pixels for example, one item of dot data would be composed of four sets of data. The fact that one set of data is composed of two bits reflects the fact that the color printer 200 of the present embodiment is able to represent, for each single pixel, one of four states, namely, "form a large dot," "form a medium dot," "form a small dot," or "form no dot." That is, where each single pixel can assume only one of four states, it is possible to represent these on two bits. Accordingly, one set of data corresponding to one pixel will have a data length of two bits.

As shown in FIG. 35, each of the eight sets of data making up the dot data is associated with a pixel at a prescribed location within the pixel group. For example, the first set of data at the lead of the dot data depicted in FIG. 35 (a) is associated with the pixel at the upper left corner within the pixel group, as shown in FIG. 35 (b). The second set of data from the lead of the dot data is associated with the pixel second from left in the upper row of the pixel group. In this way, the eight sets of data making up the dot data are respectively associated in advance with the pixels at prescribed locations within the pixel group.

The content of each set of data represents the type of dot to be formed on the corresponding pixel. Specifically, the 2-bit data "11" signifies formation of a large dot. The 2-bit data "10" signifies formation of a medium dot, "01" signifies formation of a small dot, and "00" signifies that no dot is to be formed. As will be apparent from the preceding discussion, the dot data shown by way of example in FIG. 35 (a) is data indicating that a large dot will be formed on the pixel in the upper left corner of the pixel group, a medium dot will be formed on the pixel third from left in the upper row, a small dot will be formed on the pixel second from left in the lower row, a medium dot will be formed on the pixel in the lower right corner of the pixel group, and no dots will be formed on the other pixels.

By means of lookup in this kind of conversion table, it is possible to quickly determine the dot on/off state for each pixel, on the basis of the classification number and multi-value quantization result value of the pixel group.

D-2. Dot On/Off State Determination Process of Embodiment 2:

Next, the specific process for determining the dot on/off state for each pixel in a pixel group from the multi-value quantization result value in the dot on/off state determination process of Embodiment 2 shall be described.

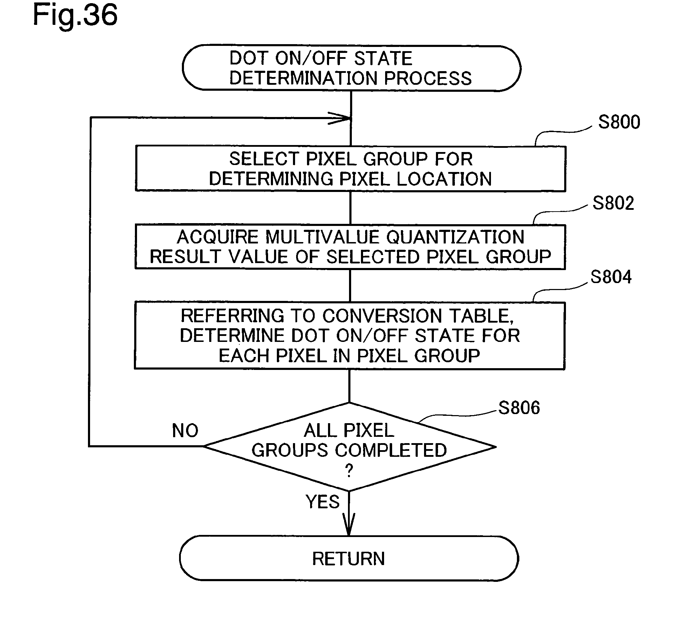

FIG. 36 is an illustration depicting the flow of the dot on/off state determination process of Embodiment 2. The description hereinbelow shall follow the flowchart. When the dot on/off state determination process of Embodiment 2 is initiated, one pixel group is selected for processing (Step S800). Next, the multi-value quantization result value of the selected pixel group is acquired (Step S802). At this time, if the pixel group classification number is not provided, the classification number is calculated as well. Then, on the basis of the classification number and the multi-value quantization result value, dot data representing the dot on/off state for each pixel in the pixel group is read out (Step S804). In the dot on/off state determination process of Embodiment 2, the dot on/off state for each pixel in the pixel group can be determined simply by reading out the dot data stored at the corresponding location in the conversion table.

Next, it is decided whether the dot on/off state has been determined for all pixel groups (Step S806), and if any unprocessed pixel groups remain (Step S806: no), the routine returns to Step S800, a new pixel group is selected, and the series of processes are performed for that pixel group. The procedure is repeated until it is finally decided that processing has been completed for all pixel groups (Step S806: yes), whereupon the dot on/off state determination process of Embodiment 2 terminates.

As discussed hereinabove, in the dot on/off state determination process of Embodiment 2, the dot on/off state for each pixel in a pixel groups can be determined immediately from the multi-value quantization result value, simply by one-step lookup in the conversion table. Consequently, dot on/off states can be determined even faster than with the dot on/off state determination process of Embodiment 1 shown in FIG. 11, and is accordingly possible to output images extremely rapidly.

While the invention has been described hereinabove in terms of certain preferred embodiments, it is not limited to the embodiments taught herein and may be reduced to practice in various modes without departing from the concept of the invention. For example, while the preceding embodiments described the case of printing an image by forming dots on printing paper, the scope of application of the invention is not limited to printing of images. For example, the invention could be implemented to good advantage in a liquid crystal display device for representing an image of continuously varying tone, by means of dispersing luminescent spots at appropriate density on a liquid crystal display screen or the like.

**Claims**

1. An image processing apparatus for processing image data representing an image expressed by a prescribed number of tones to perform multi-value quantization for each pixel making up the image, using a smaller number of tones than the prescribed number of tones, the image processing apparatus comprising:

   a correspondence relationship preparation unit that prepares correspondence relationships of a pixel group tone value representing a tone value of a pixel group composed of a plurality of pixels, with a multi-value quantization result value indicating a result of the multi-value quantization for the pixels making up the pixel group;
   a pixel group tone value determining unit that extracts a set of pixels corresponding to the pixel group from the image data representing the image, and determining the pixel group tone value for the each pixel group composed of the extracted set of pixels;
   a multi-value quantization unit that acquires the multi-value quantization result value for the each pixel group making up the image based on the pixel group tone value, by referring to the correspondence relationships; and
   a control data output unit that generates control data for forming the image from the multi-value quantization result values derived for the pixel groups, and outputs the control data.

2. The image processing apparatus according to claim 1, wherein,
   the correspondence relationship preparation unit creates multiple types of the correspondence relationships, and assigns classification numbers to the multiple types of correspondence relationships; and
   the multi-value quantization unit acquires the classification number assigned to each the pixel group, and acquires the multi-value quantization result value by referring to the correspondence relationship prepared for each the classification number.

3. The image processing apparatus according to claim 2, further comprising a classification number assigning unit that classifies the pixel groups into multiple types according to a location of the pixel groups within the image, for assigning a classification number individually to the each pixel group.

4. The image processing apparatus according to claim 2, wherein
the correspondence relationship preparation unit prepares the multi-value quantization result values for each of the pixel groups, in a number depending on the classification number; and
the multi-value quantization unit acquires one multi-value quantization result value from among the prepared number of multi-value quantization result values based on the pixel group tone value, by referring to the prepared correspondence relationships.

5. The image processing apparatus according to claim 2, wherein
the correspondence relationship preparation unit stores a tone value range, and a location and type information for a dot formed in the range, in an associated form.

6. The image processing apparatus according to claim 2, wherein
the correspondence relationship preparation unit stores data by which an order of dot formation can be ascertained within the pixel group, for each single classification number;
the multi-value quantization unit acquires a dot count formed in the pixel group as the multi-value quantization result value; and
the control data output unit outputs the control data for specifying on which pixels a dot to be formed in the pixel group, from the dot count acquired by the multi-value quantization unit and the data by which an order of dot formation can be ascertained.

7. The image processing apparatus according to claim 6, wherein
the correspondence relationship preparation unit stores data of a tone value at which the result of the multi-value quantization changes, and the dot count to be formed in the pixel group at each tone value, in associated form as the correspondence relationships.

8. The image processing apparatus according to claim 6, wherein
the data by which the order of dot formation can be ascertained are order values describing the order of dot formation.

9. The image processing apparatus according to any of claims 6 to 8, wherein
the multi-value quantization unit acquires the number of each the type of dot to be formed as the multi-value quantization result value, for L types of dot (L being a natural number equal to 1 or greater) to be ultimately formed; and

the control data output unit outputs the control data specifying formation of dots according to an order, from the dot type having the highest concentration per unit of planar area among the L types of dot.

10. The image processing apparatus according to claim 2, wherein
the correspondence relationship preparing unit comprises:

a classification number managing unit that divides a large-area dither matrix wherein tone threshold values serving as criteria for the dot formation decision are stored dispersed in a matrix of width $M \times$ height N (where M and N are natural numbers equal to 8 or greater), into a plurality of areas of quadrangular shape corresponding to the pixel groups, on an assumption that the pixel groups are pixel groups composed of width $P \times$ height Q (where P and Q are natural numbers equal to 2 or greater) pixels contained in an area of the quadrangular shape; and manages each set of $P \times$ Q threshold values contained in a the divided area by assigning each of the $P \times$ Q threshold values a single the classification number S; and
a correspondence relationship storage unit that assigns, to each area that has been assigned a classification number S, a tone value converted to dot recording rate of the L types of dot that will ultimately be formed, creates information as to which types of dot will be formed on pixels at which location, at each tone level, and stores correspondence relationships between the dot formation locations and the tone values, for each the classification number S.

11. The image processing apparatus according to any of claims 2 to 10 wherein
the correspondence relationship preparing unit prepares correspondence relationships of the pixel group tone values with the multi-value quantization result values, for each of at least 100 or more of the classification numbers.

12. The image processing apparatus according to any of claims 2 to 10 wherein the product of multiplying the pixel count contained per each single the pixel group, by the number of the classification numbers established in the correspondence relationships, is at least 1000 or greater.

13. The image processing apparatus according to claim 1 wherein
the multi-value quantization unit acquires as the multi-value quantization result value information as to whether to form a the dot at each location within the pixel group, for each of L types of dot (L being a natural number equal to 1 or greater) that will ultimately be formed.

14. The image processing apparatus according to claim 1 wherein the pixel groups are composed of one of 2 pixels × 2 pixels and 2 pixels × 4 pixels.

15. An image processing method of processing image data representing an image expressed by a prescribed number of tones to perform multi-value quantization for each pixel making up the image, using a smaller number of tones than the prescribed number of tones, the image processing method comprising:

preparing correspondence relationships of a pixel group tone value representing a tone value of a pixel group composed of a plurality of pixels, with a multi-value quantization result value indicating a result of the multi-value quantization for the pixels making up the pixel group; extracting a set of pixels corresponding to the pixel group from the image data representing the image, and determines the pixel group tone value for the each pixel group composed of the extracted set of pixels; acquiring the multi-value quantization result value for the each pixel group making up the image based on the pixel group tone value, by referring to the correspondence relationships; and generating control data for forming the image from the multi-value quantization result values derived for the pixel groups, and outputting the control data.

16. A computer program product for causing a computer to process image data representing an image expressed by a prescribed number of tones to perform multi-value quantization for each pixel making up the image, using a smaller number of tones than the prescribed number of tones, the computer program product comprising:

a computer readable medium; and a computer program code stored on the computer readable medium, wherein the computer program code comprising:

a first program code for causing a computer to prepare correspondence relationships of a pixel group tone value representing a tone value of a pixel group composed of a plurality of pixels, with a multi-value quantization result value indicating a result of the multi-value quantization for the pixels making up the pixel group; a second program code for causing a computer to extract a set of pixels corresponding to the pixel group from the image data representing the image, and determines the pixel group tone value for the each pixel group composed of the extracted set of pixels; a third program code for causing a computer to acquire the multi-value quantization result value for the each pixel group making up the image based on the pixel group tone value, by referring to the correspondence relationships; and a fourth program code for causing a computer to generate control data for forming the image from the multi-value quantization result values derived for the pixel groups, and outputs the control data.

17. An image forming apparatus comprising an image processing apparatus and a printing apparatus connected the image forming apparatus, wherein the image processing apparatus is an image processing apparatus for processing image data representing an image expressed by a prescribed number of tones to perform multi-value quantization for each pixel making up the image using a smaller number of tones than the prescribed number of tones, the image processing apparatus comprising:

a correspondence relationship preparation unit that prepares correspondence relationships of a pixel group tone value representing a tone value of a pixel group composed of a plurality of pixels, with a multi-value quantization result value indicating a result of the multi-value quantization for the pixels making up the pixel group; a pixel group tone value determining unit that extracts a set of pixels corresponding to the pixel group from the image data representing the image, and determines the pixel group tone value for the each pixel group composed of the extracted set of pixels; a multi-value quantization unit that acquires the multi-value quantization result value for the each pixel group making up the image based on the pixel group tone value, by referring to the correspondence relationships; and a control data output unit that generates control data for forming the image from the multi-value quantization result values derived for the pixel groups, and outputs the control data, wherein the printing apparatus comprises: a printing mechanism for forming dots of types corresponding to the smaller number of tones; a control data receiving unit for receiving the control data output by the image processing apparatus; a pixel location calculating unit for calculating location of each pixel group and locations of dot formation within the pixel group, in accordance

**EP 1 744 539 A1**

with the received control data; and
a dot formation control unit for forming the dots
at the calculated appropriate locations on a printing medium, using the printing mechanism.

# Fig.1

IMAGE DATA

PIXEL GROUP TONE VALUE
DETERMINATION MODULE

ASSOCIATION
STORAGE
MODULE

MULTIVALUE
QUANTIZATION MODULE

10

COUNT DATA

20

MULTIVALUE QUANTIZATION RESULT
VALUE CONVERSION MODULE

DOT ON/OFF STATE
DETERMINATION MODULE

DOT FORMATION MODULE

# Fig.2

# Fig.3

MAIN SCANNING
DIRECTION

SUB-SCANNING
DIRECTION

# Fig.4

247(Y)    246(M)    245(C)    244(K)

SUB-SCANNING DIRECTION

p

Nz

243

242

MAIN SCANNING DIRECTION

Fig.5(A)

Fig.5(B)

# Fig.6

```
        ┌─────────────────────────────┐
        │   IMAGE PRINTING PROCESS    │
        └─────────────────────────────┘
                      │
        ┌─────────────────────────────┐ ─── S100
        │       READ IMAGE DATA       │
        └─────────────────────────────┘
                      │
        ┌─────────────────────────────┐ ─── S102
        │           COLOR             │
        │     CONVERSION PROCESS      │
        └─────────────────────────────┘
                      │
        ┌─────────────────────────────┐ ─── S104
        │        RESOLUTION           │
        │     CONVERSION PROCESS      │
        └─────────────────────────────┘
                      │
       ┌───────────────────────────────┐ ─── S106
       ║ MULTIVALUE QUANTIZATION RESULT ║
       ║   VALUE  GENERATION PROCESS    ║
       └───────────────────────────────┘
                      │
        ┌─────────────────────────────┐ ─── S108
        ║      DOT ON/OFF STATE       ║
        ║    DETERMINATION PROCESS    ║
        └─────────────────────────────┘
                      │
        ┌─────────────────────────────┐ ─── S110
        │    DOT FORMATION PROCESS    │
        └─────────────────────────────┘
                      │
                      ▼
        ┌─────────────────────────────┐
        │            END              │
        └─────────────────────────────┘
```

39

# Fig.7

```
        ┌─────────────────────────────────────┐
        │      MULTIVALUE QUANTIZATION        │
        │   RESULT VALUE GENERATION PROCESS   │
        └─────────────────────────────────────┘
                          │
                          ▼                      S200
        ┌─────────────────────────────────────┐
        │          GROUP PIXELS TO            │
        │       GENERATE PIXEL GROUP          │
        └─────────────────────────────────────┘
                          │                      S202
        ┌─────────────────────────────────────┐
        │       DETERMINE PIXEL GROUP         │
        │    TONE VALUE AND PIXEL GROUP       │
        │       CLASSIFICATION NUMBER         │
        └─────────────────────────────────────┘
                          │                      S204
        ┌─────────────────────────────────────┐
        │  MULTIVALUE QUANTIZATION OF PIXEL GROUP │
        │   TONE VALUE BY LOOKUP IN  MULTIVALUE   │
        │  QUANTIZATION TABLE FROM CLASSIFICATION │
        │          NUMBER AND PIXEL           │
        └─────────────────────────────────────┘
                          │                      S206
        NO          ◇─────────────────◇
        ◀───────────  ALL PIXELS COMPLETED
                           ?
                          │
                         YES                     S208
        ┌─────────────────────────────────────┐
        │     OUTPUT MULTIVALUE QUANTIZATION   │
        │   RESULT VALUES FOR EACH PIXEL GROUP │
        └─────────────────────────────────────┘
                          │
                          ▼
        ┌─────────────────────────────────────┐
        │              RETURN                 │
        └─────────────────────────────────────┘
```

## Fig.8(A)

X

M PIXEL GROUPS

PIXEL GROUP OF INTEREST

Y

N PIXEL GROUPS

## Fig.8(B)

X : | 1 | 2 | 3 | 4 | 5 | 6 | 7 | 8 | 9 | 10 |

N

Y : | 1 | 2 | 3 | 4 | 5 | 6 | 7 | 8 | 9 | 10 |

M

# Fig.9

| CLASSIFICATION NUMBER | PIXEL GROUP TONE VALUE | | | | | | | 253 | 254 | 255 |
|---|---|---|---|---|---|---|---|---|---|---|
| | 0 | 1 | 2 | 3 | 4 | 5 | | | | |
| 1 | 0 | 0 | 0 | 0 | 1 | 1 | | | 15 | 15 | 15 |
| 2 | 0 | 1 | 1 | 1 | 1 | 1 | | | 17 | 17 | 17 |
| 3 | 0 | 0 | 0 | 0 | 0 | | | | 20 | 20 | 21 |
| 4 | 0 | 0 | 1 | 1 | | | | | | 19 | 19 |
| 5 | 0 | 0 | 0 | 0 | | | | | | 22 | 22 |
| 6 | 0 | 0 | 0 | | | | | | | 20 | 20 |
| 7 | 0 | 0 | | | | | | | | | |
| 8 | 0 | | | | | | | | | | |
| 9 | 0 | | | | | | | | | | |
| 10 | | | | | | | | | | | |

# Fig.10

# Fig.11

```
┌─────────────────────────────┐
│     DOT ON/OFF STATE        │
│   DETERMINATION PROCESS     │
└─────────────────────────────┘
              │
              ▼
┌─────────────────────────────────────┐  S300
│  SELECT PIXEL GROUP FOR PROCESSING  │
└─────────────────────────────────────┘
              │                          S302
┌─────────────────────────────────────┐
│  ACQUIRE MULTIVALUE QUANTIZATION    │
│  RESULT VALUE OF SELECTED PIXEL GROUP│
└─────────────────────────────────────┘
              │                          S304
┌─────────────────────────────────────┐
│ CONVERT TO DATA REPRESENTING DOT COUNT,│
│ BASED ON PIXEL GROUP CLASSIFICATION NUMBER│
│ AND MULTIVALUE QUANTIZATION RESULT VALUE│
└─────────────────────────────────────┘
              │                          S306
┌─────────────────────────────────────┐
│     LOAD ORDER VALUE MATRIX         │
│   CORRESPONDING TO PIXEL GROUP      │
└─────────────────────────────────────┘
              │                          S308
┌─────────────────────────────────────┐
│    DETERMINE PIXEL(S) ON WHICH      │
│    A LARGE DOT WILL BE FORMED       │
└─────────────────────────────────────┘
              │                          S310
┌─────────────────────────────────────┐
│ FROM AMONG PIXELS WITH NO LARGE DOT,│
│ DETERMINE PIXEL(S) ON WHICH A MEDIUM│
│        DOT WILL BE FORMED           │
└─────────────────────────────────────┘
              │                          S312
┌─────────────────────────────────────┐
│  FROM AMONG PIXELS WITH NO LARGE    │
│ DOT OR MEDIUM DOT, DETERMINE PIXEL(S)│
│ ON WHICH A SMALL DOT WILL BE FORMED │
└─────────────────────────────────────┘
              │                          S314
┌─────────────────────────────────────┐
│    DETERMINE PIXEL(S) ON WHICH      │
│     NO DOT WILL BE FORMED           │
└─────────────────────────────────────┘
              │                          S316
         ╱──────────╲
   NO   ╱ ALL PIXEL  ╲
◄──────╱   GROUPS      ╲
        ╲  COMPLETED   ╱
         ╲    ?      ╱
          ╲────────╱
              │ YES
              ▼
┌─────────────────────────────┐
│          RETURN             │
└─────────────────────────────┘
```

# Fig.12

| CLASSIFICATION NUMBER | 0 | 1 | 2 | 3 |
|---|---|---|---|---|
| 1 | 0 | 1 | 2 | 3 |
| 2 | 0 | 1 | 3 | 4 |
| 3 | 0 | 1 | 2 | 4 |
| 4 | 0 | 1 | 2 | 3 |
| 5 | 0 | 2 | 3 | |
| 6 | 0 | 1 | 3 | |
| 7 | 0 | 1 | | |
| 8 | 0 | | | |
| 9 | 0 | | | |
| 10 | | | | |

● ● ● ● ●

| MULTIVALUE QUANTIZATION RESULT VALUE | | | | | | | | | 30 | 31 |
|---|---|---|---|---|---|---|---|---|---|---|
| 14 | 15 | 16 | 17 | 18 | 19 | 20 | 21 | ● ● ● | 30 | 31 |
| 157 | 164 | — | — | — | — | — | — | | — | — |
| 143 | 153 | 159 | 164 | — | — | — | — | | — | — |
| 138 | 148 | 151 | 160 | — | — | — | — | | — | — |
| 109 | 124 | 130 | 139 | 146 | 148 | 158 | — | | — | — |
| 135 | 141 | 147 | 150 | 157 | 163 | — | — | | — | — |
| 150 | 153 | 161 | — | — | — | — | — | | — | — |
| | 142 | 149 | 155 | 160 | — | — | — | | — | — |
| | 127 | 129 | 130 | 139 | 146 | 151 | 158 | | — | — |
| | 141 | 144 | 147 | 152 | 162 | 164 | — | | — | — |
| | 138 | 143 | 154 | 160 | 164 | — | — | | | |

EP 1 744 539 A1

# Fig.13

| CODED COUNT DATA | DOT COUNT | | |
|---|---|---|---|
| | LARGE | MEDIUM | SMALL |
| 0 | 0 | 0 | 0 |
| 1 | 0 | 0 | 1 |
| 2 | 0 | 0 | 2 |
| 3 | 0 | 0 | 3 |
| 160 | 6 | 2 | 0 |
| 161 | 7 | 0 | 0 |
| 162 | 7 | 0 | 1 |
| 163 | 7 | 1 | 0 |
| 164 | 8 | 0 | 0 |

# Fig.14(A)

CLASSIFICATION NUMBER: 1 ORDER VALUE MATRIX

| 1 | 6 | 3 | 5 |
|---|---|---|---|
| 8 | 4 | 7 | 2 |

# Fig.14(B)

CLASSIFICATION NUMBER: 2 ORDER VALUE MATRIX

| 3 | 6 | 4 | 5 |
|---|---|---|---|
| 8 | 1 | 7 | 2 |

# Fig.14(C)

CLASSIFICATION NUMBER: 3 ORDER VALUE MATRIX

| 6 | 4 | 1 | 7 |
|---|---|---|---|
| 2 | 8 | 5 | 3 |

EP 1 744 539 A1

# Fig.15

1 LARGE DOT
2 MEDIUM DOTS
1 SMALL DOT

2 MEDIUM DOTS
1 SMALL DOT

1 SMALL DOT

## Fig.16

128 PIXELS →

64 PIXELS ↓

```
  1| 177|  58| 170|  70| 186|  79| 161|  94| 171|  16| 164|  24| 158| 227|   6| 133| 157
255| 109| 212|  42| 242|   5| 223|  48| 209|  67| 248|  81| 234| 132|  56| 120| 253
123|  33| 127| 181|  83| 155| 105| 140|  30| 150| 119| 182|  40|  89| 220| 163|  44
219|  91| 237|  22| 121| 198|  61| 188| 111| 215|   3|  98| 201| 140|  10|  95
 11| 195|  53| 136| 227|  37| 247|  12| 233|  52| 192| 135|  32| 246| 113| 194
 99| 144| 107| 184|  68| 172|  97| 151|  77| 173|  84| 237| 123|  61| 167|  46
225|  40| 251|   6| 217| 116|  28| 196| 125|  35| 207|  17| 153| 203|  24
 87| 169|  78| 162|  59| 146| 211|  64| 254| 142|  72| 178|  87| 118| 228
190|  15| 202| 111| 238|  19|  93| 169|   8| 110| 221|  49| 249|   2| 144
 74| 246| 134|  43| 174| 128| 230|  50| 216| 154|  26| 168|  79| 184
176|  30|  98| 219|  86|  34| 139| 195| 101|  56| 241| 127| 213|  37
 69| 148| 196|   2| 159| 247|  89|  11| 136| 185|  92|  14| 108
187|  41| 126| 226| 106|  57| 190| 115| 235|  36| 208| 121| 229
 81| 214|  92|  53| 145| 204|  27| 166|  74| 157|  82| 165|  31
232|  21| 170| 240|  13| 132| 252|  51| 222|   4| 245|  48
130| 155|  55| 115| 183|  78| 122| 196| 102| 180|  65| 173
 72| 252| 100| 211|  45| 231|  20| 148|  39| 133| 205
202|  32| 179|   5| 163|  95| 191|  86| 239| 111|  29
104| 143|  58| 243|  70| 218|  63| 161|   9| 209
 64| 236| 129| 110| 151|  25| 199|  49| 172|  68
171|  17| 208|  38| 225| 131|  99| 254| 113
 80| 191|  87| 174|  76| 189|  13| 143
247|  35| 152|   2| 248|  55
140| 108| 197| 127|  96
 13| 215|  46| 229
164|  90| 180
 52| 253
205
```

49

# Fig.17

IMAGE DATA

DITHER MATRIX

DOT ON/OFF

## Fig.18(A)

## Fig.18(B)

2 PIXEL
EQUIVALENT

4 PIXEL
EQUIVALENT

128 PIXEL EQUIVALENT
(= 32 BLOCKS)

64 PIXEL EQUIVALENT
(= 32 BLOCKS)

| 1 | 2 | 3 | 4 | 5 | 6 | 7 | 8 | 9 |
|---|---|---|---|---|---|---|---|---|
| 33 | 34 | 35 | 36 | 37 | 38 | 39 | | |
| 65 | 66 | 67 | 68 | 69 | 70 | | | |
| 97 | 98 | 99 | 100 | 101 | | | | |
| 129 | 130 | 131 | 132 | | | | | |
| 161 | 162 | | | | | | | |
| 193 | | | | | | | | |

| | | | 960 |
|---|---|---|---|
| | 990 | 991 | 992 |
| 1021 | 1022 | 1023 | 1024 |

## Fig.18(C)

PIXEL GROUP

IMAGE DATA

DITHER MATRIX

## Fig.19(A)

X(=4n+1)

M PIXEL GROUPS

PIXEL GROUP OF INTEREST

N PIXEL GROUPS

Y (=2m+1)

## Fig.19(B)

IMAGE DATA

DITHER MATRIX

## Fig.19(C)

32 PIXEL GROUPS

32 PIXEL GROUPS

N

M PIXEL GROUPS

PIXEL GROUP OF INTEREST

M

N PIXEL GROUPS          DITHER MATRIX

## Fig.19(D)

$$\begin{cases} N = n - \text{int}(n/32) \times 32 + 1 \\ M = m - \text{int}(m/32) \times 32 + 1 \end{cases}$$

# Fig.20

(a)　　　X　　:　　| 1 | 2 | 3 | 4 | 5 | 6 | 7 | 8 | 9 | 10 |
　　　　　　　　　　　　　　　　　　　　　　　　) 2 BIT SHIFT TO RIGHT

(b)　　　n　　:　　| 0 | 0 | 1 | 2 | 3 | 4 | 5 | 6 | 7 | 8 |
　　　　　　　　　　　　　　　　　　　　　　　　) 5 BIT SHIFT TO RIGHT

(c)　int (n/32)　:　| 0 | 0 | 0 | 0 | 0 | 0 | 0 | 1 | 2 | 3 |
　　　　　　　　　　　　　　　　　　　　　　　　) 5 BIT SHIFT TO LEFT

(d)　int (n/32) × 32:　| 0 | 0 | 1 | 2 | 3 | 0 | 0 | 0 | 0 | 0 |

(e)　n − int (n/32) × 32:　| 0 | 0 | 0 | 0 | 0 | 4 | 5 | 6 | 7 | 8 |

(f)　MASK DATA　| 0 | 0 | 0 | 0 | 0 | 1 | 1 | 1 | 1 | 1 |

(g)　MASK DATA　| 0 | 0 | 0 | 1 | 1 | 1 | 1 | 1 | 0 | 0 |

# Fig.21

```
                    ┌─────────────────────────┐
                    │     HALFTONE PROCESS     │
                    └─────────────────────────┘
                                 │
S400                             ▼
        ┌─────────────────────────────────────────┐
        │ SELECT PIXEL GROUP FOR PROCESSING,       │◄───┐
        │        ACQUIRE IMAGE DATA                │    │
S402    └─────────────────────────────────────────┘    │
        ┌─────────────────────────────────────────┐    │
        │        CONVERT IMAGE DATA TO             │    │
        │ LARGE/MEDIUM/SMALL DOT DENSITY DATA      │    │
S404    └─────────────────────────────────────────┘    │
        ┌─────────────────────────────────────────┐    │
        │ COMPARE LARGE DOT DENSITY DATA WITH      │    │
        │ THRESHOLDVALUE, DETERMINE LARGE DOT      │    │
        │              ON/OFF STATE                │    │
        └─────────────────────────────────────────┘    │
                                 │                      │
S406                             ▼                YES   │
              ◇───────────────────────────────◇────────┤
              │         LARGE DOT ON?          │        │
              ◇───────────────────────────────◇        │
S408                            │ NO                    │
        ┌─────────────────────────────────────────┐    │
        │ ADD MEDIUM DOT DENSITY DATA TO LARGE DOT │    │
        │ DENSITY DATA TO CALCULATE INTERMEDIATE   │    │
        │        DATA FOR MEDIUM DOT USE           │    │
S410    └─────────────────────────────────────────┘    │
        ┌─────────────────────────────────────────┐    │
        │ COMPARE INTERMEDIATE DATA FOR MEDIUM DOT │    │
        │      USE WITH THRESHOLD VALUE,           │    │
        │  DETERMINE MEDIUM DOT ON/OFF STATE       │    │
        └─────────────────────────────────────────┘    │
                                 │                      │
S412                             ▼                YES   │
              ◇───────────────────────────────◇────────┤
              │        MEDIUM DOT ON?          │        │
              ◇───────────────────────────────◇        │
S414                            │ NO                    │
        ┌─────────────────────────────────────────┐    │
        │ ADD SMALL DOT DENSITY DATA TO INTERMEDIATE│   │
        │ DATA FOR MEDIUM DOT USE TO CALCULATE     │    │
        │ INTERMEDIATE DATA FOR SMALL DOT USE      │    │
S416    └─────────────────────────────────────────┘    │
        ┌─────────────────────────────────────────┐    │
        │ COMPARE INTERMEDIATE DATA FOR SMALL      │    │
        │ DOT USE WITH THRESHOLD VALUE, DETERMINE  │    │
        │      SMALL DOT ON/OFF STATE              │    │
        └─────────────────────────────────────────┘    │
                                 │                      │
S418                             ▼                NO    │
              ◇───────────────────────────────◇────────┘
              │    ALL PIXELS COMPLETED        │
              │             ?                  │
              ◇───────────────────────────────◇
                            │ YES
                            ▼
                    ┌─────────────────────────┐
                    │         RETURN           │
                    └─────────────────────────┘
```

# Fig.22

# Fig.23

IMAGE DATA

DENSITY DATA

DITHER MATRIX

DOT ON/OFF

LARGE DOT ON

SMALL DOT ON

MEDIUM DOT ON

# Fig.24

```
        ┌──────────────────────────────┐
        │  MULTIVALUE QUANTIZATION     │
        │  TABLE SETUP PROCESS         │
        └──────────────────────────────┘
                        │
S500 ┌──────────────────────────────────────┐
     │      SELECT ONE PIXEL GROUP          │
     │      CLASSIFICATION NUMBER           │
     └──────────────────────────────────────┘
S502 ┌──────────────────────────────────────────────────┐
     │ FROM DITHER MATRIX, READ THRESHOLD VALUE          │
     │ ESTABLISHED FOR PIXEL GROUP CORRESPONDING         │
     │ TO CLASSIFICATION NUMBER                          │
     └──────────────────────────────────────────────────┘
S504 ┌──────────────────────────────────────────────────┐
     │ SET MULTIVALUE QUANTIZATION RESULT VALUE          │
     │ RV AND PIXEL GROUP TONE VALUE BD TO 0             │
     └──────────────────────────────────────────────────┘
S506 ┌──────────────────────────────────────┐
     │     SET LARGE DOT, MEDIUM DOT,       │
     │ SMALL DOT FORMATION COUNTS TO 0      │
     └──────────────────────────────────────┘
S508 ┌──────────────────────────────────────┐
     │      CONVERT PIXEL GROUP TONE        │
     │      VALUES TO DENSITY DATA          │
     └──────────────────────────────────────┘
S510 ┌──────────────────────────────────────────────────┐
     │ DETERMINE FORMATION COUNT FOR EACH DOT TYPE,      │
     │ BASED ON DENSITY DATA OF EACH DOT TYPE AND READ   │
     │ THRESHOLD VALUE                                   │
     └──────────────────────────────────────────────────┘
S512      FORMATION COUNT CHANGED?   ──NO──┐
              │YES                          │
S514 ┌──────────────────────────────────┐  │
     │          RV ← RV+1               │  │
     └──────────────────────────────────┘  │
S516 ┌──────────────────────────────────────────────────┐
     │ STORE MULTIVALUE QUANTIZATION RESULT VALUE        │
     │ RV IN ASSOCIATION WITH PIXEL GROUP TONE VALUE     │
     └──────────────────────────────────────────────────┘
S518      PIXEL GROUP TONE VALUE = 255?  ──NO──> S520  BD ← BD+1
              │YES
S522      COMPLETED FOR ALL CLASSIFICATION NUMBERS?  ──NO──>
              │YES
        ┌──────────────┐
        │   RETURN     │
        └──────────────┘
```

# Fig.25

```
        ╭─────────────────────────╮
        │    CONVERSION TABLE      │
        │    SETUP PROCESS         │
        ╰─────────────────────────╯
                     │
S600  ┌─────────────────────────────────┐
      │       SELECT TARGET              │
      │   CLASSIFICATION NUMBER          │
S602  ├─────────────────────────────────┤
      │  SET MULTIVALUE QUANTIZATION     │
      │   RESULT VALUE RV TO 0           │
      └─────────────────────────────────┘
                     │
S604  ┌─────────────────────────────────┐
      │  ACQUIRE DOT COUNT COMBINATION   │
      │  CORRESPONDING TO MULTIVALUE     │        S612
      │  QUANTIZATION RESULT VALUE RV    │      ┌──────────┐
S606  ├─────────────────────────────────┤      │  RV      │
      │  CONVERT ACQUIRED DOT COUNT      │      │ ← RV＋1   │
      │  COMBINATION  TO CODE DATA       │      └──────────┘
S608  ├─────────────────────────────────┤
      │  STORE CODE DATA IN ASSOCIATION  │
      │  WITH MULTIVALUE  QUANTIZATION   │
      │  RESULT VALUE RV                 │
      └─────────────────────────────────┘
                     │
S610           ╱─────────────╲
           ╱  HAS MULTIVALUE   ╲      NO
          ╱ QUANTIZATION RESULT ╲─────────→
           ╲  VALUE REACHED     ╱
            ╲  MAXIMUM VALUE    ╱
               ╲     ?     ╱
                   │ YES
S614           ╱─────────────╲
           ╱   COMPLETED       ╲     NO
          ╱ FOR ALL CLASSIFICATION╲────→
           ╲    NUMBERS?      ╱
                   │ YES
            ╭──────────────╮
            │   RETURN      │
            ╰──────────────╯
```

## Fig.26(A)

## Fig.26(B)

BLOCK OF
CLASSIFICATION NUMBER 1

| 1 | 177 | 58 | 170 |
|---|---|---|---|
| 255 | 109 | 212 | 42 |

ORDER VALUE MATRIX
CORRESPONDING
TO CLASSIFICATION NUMBER 1

| 1 | 6 | 3 | 5 |
|---|---|---|---|
| 8 | 4 | 7 | 2 |

## Fig.26(C)

BLOCK OF
CLASSIFICATION NUMBER 2

| 70 | 186 | 79 | 161 |
|---|---|---|---|
| 242 | 5 | 223 | 48 |

ORDER VALUE MATRIX
CORRESPONDING
TO CLASSIFICATION NUMBER 2

| 3 | 6 | 4 | 5 |
|---|---|---|---|
| 8 | 1 | 7 | 2 |

# Fig.27

## Fig.28(A)

I-TH PIXEL GROUP

J-TH PIXEL GROUP

PIXEL GROUP OF INTEREST

## Fig.28(B)

32 PIXEL GROUPS

32 PIXEL GROUPS

I

J

PIXEL GROUP OF INTEREST

DITHER MATRIX

## Fig.28(C)

$$\begin{cases} I = i - \mathrm{int}(i/32) \times 32 \\ J = j - \mathrm{int}(j/32) \times 32 \end{cases}$$

# Fig.29

(a)     i     :    | 1 | 2 | 3 | 4 | 5 | 6 | 7 | 8 | 9 | 10 |

5 BIT SHIFT TO RIGHT

(b)    int (i/32)  :    | 0 | 0 | 0 | 0 | 0 | 1 | 2 | 3 | 4 | 5 |

5 BIT SHIFT TO LEFT

(c)    int (i/32) × 32  :    | 1 | 2 | 3 | 4 | 5 | 0 | 0 | 0 | 0 | 0 |

(d)    i − int (i/32) × 32  :    | 0 | 0 | 0 | 0 | 0 | 6 | 7 | 8 | 9 | 10 |

## Fig.30

**MULTIVALUE QUANTIZATION RESULT VALUE**

| CLASSIFICATION NUMBER | 14 | 15 | 16 | 17 | 18 | 19 | 20 | 21 | ... | 30 | 31 |
|---|---|---|---|---|---|---|---|---|---|---|---|
| 1 | 243 | 255 | – | – | – | – | – | – | ... | – | – |
| 2 | 225 | 228 | 237 | 255 | – | – | – | – | ... | – | – |
| 3 | 224 | 231 | 240 | 255 | – | – | 255 | – | ... | – | – |
| 4 | 160 | 168 | 183 | 193 | 207 | 243 | 255 | – | ... | – | – |
| 5 | 211 | 220 | 229 | 240 | 244 | 255 | – | – | ... | – | – |
| 6 | 229 | 242 | 255 | – | 255 | – | – | – | ... | – | – |
| 7 | | 220 | 232 | 241 | 225 | 234 | 240 | 248 | ... | – | – |
| 8 | | 182 | 193 | 211 | 225 | 234 | 240 | 248 | ... | – | – |
| 9 | | 201 | 211 | 225 | 237 | 244 | 255 | – | ... | – | – |
| 10 | | 207 | 224 | 237 | 243 | 255 | – | – | ... | – | – |

| CLASSIFICATION NUMBER | 0 | 1 | 2 | 3 |
|---|---|---|---|---|
| 1 | 2 | 15 | 18 | 24 |
| 2 | 12 | 21 | 35 | 47 |
| 3 | 10 | 17 | 26 | 40 |
| 4 | 8 | 19 | 23 | 31 |
| 5 | 5 | 12 | 23 | |
| 6 | 11 | 23 | 22 | |
| 7 | 8 | 15 | 31 | |
| 8 | 12 | | | |
| 9 | 10 | | | |
| 10 | | | | |

# Fig.31

DOT ON/OFF STATE
DETERMINATION PROCESS

S700

SELECT PIXEL GROUP FOR PROCESSING

S702

ACQUIRE MULTIVALU QUANTIZATION RESULT
VALUE OF SELECTED PIXEL GROUP

S704

ACQUIRE DATA REPRESENTING DOT COUNT,
FROM PIXEL GROUP CLASSIFICATION NUMBER
AND MULTIVALUE QUANTIZATION RESULT VALUE

S706

CONVERT DOT COUNT DATA
TO INTERMEDIATE DATA

S708

LOAD ORDER VALUE MATRIX
CORRESPONDING TO PIXEL GROUP

S710

SELECT ONE TARGET PIXEL
FROM PIXEL GROUP

S712

REFERRING TO ORDER VALUE MATRIX,
ACQUIRE ORDER VALUE OF SELECTED PIXEL

S714

BY READING OUT VALUE AT LOCATION
CORRESPONDING TO ORDER VALUE IN
INTERMEDIATE DATA, DETERMINE DOT
ON/OFF STATE FOR SELECTED PIXEL

S716

ALL PIXELS
IN PIXEL GROUP
COMPLETED
?

NO

YES

S718

ALL PIXEL
GROUPS COMPLETED
?

NO

YES

RETURN

# Fig.32

| CODE DATA | INTERMEDIATE DATA | CORRESPONDING DOT COUNT | | |
|---|---|---|---|---|
| | | LARGE | MEDIUM | SMALL |
| 0 | 0000000000000000 | 0 | 0 | 0 |
| 1 | 0000000000000001 | 0 | 0 | 1 |
| 2 | 0000000000000101 | 0 | 0 | 2 |
| 3 | 0000000000010101 | 0 | 0 | 3 |
| 160 | 1010111111111111 | 6 | 2 | 0 |
| 161 | 0011111111111111 | 7 | 0 | 0 |
| 162 | 0111111111111111 | 7 | 0 | 1 |
| 163 | 1011111111111111 | 7 | 1 | 0 |
| 164 | 1111111111111111 | 8 | 0 | 0 |

# Fig.33

(a)

(1) (2) (3) (4) (5) (6) (7) (8)

| 0 | 0 | 0 | 0 | 0 | 1 | 0 | 1 | 0 | 1 | 1 | 0 | 1 | 0 | 1 | 1 |

FORM
NO DOT

FORM
SMALL DOT

FORM
MEDIUM
DOT

FORM
LARGE DOT

(b)

| 0 | 0 | 0 | 0 | 0 | 1 | 0 | 1 | 0 | 1 | 1 | 0 | 1 | 0 | 1 | 1 |

(c)

| | | 0 | 0 | 0 | 0 | 0 | 1 | 0 | 1 | 0 | 1 | 1 | 0 |

# Fig.34

| | | MULTIVALUE QUANTIZATION RESULT VALUE | | | | | |
|---|---|---|---|---|---|---|---|
| | | 0 | 1 | 2 | 3 | 4 | 5 |
| CLASSIFICATION NUMBER | 1 | DD(1,0) | DD(1,1) | DD(1,2) | DD(1,3) | DD(1,4) | DD(1,5 |
| | 2 | DD(2,0) | DD(2,1) | DD(2,2) | DD(2,3) | DD(2,4) | D |
| | 3 | DD(3,0) | DD(3,1) | DD(3,2) | DD(3,3) | DD(3,4) | |
| | 4 | DD(4,0) | DD(4,1) | DD(4,2) | DD(4,3) | DD(4,4) | |
| | 5 | DD(5,0) | DD(5,1) | DD(5,2) | DD(5,3) | | |
| | 6 | DD(6,0) | DD(6,1) | DD(6,2) | | | |
| | 7 | DD | | | | | |

# Fig.35(A)

$$\text{DD}(i, j) = \begin{array}{cccccccc} (1) & (2) & (3) & (4) & (5) & (6) & (7) & (8) \end{array}$$

| 1 | 1 | 0 | 0 | 1 | 0 | 0 | 0 | 0 | 0 | 0 | 1 | 0 | 0 | 1 | 0 |

# Fig.35(B)

# Fig.36

```
           ┌──────────────────────────┐
           │    DOT ON/OFF STATE      │
           │ DETERMINATION PROCESS    │
           └──────────────────────────┘
                        │
      ┌─────────────────┤
      │                 ▼
      │   ┌──────────────────────────────┐   ╱ S800
      │   │    SELECT PIXEL GROUP FOR     │
      │   │ DETERMINING PIXEL LOCATION    │
      │   └──────────────────────────────┘
      │                 │                    ╱ S802
      │   ┌──────────────────────────────┐
      │   │ ACQUIRE MULTIVALUE QUANTIZATION│
      │   │RESULT VALUE OF SELECTED PIXEL GROUP│
      │   └──────────────────────────────┘
      │                 │                    ╱ S804
      │   ┌──────────────────────────────┐
      │   │ REFERRING TO CONVERSION TABLE,│
      │   │ DETERMINE DOT ON/OFF STATE FOR│
      │   │   EACH PIXEL IN PIXEL GROUP   │
      │   └──────────────────────────────┘
      │                 │                    ╱ S806
      │              ◇ ALL PIXEL ◇
      │  NO          GROUPS COMPLETED
      └──────────────      ?
                     YES │
                         ▼
                ┌────────────────┐
                │     RETURN     │
                └────────────────┘
```

## INTERNATIONAL SEARCH REPORT

| International application No. |
|---|
| PCT/JP2005/008273 |

**A. CLASSIFICATION OF SUBJECT MATTER**
Int.Cl$^7$  H04N1/405, B41J2/52, G06T5/00, G09G3/20, 3/36

According to International Patent Classification (IPC) or to both national classification and IPC

**B. FIELDS SEARCHED**

Minimum documentation searched (classification system followed by classification symbols)
Int.Cl$^7$  H04N1/40-1/409, H04N1/46, H04N1/60

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2002-185789 A  (Seiko Epson Corp.),<br>28 June, 2002 (28.06.02),<br>Full text; all drawings<br>& US 2002-89685 A1      & EP 1195981 A2<br>& CN 1349346 A | 1,13-17<br>2-12 |
| Y | JP 8-116440 A  (Fuji Xerox Co., Ltd.),<br>07 May, 1996 (07.05.96),<br>Full text; all drawings<br>(Family: none) | 2-12 |
| A | JP 8-65511 A  (Murata Machinery Ltd.),<br>08 March, 1996 (08.03.96),<br>Full text; all drawings<br>(Family: none) | 1-17 |

☒ Further documents are listed in the continuation of Box C.  ☐ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 02 August, 2005 (02.08.05) | 16 August, 2005 (16.08.05) |

| Name and mailing address of the ISA/<br>  Japanese Patent Office | Authorized officer |
|---|---|
| Facsimile No. | Telephone No. |

Form PCT/ISA/210 (second sheet) (January 2004)

**INTERNATIONAL SEARCH REPORT**

| International application No. |
|---|
| PCT/JP2005/008273 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 62-176371 A  (Toshiba Corp.),<br>03 August, 1987 (03.08.87),<br>Full text; all drawings<br>(Family: none) | 1-17 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002185789 A

- JP 3292104 B